(19) Europäisches Patentamt
European Patent Office
Office européen des brevets

(11) EP 4 011 946 B1

(12) **FASCICULE DE BREVET EUROPEEN**

(45) Date de publication et mention de la délivrance du brevet:
**10.09.2025 Bulletin 2025/37**

(21) Numéro de dépôt: **21213526.3**

(22) Date de dépôt: **09.12.2021**

(51) Classification Internationale des Brevets (IPC):
***C08K 3/30*** (2006.01) ***C08K 3/32*** (2006.01)
***C08K 3/34*** (2006.01) ***H01M 6/18*** (2006.01)
***H01M 10/052*** (2010.01) ***H01M 10/0565*** (2010.01)
*C08G 63/64* (2006.01) *C08G 64/02* (2006.01)
*C08L 69/00* (2006.01) *C08G 64/30* (2006.01)

(52) Classification Coopérative des Brevets (CPC):
(C-Sets disponibles)
**C08K 3/30; C08K 3/32; C08K 3/34; H01M 10/0565;**
C08G 63/64; C08G 64/0208; C08G 64/0216;
C08G 64/305; C08K 2003/3045; C08K 2003/324;
H01M 2300/0082; Y02E 60/10 (Cont.)

(54) **PRÉPARATION D'UN ÉLECTROLYTE SOLIDE À BASE DE POLYCARBONATES**

HERSTELLUNG EINES FESTEN ELEKTROLYTEN AUF DER BASIS VON POLYCARBONATEN

PREPARATION OF A SOLID ELECTROLYTE MADE OF POLYCARBONATES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2020 FR 2012955**

(43) Date de publication de la demande:
**15.06.2022 Bulletin 2022/24**

(73) Titulaires:
- **Commissariat à l'Energie Atomique et aux Energies Alternatives**
  **75015 Paris (FR)**
- **SAFT**
  **92300 Levallois-Perret (FR)**

(72) Inventeurs:
- **NGUYEN, Huu-Dat**
  **38054 Grenoble cedex 09 (FR)**
- **PICARD, Lionel**
  **38054 Grenoble cedex 09 (FR)**

(74) Mandataire: **Ipsilon**
**11 rue Saint-Georges**
**75009 Paris (FR)**

(56) Documents cités:
**WO-A1-02/13298 WO-A1-2018/158545**

- **MINDEMARK JONAS ET AL: "Copolymers of trimethylene carbonate and [epsilon]-caprolactone as electrolytes for lithium-ion batteries", POLYMER, vol. 63, 1 April 2015 (2015-04-01), GB, pages 91 - 98, XP055838315, ISSN: 0032-3861, DOI: 10.1016/j.polymer.2015.02.052**
- **BING SUN ET AL: "Polycarbonate-based solid polymer electrolytes for Li-ion batteries", SOLID STATE IONICS, vol. 262, 1 September 2014 (2014-09-01), NL, pages 738 - 742, XP055544072, ISSN: 0167-2738, DOI: 10.1016/j.ssi.2013.08.014**
- **CAMPOS JOÃO M. ET AL: "A New Insight Into the Mechanism of the Ring-Opening Polymerization of Trimethylene Carbonate Catalyzed by Methanesulfonic Acid", MACROMOLECULAR CHEMISTRY AND PHYSICS, vol. 214, no. 1, 11 January 2013 (2013-01-11), DE, pages 85 - 93, XP055838309, ISSN: 1022-1352, DOI: 10.1002/macp.201200433**
- **CAMPOS JOÃO M ET AL: "Copolymerisation of [epsilon]-caprolactone and trimethylene carbonate catalysed by methanesulfonic", EUROPEAN POLYMER JOURNAL, PERGAMON PRESS LTD OXFORD, GB, vol. 49, no. 12, 25 September 2013 (2013-09-25), pages 4025 - 4034, XP028780416, ISSN: 0014-3057, DOI: 10.1016/J.EURPOLYMJ.2013.09.008**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

- **ALINE COUFFIN ET AL: "Mild and Efficient Preparation of Block and Gradient Copolymers by Methanesulfonic Acid Catalyzed Ring-Opening Polymerization of Caprolactone and Trimethylene Carbonate", MACROMOLECULES, vol. 46, no. 11, 11 June 2013 (2013-06-11), US, pages 4354 - 4360, XP055288602, ISSN: 0024-9297, DOI: 10.1021/ma400916k**


(52) Classification Coopérative des Brevets (CPC): (Cont.)

C-Sets
**C08K 3/30, C08L 69/00;**
**C08K 3/30, C08L 69/005;**
**C08K 3/32, C08L 69/00;**
**C08K 3/32, C08L 69/005;**
**C08K 3/34, C08L 69/00;**
**C08K 3/34, C08L 69/005**

## Description

### Domaine technique

La présente invention se rapporte à une nouvelle méthode de préparation d'électrolytes solides, utiles pour former une membrane électrolytique solide dans des dispositifs électrochimiques, par exemple des batteries au lithium, et présentant des performances améliorées. Les électrolytes selon l'invention sont à base de polycarbonates aliphatiques, en particulier à base de poly(triméthylène carbonate) (PTMC) ou de leurs copolymères avec l'ε-caprolactone (PTMC-PCL), synthétisés par (co)polymérisation par ouverture de cycle (ROP), catalysée par l'acide méthane sulfonique (MSA) et initiée, ou non, par un composé présentant au moins une fonction hydroxyle (-OH), par exemple par un alcool.

Ces électrolytes solides, notamment de type électrolyte polymérique solide (SPE) ou électrolyte solide hybride (HSE), trouvent des applications particulièrement avantageuses dans différents systèmes ou dispositifs électrochimiques, notamment dans des batteries rechargeables, par exemple des batteries au lithium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative. D'autres paramètres interviennent également dans le choix de l'électrolyte mis en œuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

Les batteries au lithium, mettant en œuvre des électrolytes à l'état solide (dits encore « SSE » pour l'acronyme anglo-saxon « Solid-State Electrolyte ») sont considérées comme la prochaine génération des dispositifs de stockage d'énergie, permettant d'atteindre des densités d'énergie plus élevées et une sécurité accrue du fait de l'absence de solvant. Les SSEs peuvent être classés en trois catégories : les électrolytes solides inorganiques (dits encore « ISEs » pour « Inorganic Solid Electrolytes »), les électrolytes solides polymériques (dits encore « SPEs » pour « Solid Polymer Electrolytes ») et les électrolytes solides hybrides (dits encore « HSEs » pour « Hybrid Solid Electrolytes »). Une attention particulière est portée aux SPEs et aux HSEs en raison de la flexibilité élevée de ces électrolytes, qui autorise leur mise en œuvre pour l'élaboration de batteries d'épaisseur réduite et présentant une plus grande flexibilité.

Les SPEs et HSEs les plus répandus, notamment pour des dispositifs électrochimiques au lithium, sont à base de polyéthers, et plus particulièrement de poly(oxyéthylène) (POE) et leurs dérivés, en raison de leur faible température de transition vitreuse (Tg), de l'ordre de - 60°C, comparativement à d'autres polymères, et de leur aptitude à complexer les cations $Li^+$. Toutefois, ces électrolytes présentent des performances limitées en matière de nombre de transport des ions ($t_+$) et de conductivité ionique liées au mécanisme de complexation des ions. Ainsi, pour un électrolyte solide polymérique à base de POE, par exemple, le nombre de transport ionique $t_+$ est généralement de l'ordre de 0,1 à 0,3. Par ailleurs, le POE est largement cristallin (la cristallinité du POE pur est de l'ordre de 75-80 % à température ambiante), ce qui conduit à une perte de conductivité ionique de l'électrolyte solide à base de POE en dessous de sa température de fusion (environ 60-65°C). La plupart des SPE à base de POE sont également associés à des diagrammes de phase complexes, avec plusieurs phases présentes dans de larges intervalles de température, ce qui rend le comportement de conductivité imprévisible. La stabilité mécanique du POE est également insuffisante aux températures élevées (supérieures à 60 °C) où il conduit bien les ions. Qui plus est, le POE présente une faible fenêtre de stabilité électrochimique (< 3,9 V vs. $Li/Li^+$), ce qui rend ce type de SPEs adapté uniquement pour leur mise en œuvre avec des cathodes à bas potentiel, comme par exemple de type $LiFePO_4$ (LFP).

De fait, de nombreux polymères alternatifs ont été développés ces dernières années, comme par exemple des polycarbonates, polyesters, poly(arylène éther sulfone)s, polynitriles, polyalcools et polyamines, etc. Parmi eux, les polycarbonates aliphatiques, en particulier le poly(triméthylène carbonate) (PTMC) et ses copolymères, sont apparus comme des matériaux hôtes alternatifs au POE, particulièrement intéressants pour former des électrolytes polymériques

solides, en raison de leur structure fortement amorphe, de la flexibilité de leurs segments de chaîne, de leur constante diélectrique élevée, de leur faible toxicité et de leurs bonnes propriétés mécaniques. Il a ainsi été montré que le PTMC, et ses copolymères avec la ε-caprolactone (CL), permettent d'obtenir des performances améliorées, comparativement au POE, en termes de conductivité ionique du matériau électrolyte solide à température ambiante, de sa large fenêtre de stabilité électrochimique (jusqu'à 5,0 V vs. $Li/Li^+$), du nombre de transport ionique ($t_+$>0,5) ou encore de sa stabilité thermique, ce qui rend ces matériaux polymériques particulièrement prometteurs pour former la nouvelle génération de SPEs.

Actuellement, la plupart des polycarbonates aliphatiques, proposés pour des applications comme électrolytes polymériques solides, par exemple dans des batteries rechargeables au lithium, sont obtenus par deux voies de synthèses différentes, d'une part, par copolymérisation entre le $CO_2$ et des époxydes et, d'autre part, par polymérisation par ouverture de cycle de carbonates cycliques catalysée par l'octanoate stanneux ($Sn(Oct)_2$). Pour ce qui est de la première voie de synthèse, Tominaga *et al.* [1] décrit ainsi pour la première fois la synthèse de poly(éthylène carbonate) (PEC) *via* la copolymérisation de $CO_2$ et de monomères époxy mettant en œuvre du glutarate de zinc comme catalyseur. Quatre types de PEC présentant des groupes latéraux phényle, n-butyle, t-butyle ou méthoxyéthyle sont synthétisés et mis en œuvre pour former des membranes d'électrolyte polymérique solide comprenant 10% molaire de bis(trifluoroéthylsulfonylimide) de lithium (LiTFSI). Les essais de conductivité montrent que l'électrolyte à base du PEC présentant des groupes latéraux méthoxyéthyle présente la conductivité la plus élevée, de l'ordre de $10^{-6}$ $S.cm^{-1}$ à température ambiante.

Malheureusement, cette voie de synthèse ne permet pas un contrôle satisfaisant des polymères formés en raison des différentes réactions secondaires pouvant intervenir pendant leur synthèse, telle que la formation de liaisons éther due à l'ouverture de cycle consécutive des époxydes ou encore la production de carbonates cycliques par une réaction compétitive dite de « transfert de chaine » (ou « backbiting » en terminologie anglo-saxonne) [2]. Ainsi, cette voie de synthèse a trouvé davantage d'intérêt pour des applications dans le domaine de la chimie verte et des biomatériaux que dans celui des batteries rechargeables pour lesquelles la fenêtre de stabilité électrochimique des électrolytes polymériques est très sensible aux défauts de la structure chimique du polymère. D'ailleurs, dans la publication [3], Kimura *et al.* rapportent que les électrolytes solides hybrides à base de poly(éthylène carbonate), LiTFSI et d'un liquide ionique à base de pyrrolidinium, permettent d'atteindre une stabilité anodique uniquement jusqu'à 4,3 V *versus* $Li^+/Li$. Par ailleurs, les balayages continus cathodiques permettent d'identifier peu de pics caractéristiques de l'insertion/désinsertion des ions $Li^+$ et montrent une faible stabilité en réduction vis-à-vis d'une anode en lithium. Concernant la deuxième voie de synthèse, Brandell *et al.* ([4]) décrivent la synthèse de poly(triméthylène carbonate) de haut poids moléculaire (368000 $g.mol^{-1}$) par polymérisation en masse, par ouverture de cycle catalysée par de l'octanoate stanneux ($Sn(Oct)_2$), pour former des électrolytes polymériques solides dans des batteries au lithium. Le polymère obtenu est mélangé avec du LiTFSI en solution et mis en forme pour obtenir des films SPE flexibles. Les systèmes les plus conducteurs sont atteints pour des ratios molaires des groupes carbonyles des unités monomères par rapport au lithium $[CO]/[Li^+]$ de 13 et 8, avec une stabilité électrochimique jusqu'à 5,0 V *versus* $Li/Li^+$ plus élevée que celle obtenue avec les POE, mais une conductivité ionique d'environ $10^{-7}$ $S.cm^{-1}$ à 60°C, ce qui est loin d'être satisfaisant pour une application comme SPE. En mettant en œuvre la même voie de synthèse, Mindemark *et al.* [5] décrivent la synthèse de copolymères aléatoires de triméthylène carbonate (TMC) et d'ε-caprolactone (CL), de masse moléculaire allant de 457 000 à 508 000 $g.mol^{-1}$, pour une application comme SPE. Les membranes électrolytiques, formées à partir de ces copolymères en combinaison avec un sel LiTFSI, présentent une diminution de la température de transition vitreuse Tg et une augmentation de la conductivité ionique avec l'augmentation de la teneur en CL. L'électrolyte, présentant les meilleures performances, est obtenu pour un ratio TMC :CL de 60 :40 et 28 % en poids de LiTFSI et permet d'atteindre une Tg de -26°C avec une conductivité de $1,6.10^{-5}$ $S.cm^{-1}$ à 60°C ($7,9.10^{-7}$ $S.cm^{-1}$ à 25°C) et une large fenêtre de stabilité électrochimique. L'électrolyte de composition optimisée précitée est testé en demi-cellule $LiFePO_4$ tout solide, et présente une capacité et une efficacité coulombique élevées pour des vitesses de charge allant jusqu'à C/5 inclus. Dans les premiers cycles, l'électrolyte à base dudit copolymère montre une performance améliorée comparativement aux électrolytes préparés à partir de l'homopolymère PTMC, indiquant ainsi un meilleur contact interfacial pour l'électrolyte intégrant du CL comme comonomère.

Toutefois, la voie de synthèse par polymérisation par ouverture de cycle catalysée par du $Sn(Oct)_2$, comme proposé par Brandell *et al.* et Mindemark *et al.,* requiert des temps de réaction longs (au moins 72 heures) pour des températures élevées (≥130 °C), ce qui ne permet pas d'envisager leur transposition à l'échelle industrielle, en raison d'une consommation trop élevée d'énergie. Qui plus est, les conditions sévères de synthèse à hautes températures ne permettent pas un contrôle de la polymérisation et de la polydispersité des polycarbonates obtenus. Elles sont également susceptibles d'induire des défauts dans la structure chimique des polymères obtenus. Enfin, le catalyseur mis en œuvre, $Sn(Oct)_2$, ne peut être totalement éliminé du produit final du fait de sa solubilité similaire à celle du polymère synthétisé dans de nombreux solvants organiques. Pour des nombreuses applications de ces polymères, par exemple comme biomatériaux, la présence résiduelle du catalyseur au sein du matériau polymérique formé ne pose pas de problème. Toutefois, pour des applications liées à des processus électrochimiques, comme dans les batteries rechargeables au lithium, la présence de catalyseur, et en particulier de cations métalliques tels que $Sn^{2+}$, $Zn^{2+}$, etc., est susceptible d'avoir des effets néfastes sur les performances et la durabilité des batteries, puisque ces cations peuvent également être

réduits/oxydés au cours des processus de charge/décharge.

Par conséquent, des études ont été menées en vue de développer des voies de synthèse alternatives pour obtenir des polycarbonates aliphatiques appropriés pour leur mise en œuvre pour des batteries rechargeables. Par exemple, Mecerreyes ***et al.*** [6] proposent la synthèse de polycarbonates aliphatiques, présentant des poids moléculaires compris entre 8 000 et 43 000 $g.mol^{-1}$, par polycondensation du carbonate de diméthyle et de diols aliphatiques, catalysée par la 4-diméthylaminopyridine (DMAP). L'ensemble des polycarbonates aliphatiques obtenus sont semi-cristallins avec des températures de fusion comprises entre 45 et 63 °C et des températures de transition vitreuse d'environ -40°C. Ces polycarbonates ont été testés, en combinaison avec le sel LiTFSI, pour leur efficacité comme matrice hôte pour former des SPEs. La conductivité ionique la plus élevée de $1.10^{-4}$ $S.cm^{-1}$ à température ambiante est atteinte pour un poly(dodécaméthylène carbonate) mis en œuvre en combinaison avec 80 % massique de LiTFSI. Toutefois, ces polycarbonates aliphatiques présentent une fenêtre de stabilité électrochimique allant jusqu'à 4 V seulement et, par conséquent guère meilleure que celle obtenue avec les POE. Ceci pourrait être lié à la voie de synthèse de ces polycarbonates, conduite à des températures très élevées (180°C) et à pression élevée, et susceptible d'induire davantage de défauts dans la structure chimique des polymères. Dans cette étude, la diminution de la masse molaire augmente fortement la conductivité ionique en augmentant la mobilité des chaînes de polymère, mais augmente également le taux de fonction hydroxyle au bout de chaîne qui diminue aussi la stabilité électrochimique des électrolytes.

Bing Sun et al divulgue dans "Polycarbonate-based solid polymer electrolytes for Li-ion batteries" ( Solid State Ionics, vol. 262, 1 Septembre 2014 (2014-09-01), pages 738-742) un procédé pour préparer un électrolyte solide en utilisant un poly(triméthylène carbonate) (PTMC) synthétisé par polymérisation par ouverture de cycle du triméthylène carbonate en utilisant comme catalyseur le $Sn(Oct)_2$, sans amorceur et sans étape de purification du polymère. Pour obtenir l'électrolyte solide, le poly(triméthylène carbonate) a été mélangé en solution d'acétonitrile avec le sel de lithium (LiTFSI) et coulé dans une moule de PTFE et puis le solvant a été enlevée par évaporation sous vide.

Ainsi, malgré les études menées en vue de proposer des voies de synthèses alternatives, la polymérisation par ouverture de cycle catalysée par $Sn(Oct)_2$ demeure, jusqu'à présent, la voie de synthèse privilégiée pour obtenir des polycarbonates aliphatiques destinés à former des électrolytes solides dans des batteries rechargeables, notamment dans des batteries au lithium.

WO 2018/158545 A1 divulgue un procédé de préparation d'un poly(ε -caprolactone-co-triméthylène carbonate) en utilisant l'acide méthane sulfonique comme catalyseur et une composition d'électrolyte polymère destinée à être utilisée dans une batterie fonctionnant à une température inférieure à 50°C, ladite composition comprenant le poly(ε -caprolactone-co-triméthylène carbonate) et un ou plusieurs sel(s) de lithium.

Il demeure ainsi un besoin de disposer d'une nouvelle voie de synthèse de polycarbonates aliphatiques, qui permette d'accéder à des électrolytes solides présentant des performances améliorées.

La présente invention vise précisément à répondre à ce besoin.

**Résumé de l'invention**

La présente invention propose ainsi une nouvelle méthode de préparation d'électrolytes solides à partir de la synthèse de polycarbonates aliphatiques, en particulier de type poly(triméthylène carbonate) ou leurs copolymères avec l'ε-caprolactone, permettant de s'affranchir des inconvénients précités.

Plus particulièrement, elle concerne, selon un premier de ses aspects, un procédé de préparation d'un électrolyte solide, destiné à un système électrochimique, en particulier à une batterie rechargeable, comprenant au moins les étapes suivantes :

(i) synthèse d'au moins un (co)polymère par (co)polymérisation par ouverture de cycle (ROP) d'au moins un carbonate cyclique de cinq à huit chaînons et, éventuellement, d'au moins une lactone de cinq à huit chaînons, ladite réaction de (co)polymérisation étant catalysée par l'acide méthane sulfonique et initiée, ou non, par au moins un composé comportant une ou plusieurs fonction(s) hydroxyle(s) ;
(ii) éventuellement, protection des fonctions hydroxyles en bout de chaîne du ou desdits (co)polymères ;
(iii) purification, préalablement ou ultérieurement à l'étape (ii) de protection des fonctions hydroxyles, du ou desdits (co)polymères, en particulier par précipitation dans un ou plusieurs solvants polaires ;
(iv) mélange, en présence ou non d'un milieu solvant, du ou desdits (co)polymères purifiés, obtenus à l'issue de l'étape (ii) ou (iii), avec au moins un sel de métal alcalin ou alcalino-terreux, en particulier un sel de lithium et, éventuellement, au moins une charge inorganique conductrice du ou des cations alcalin ou alcalino-terreux, en particulier une charge inorganique conductrice des ions lithium ; et
(v) formation, en particulier en surface d'un substrat, d'un électrolyte solide à partir dudit mélange.

On désignera plus simplement dans la suite du texte, sous l'appellation « polycarbonate aliphatique » ou encore « polycarbonate », un (co)polymère obtenu par (co)polymérisation dans les conditions de synthèse selon l'invention d'au

moins un carbonate cyclique de cinq à huit chaînons et, éventuellement, d'au moins une lactone.

De manière avantageuse, le ou lesdits (co)polymères sont des poly(triméthylène carbonate) (notés PTMC dans la suite du texte) ou des copolymères poly(triméthylène carbonate)-poly(ε-caprolactone) (notés PTMC-PCL dans la suite du texte), obtenus par polymérisation par ouverture de cycle du triméthylène carbonate (TMC), éventuellement par copolymérisation avec l'ε-caprolactone (CL).

Par « électrolyte solide », on entend un électrolyte excluant la présence d'un composant sous forme liquide, et pouvant faire office à la fois de séparateur et de conducteur ionique dans un système électrochimique. L'électrolyte solide selon l'invention se présente plus particulièrement sous la forme d'un film ou membrane électrolytique solide dans un système électrochimique.

Comme détaillé dans la suite du texte, les électrolytes solides préparés selon l'invention peuvent être de type électrolyte polymérique solide (SPE) ou électrolyte solide hybride (HSE). Les films ou membranes d'électrolyte solide préparés selon l'invention présentent avantageusement une bonne flexibilité.

Comme détaillé dans la suite du texte, selon un mode de réalisation particulier, la (co)polymérisation en étape (i) du procédé de l'invention est conduite en présence d'un composé, en particulier d'une molécule organique, dit « initiateur » (ou « amorceur »), présentant une ou plusieurs fonctions hydroxyles. L'initiateur peut être de l'eau, par exemple l'eau résiduelle apportée par les monomères, et/ou un alcool, en particulier un alcool portant une à quatre fonction(s) hydroxyle. Alternativement, la (co)polymérisation en étape (i) du procédé de l'invention peut être conduite en l'absence d'initiateur.

Selon un mode de réalisation particulier, le procédé de l'invention met en œuvre une étape (ii) au cours de laquelle les fonctions hydroxyles en bout de chaine des polycarbonates selon l'invention sont protégées. La protection des fonctions hydroxyles des polycarbonates selon l'invention peut être plus particulièrement réalisée par réaction de la ou desdites fonctions hydroxyles en bout de chaine des polycarbonates, avec au moins un composé, dit agent de protection, choisi parmi les chlorures d'acyle, les anhydrides d'acide et les isocyanates. Elle peut être opérée en ajoutant directement le ou lesdits agents de protection dans le milieu réactionnel obtenu à l'issue de la (co)polymérisation en étape (i) avant purification du ou desdits (co)polymères, ou ultérieurement à l'étape (iii) de purification du ou desdits (co)polymères (voie dite de « post-modification »).

Certes, l'acide méthane sulfonique (encore appelé acide méthylsulfonique et noté « MSA » pour « methanesulfonic acid » en terminologie anglo-saxonne) a déjà été proposé comme catalyseur organique pour conduire une polymérisation par ouverture de cycle. Ainsi, Delcroix *et al.* [7] présentent une comparaison de la mise en œuvre de l'acide méthane sulfonique et de l'acide trifluorométhane sulfonique (HOTf) pour conduire la polymérisation par ouverture de cycle du triméthylène carbonate, mettant en œuvre comme initiateur de polymérisation de l'eau ou du n-pentanol. Malgré sa faible acidité, l'acide méthane sulfonique présente une activité catalytique similaire à son analogue l'acide trifluorométhane sulfonique. En revanche, à la différence du HOTf, le MSA n'induit pas de réactions indésirables de décarboxylation et permet avantageusement un impact réduit en termes de toxicité, une meilleure purification du polymère due à la solubilité élevée du MSA dans le méthanol et une réduction des coûts, le MSA étant moins cher que les autres catalyseurs organiques alternatifs proposés dans la littérature ([7], [8]). Également, la polymérisation par ouverture de cycle catalysée par le MSA peut être effectuée à température ambiante, permettant ainsi de réduire la consommation d'énergie et les coûts. Ces travaux, relatifs à la mise en œuvre du MSA comme catalyseur pour la polymérisation par ouverture de cycle, portent sur la mise en œuvre des polymères obtenus pour des applications comme biomatériaux, par exemple dans les domaines de l'ingénierie tissulaire, de l'administration de médicaments, etc. du fait de la bonne biocompatibilité et biodégradabilité de ces matériaux polymériques.

A la connaissance des inventeurs, il n'a jamais été proposé de tirer profit de cette voie de synthèse pour la préparation de polycarbonates aliphatiques et leurs copolymères pour une mise en œuvre pour former des électrolytes solides, en particulier dans des batteries rechargeables au lithium.

Comme illustré dans les exemples qui suivent, les inventeurs ont montré que les polycarbonates aliphatiques, en particulier de type PTMC et PTMC-PCL, obtenus par synthèse par (co)polymérisation par ouverture de cycle, catalysée par l'acide méthane sulfonique (noté MSA dans la suite du texte), initiée ou non par un composé présentant une ou plusieurs fonctions hydroxyle, tel qu'un alcool ; et dont les fonctions hydroxyles en bout de chaine sont optionnellement protégées, permettent de conduire à des électrolytes solides présentant des performances améliorées, en particulier en termes de conductivité ionique et de stabilité électrochimique améliorées, comparativement à des électrolytes préparés à partir de polycarbonates obtenus par d'autres voies de synthèse telles que décrites précédemment. De manière avantageuse, la synthèse conduite dans les conditions spécifiques selon l'invention permet d'accéder à des polycarbonates, en particulier à des PTMC et PTMC-PCL, présentant une structure chimique contrôlée. Comme confirmé par analyse RMN $^1H$, les polycarbonates synthétisés selon l'invention présentent ainsi avantageusement peu de défauts dans leur structure chimique.

Avantageusement, le procédé de synthèse selon l'invention, en particulier conduit en présence d'un initiateur, permet d'accéder à des polycarbonates de masse et de polydispersité contrôlées.

En particulier, les polycarbonates synthétisés selon l'invention peuvent présenter une masse moléculaire moyenne en nombre, Mn, inférieure ou égale à 200 000 $g.mol^{-1}$, en particulier comprise entre 5 000 et 100 000

$g.mol^{-1}$ et plus particulièrement entre 5 000 et 50 000 $g.mol^{-1}$.

Ils peuvent présenter avantageusement un faible indice de polydispersité, en particulier inférieur ou égal à 1,50, notamment inférieur ou égal à 1,30 et plus particulièrement inférieur ou égal à 1,20.

Par ailleurs, la synthèse des polycarbonates peut être opérée à température ambiante et s'avère ainsi particulièrement avantageuse en termes de consommation d'énergie. Egalement, les polycarbonates peuvent être obtenus avantageusement pour des faibles durées de polymérisation, en particulier pour une durée de polymérisation inférieure à 3 jours, en particulier inférieure ou égale à 72 heures, notamment inférieure ou égale à 48 heures.

Le procédé selon l'invention peut ainsi être aisément transposé pour une production à grande échelle.

En outre, la synthèse conduite dans les conditions selon l'invention permet avantageusement d'accéder à des polycarbonates présentant une pureté élevée. De fait, à la différence notamment de l'octanoate stanneux ($Sn(Oct)_2$), le catalyseur MSA peut être aisément éliminé du milieu réactionnel, notamment du fait de sa solubilité très élevée dans le méthanol, solvant pouvant être utilisé pour la précipitation des polycarbonates synthétisés. En particulier, la pureté des polycarbonates obtenus est avantageusement supérieure ou égale à 90 %, en particulier supérieure ou égale à 95 %, voire supérieure ou égale à 98 %, voire même supérieure ou égale à 99 %. La pureté peut être vérifiée par analyse RMN $^1H$ du produit obtenu.

La mise en œuvre des polycarbonates synthétisés selon l'invention pour former des électrolytes solides, s'avère avantageuse à plusieurs titres.

Comme illustré dans les exemples qui suivent, les électrolytes solides obtenus à partir des polycarbonates, en particulier de type PTMC ou PTMC-PCL, synthétisés selon l'invention, conduisent à une batterie au lithium présentant d'excellentes performances, en particulier une conductivité ionique élevée, par exemple supérieure ou égale à $10^{-5}$ $S.cm^{-1}$ à 60°C, en particulier supérieure ou égale à $10^{-6}$ $S.cm^{-1}$ pour un PTMC et supérieure ou égale à $10^{-5}$ $S.cm^{-1}$ pour un PTMC-PCL à 60°C ; et un nombre de transport des ions lithium, noté $t_+$, supérieur ou égal à 0,50 à 60°C, en particulier supérieur ou égal à 0,70 pour PTMC et supérieur ou égal à 0,60 pour PTMC-PCL à 60°C.

Les électrolytes solides préparés selon l'invention à partir des polycarbonates synthétisés selon l'invention présentent également une bonne tenue mécanique, une grande stabilité thermique (qui assure la sécurité des dispositifs de stockage d'énergie les comprenant), et une stabilité en potentiel améliorée.

En particulier, ils présentent une large fenêtre de stabilité électrochimique, en particulier jusqu'à 4,50 V *versus* $Li/Li^+$. Ainsi, un électrolyte solide à base de polycarbonates obtenus selon l'invention, en particulier à base de PTMC ou PTMC-PCL, peut avantageusement être mis en œuvre dans des batteries de densité énergétique élevée, en combinaison avec des électrodes positives dites à « haut » potentiel, c'est-à-dire fonctionnant à une différence de potentiel supérieure à 4 V *versus* $Li/Li^+$, en particulier supérieure ou égale à 4,2 V versus $Li/Li^+$, telles que des batteries Li° vs. $Li\text{-}Ni_{1/3}Mn_{1/3}Co_{1/3}O_2$, sans impacter sur la stabilité thermique et électrochimique de l'électrolyte.

Un système électrochimique, en particulier une batterie au lithium, comprenant un électrolyte solide selon l'invention, peut également fonctionner sur une large plage de températures, de préférence entre -20°C et 90°C, en particulier entre -10°C et 80°C.

L'invention concerne ainsi, selon un autre de ses aspects, l'utilisation d'au moins un (co)polymère, obtenu par ROP d'au moins un carbonate cyclique de cinq à huit chaînons et, éventuellement, d'au moins une lactone de cinq à huit chaînons, catalysée par l'acide méthane sulfonique et initiée, ou non, par au moins un composé comportant une ou plusieurs fonction(s) hydroxyle ;

et dont les fonctions hydroxyles en bout de chaîne sont éventuellement protégées ;
pour former, en combinaison avec au moins un sel de métal alcalin ou alcalino-terreux, un électrolyte solide destiné à un système électrochimique, en particulier à une batterie rechargeable, notamment une batterie au lithium.

Le (co)polymère peut notamment être obtenu dans les conditions décrites pour la synthèse du (co)polymère dans le cadre du procédé de l'invention.

De préférence, ledit (co)polymère présente une masse moléculaire moyenne en nombre allant de 5 000 à 50 000 $g.mol^{-1}$ et, en particulier, un indice de polydispersité (PDI) inférieur ou égal à 1,30, notamment inférieur ou égal à 1,20.

L'invention concerne encore un électrolyte solide, en particulier tel qu'obtenu selon le procédé de l'invention, notamment de type électrolyte polymérique solide (SPE) ou électrolyte solide hybride (HSE), comprenant, voire étant formé de :

- au moins un (co)polymère obtenu par ROP d'au moins un carbonate cyclique de cinq à huit chaînons et, éventuellement, d'au moins une lactone de cinq à huit chaînons, catalysée par l'acide méthane sulfonique et initiée, ou non, par au moins un composé comportant une ou plusieurs fonction(s) hydroxyle ;
  et dont les fonctions hydroxyles en bout de chaîne sont éventuellement protégées ;
- au moins un sel de métal alcalin ou alcalino-terreux, en particulier un sel de lithium ; et
- éventuellement au moins une charge inorganique conductrice du ou des cations alcalins ou alcalino-terreux, en

particulier une charge inorganique conductrice des ions lithium.

Les électrolytes solides formés selon l'invention peuvent trouver des applications dans des systèmes électrochimiques variés, notamment dans des systèmes de stockage de l'énergie, en particulier dans des batteries rechargeables, notamment des batteries au lithium.

Ainsi, l'invention concerne encore l'utilisation d'un électrolyte solide selon l'invention, dans un système électrochimique, en particulier dans une batterie au lithium.

Elle concerne encore un système électrochimique, en particulier un dispositif de stockage de l'énergie, notamment une batterie rechargeable, en particulier une batterie au lithium, notamment une batterie lithium-ion ou lithium-métal, comprenant un électrolyte solide, en particulier un film d'électrolyte solide, tel que défini précédemment ou tel qu'obtenu selon le procédé de l'invention.

D'autres caractéristiques, variantes et avantages des électrolytes polymériques solides selon l'invention, et de leur préparation, ressortiront mieux à la lecture de la description, des exemples et figures qui vont suivre, donnés à titre illustratif et non limitatif de l'invention.

**Brève description des dessins**

[Fig 1] présente les spectres RMN $^1$H des polymères PTMC « non-protégés » de masse moléculaire moyenne Mn d'environ 10 000 g.mol$^{-1}$ initiés par le 3-phényl-1-propanol (PPA), synthétisés en exemple 1, à l'aide (a) du catalyseur MSA (P10PPA) et (b) à l'aide du catalyseur $Sn(Oct)_2$ (S10PPA) ;
[Fig 2] présente les spectres RMN $^1$H des polymères PTMC « non-protégés », synthétisés en exemple 1, à l'aide du catalyseur MSA (a) de masse moléculaire moyenne Mn d'environ 10 000 g.mol$^{-1}$ initiés par l'éthylène glycol (P10EG) et (b) sans l'initiateur alcool (PxMSA) ; [Fig 3] présente les spectres RMN $^1$H des polymères PTMC de masse moléculaire moyenne Mn d'environ 10 000 g.mol$^{-1}$, synthétisés en exemple 1, « protégés » à l'aide de l'agent de protection chlorure de benzoyle (BC) (a), et isocyanate de p-toluènesulfonyle (TSI) (b) ;
[Fig 4] présente les spectres RMN $^1$H des polymères PTMC synthétisés en exemple 1, à l'aide du catalyseur MSA et « protégés » à l'aide de l'isocyanate de p-toluènesulfonyle (TSI) (a) de masse moléculaire moyenne Mn d'environ 10 000 g.mol$^{-1}$ initiés par éthylène glycol (P10EG-TSI) et (b) sans l'initiateur alcool (PxMSA-TSI) ;
[Fig 5] présente les spectres RMN $^1$H des copolymères PTMC60-PCL40 (10 000 g.mol$^{-1}$) synthétisés en exemple 2 et initiés par le PPA (a) à l'aide du catalyseur MSA (G10PPA) et (b) à l'aide du catalyseur $Sn(Oct)_2$ (R10PPA) ;
[Fig 6] présente les spectres RMN $^1$H des copolymères PTMC60-PCL40 (10 000 g.mol$^{-1}$) synthétisés en exemple 2 à l'aide du catalyseur MSA et de l'initiateur PPA, et « protégés » par le chlorure de benzoyle (BC) (a), et le isocyanate de p-toluènesulfonyle (TSI) (b) ;
[Fig 7] présente les courbes de conductivité ionique en fonction de la température, obtenues pour les électrolytes polymériques solides à base de PTMC, synthétisés en exemple 1, à l'aide du catalyseur MSA (P10PPA-TFSI15) et $Sn(Oct)_2$ (S10PPA-TFSI15), préparés en exemple 3 ;
[Fig 8] présente les courbes de conductivité ionique en fonction de la température, obtenues pour les électrolytes polymériques solides P10PPA-TFSI15, P10PPA-FSI15 et P10PPA-TDI15, préparés en exemple 3 ;
[Fig 9] présente les courbes de conductivité ionique en fonction de la température, obtenues pour les électrolytes polymériques solides à base de P10PPA contenant différentes concentrations du sel LiTFSI, préparés en exemple 3 ;
[Fig 10] présente la conductivité ionique mesurée à 60 ° C des électrolytes à base de PTMC synthétisés à l'aide d'un catalyseur MSA en fonction de la concentration en LiTFSI, préparés en exemple 3 ;
[Fig 11] présente les courbes de conductivité ionique en fonction de la température, obtenues pour les électrolytes polymériques solides à base de copolymère PTMC60-PCL40, synthétisés en exemple 2, à l'aide du catalyseur MSA (G10PPA-TFSI15) et $Sn(Oct)_2$ (R10PPA-TFSI15), préparés en exemple 3 ;
[Fig 12] présente les courbes de voltampérométrie cyclique obtenues pour les électrolytes P10PPA-TFSI15 et S10PPA-TFSI15, comme décrit en exemple 3 ;
[Fig 13] présente les courbes de voltampérométrie cyclique (a) et PITT (b) des électrolytes P10PPA-TFSI15, P10PPA-BC-TFSI15, et P10PPA-TSI-TFSI15, comme décrit en exemple 3.

Dans la suite du texte, les expressions « compris entre ... et ... », « allant de ... à ... » et « variant de ... à ... » sont équivalentes et entendent signifier que les bornes sont incluses, sauf mention contraire.

**Description détaillée**

## SYNTHESE DU (CO)POLYMERE DE TYPE POLYCARBONATE

Comme indiqué précédemment, la préparation d'un électrolyte solide selon l'invention procède, dans un premier temps, à la synthèse d'un (co)polymère par (co)polymérisation par ouverture de cycle (dite encore « ROP » pour « Ring-Opening Polymerization » en terminologie anglosaxonne) d'au moins un carbonate cyclique de cinq à huit chaînons et, éventuellement, d'au moins une lactone de cinq à huit chaînons.

Par « copolymère », on entend un polymère dérivé d'au moins deux espèces différentes de monomères. Dans la suite du texte, en l'absence d'indications contraires, le terme « polymère » ou « polycarbonate » sera utilisé pour désigner, au sens large, aussi bien des homopolymères que des copolymères.

Les monomères carbonates cycliques peuvent être plus particulièrement de formule (I) suivante :

[Chem 1]

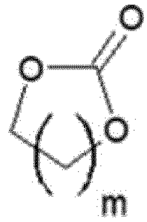

(I)

dans laquelle m est un entier compris entre 1 et 4, notamment entre 1 et 3, en particulier m vaut 1 ou 2 et plus particulièrement m vaut 2 ;

lesdits monomères étant éventuellement substitués, sur un ou plusieurs des atomes de carbone du cycle, par un ou plusieurs substituants, en particulier choisis parmi des groupements alkyles, en particulier en $C_1$ à $C_5$, linéaires ou ramifiés.

Ainsi, les monomères carbonates cycliques peuvent être de formule (I') suivante :

[Chem 2]

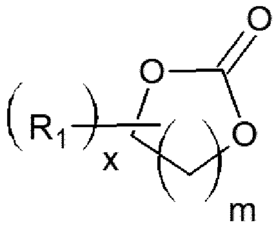

(I')

dans laquelle m est tel que défini précédemment ; x est un entier compris entre 0 et 2m+2 ; et $R_1$, porté(s) par un ou plusieurs atomes de carbone du cycle, représentent, indépendamment les uns des autres, des substituants, en particulier des groupements alkyles, en particulier en $C_1$ à $C_5$, linéaires ou ramifiés.

Selon un mode de réalisation particulier, le monomère carbonate cyclique est choisi parmi le triméthylène carbonate et ses dérivés. En particulier, le monomère carbonate cyclique est le triméthylène carbonate.

Selon une première variante de réalisation, le polycarbonate synthétisé selon l'invention est un (co)polymère obtenu par ROP d'un ou plusieurs monomères carbonate cyclique.

En particulier, il peut s'agir d'un poly(triméthylène carbonate), noté PTMC, obtenu par ROP du triméthylène carbonate (TMC).

Selon une autre variante de réalisation, le polymère synthétisé selon l'invention est un copolymère obtenu par ROP d'au moins un monomère carbonate cyclique, en particulier tel que défini précédemment, et d'au moins un monomère de type lactone.

De préférence, le ratio molaire entre le(s) monomère(s) carbonate cyclique et le(s) monomère(s) de type lactone est compris entre 90/10 et 10/90, notamment entre 80/20 et 20/80, en particulier compris entre 70/30 et 30/70 et plus particulièrement d'environ 60/40. Par lactone, on entend plus particulièrement des monomères répondant à la formule (II)

suivante :

[Chem 3]

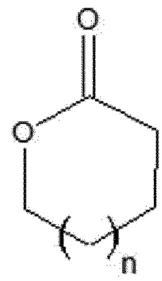

(II)

dans laquelle n vaut 0 ou est un entier allant de 1 à 3 ;
lesdits monomères étant éventuellement substitués, sur un ou plusieurs des atomes de carbone du cycle, par un ou plusieurs substituants, en particulier choisis parmi des groupements alkyles, en particulier en $C_1$ à $C_5$, linéaires ou ramifiés.

Ainsi, les monomères de type lactone peuvent être de formule (II') suivante :

[Chem 4]

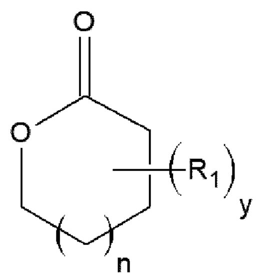

(II')

dans laquelle n est tel que défini précédemment ; y est un entier compris entre 0 et 2n+6 ; et $R_1$, porté(s) par un ou plusieurs atomes de carbone du cycle, représentent, indépendamment les uns des autres, des substituants, en particulier des groupements alkyles, en particulier en $C_1$ à $C_5$, linéaires ou ramifiés.

Selon un mode de réalisation particulier, le copolymère selon l'invention est formé à partir de l'ε-caprolactone (notée CL).

Les copolymères peuvent être plus particulièrement de type aléatoire ou à gradient.

A titre d'exemple, le copolymère selon l'invention peut être formé à partir du triméthylène carbonate (TMC) et de l'ε-caprolactone (CL). Autrement dit, il peut s'agir d'un copolymère poly(triméthylène carbonate)-poly(ε-caprolactone) (PTMC-PCL), en particulier présentant un rapport molaire entre les unités monomériques dérivées du TMC et les unités monomériques dérivés de la CL compris entre 90/10 et 10/90, notamment entre 80/20 et 20/80, en particulier entre 70/30 et 30/70 et plus particulièrement d'environ 60/40.

Selon un mode de réalisation particulier, les (co)polymères synthétisés et mis en œuvre selon l'invention sont choisis parmi les PTMC, les copolymères PTMC-PCL, en particulier tels que décrits précédemment, et leurs mélanges.

Préparation des (co)polymères

Comme indiqué précédemment, les polycarbonates mis en œuvre l'invention pour former des électrolytes solides sont préparés par (co)polymérisation par ouverture de cycle des monomères tels que décrits précédemment, en présence de l'acide méthane sulfonique (noté MSA pour « Methane Sulfonic Acid » dans la suite du texte) comme catalyseur.

Le ou lesdits monomère(s) et ledit catalyseur MSA peuvent être plus particulièrement mis en œuvre dans un rapport molaire monomère(s)/MSA compris entre 40/1 et 1000/1, en particulier entre 50/1 et 500/1.

La (co)polymérisation peut être conduite en présence d'un composé, en particulier d'une molécule organique, comportant une ou plusieurs fonctions hydroxyles, dit « initiateur » (ou « amorceur »). Alternativement, elle peut être conduite en l'absence d'initiateur.

Selon une première variante de réalisation, la synthèse du (co)polymère peut être opérée en présence d'un initiateur ou amorceur de la ROP.

Le composé initiateur de la ROP peut être de diverses natures, pour autant qu'il présente au moins une fonction hydroxyle permettant d'amorcer la réaction de polymérisation. Il peut être choisi en particulier parmi l'eau et/ou les alcools, en particulier les alcools présentant une à quatre fonctions hydroxyles et plus particulièrement une ou deux fonctions hydroxyles.

Selon un mode de réalisation particulier, l'initiateur de la ROP peut être de l'eau. Il peut s'agir par exemple de l'eau résiduelle apportée avec au moins l'un des monomères de type carbonate cyclique et/ou lactone mis en œuvre.

Selon un mode de réalisation particulièrement avantageux, l'initiateur est apporté en une quantité déterminée au mélange réactionnel initial.

Ledit initiateur ou amorceur de la ROP peut présenter une masse moléculaire moyenne en nombre allant de 90 à 1 000 $g.mol^{-1}$, en particulier de 90 à 500 $g.mol^{-1}$.

Il peut être plus particulièrement choisi parmi les alcools présentant une ou plusieurs fonctions hydroxyles, en particulier une à quatre fonctions hydroxyles, notamment une ou deux fonctions hydroxyles.

Selon un mode de réalisation particulier, l'initiateur est un monoalcool. Il peut s'agir plus particulièrement d'un composé ROH dans lequel le groupe R représente un groupement « non réactif ».

Par groupement « non réactif », on entend désigner un groupement non réactif dans les conditions de préparation et de mise en œuvre du polycarbonate selon l'invention. Plus particulièrement, le groupement R ne présente pas de fonction réactive vis-à-vis des monomères de type carbonate cyclique et lactone mis en œuvre, ni de fonction réactive vis-à-vis des métaux alcalins ou alcalino-terreux, notamment vis-à-vis du lithium métal, des sels de métaux alcalins ou alcalino-terreux, notamment vis-à-vis des sels de lithium.

Le groupement R peut être plus particulièrement :

- un groupe alkyle, linéaire ou ramifié, pouvant être substitué par des groupements mono- ou polycycliques ou mono- ou polyhétérocycliques, condensés ou non, saturés ou insaturés, aromatiques ou non ; ou
- un groupe mono- ou polycyclique ou mono- ou polyhétérocyclique, condensé ou non, saturé ou insaturé, aromatique ou non ;

le groupe alkyle et/ou le ou lesdits groupements mono- ou poly(hétéro)cycliques pouvant éventuellement être substitués par un ou plusieurs atomes de fluor.

Dans le cadre de l'invention, on entend par :

- « alkyle », un groupe aliphatique saturé, linéaire ou ramifié ; par exemple un groupe $C_{1-4}$-alkyle représente une chaîne carbonée de 1 à 4 atomes de carbone, linéaire ou ramifiée, plus particulièrement un méthyle, éthyle, propyle, isopropyle, butyle, isobutyle, tert-butyle *;*
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « hétérocycle », un groupe cyclique, de préférence à 4, 5 ou 6 chaînons, comprenant un ou plusieurs hétéroatomes, en particulier choisis parmi l'oxygène, le soufre et l'azote. Les groupements mono- ou poly(hétéro)cycliques selon l'invention peuvent être insaturés, partiellement saturés ou saturés. Un cycle aromatique peut être notamment le benzène.

En particulier, un groupement polycyclique selon l'invention est formé de deux à six cycles, les cycles comprenant, indépendamment les uns des autres, de 4 à 6 chaînons. Le groupement polycyclique peut inclure un ou plusieurs hétéroatomes. On parle alors de « groupement polyhétérocyclique ».

L'initiateur mis en œuvre pour la synthèse des polycarbonates par ROP selon l'invention peut être par exemple choisi parmi les molécules suivantes.

[Chem 5]

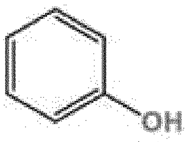 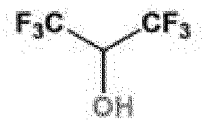 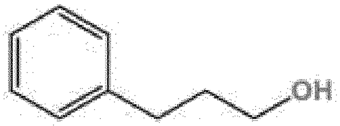

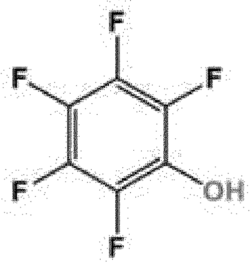 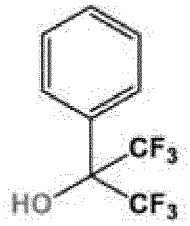 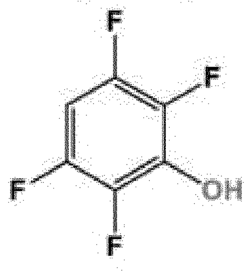

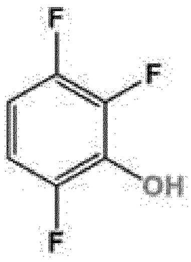 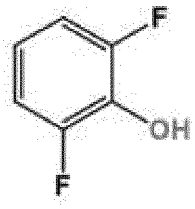 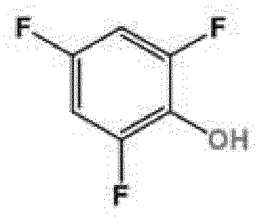

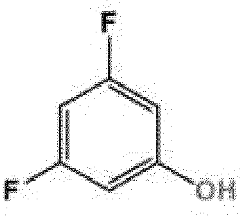 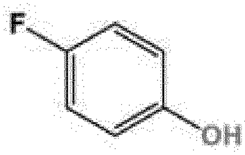 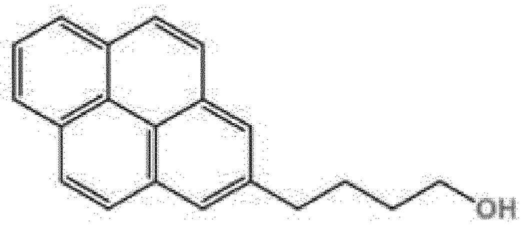

Selon un autre mode de réalisation particulier, l'initiateur est un composé présentant au moins deux fonctions hydroxyle, en particulier de deux à quatre fonctions hydroxyles, par exemple deux fonctions hydroxyles.

En particulier, il peut s'agir d'un composé de formule R'(-OH)$_x$, dans laquelle x représente un entier allant de 2 à 4 ; et R' représente un groupe non réactif divalent, trivalent ou tétravalent, en particulier un groupe alkylène, notamment en $C_1$ à $C_6$, en particulier en $C_1$ à $C_3$, linéaire ou ramifié, tel que l'éthylène glycol (également noté « EG ») ou le glycérol. L'initiateur peut encore être de type macroamorceur. Par « macroamorceur » au sens de l'invention, on entend un polymère comportant à au moins l'une de ses extrémités, une fonction hydroxyle capable d'amorcer la réaction de ROP selon l'invention. Il permet de conduire à la formation d'un copolymère à blocs. Ledit macroamorceur peut être par exemple un polydiméthylsiloxane, porteur d'une fonction terminale hydroxyle.

La nature de l'initiateur mis en œuvre pour amorcer la réaction de ROP selon l'invention n'est nullement limitée aux composés précités, et d'autres initiateurs peuvent être envisagés. De manière avantageuse, dans le cas d'un initiateur présentant plusieurs fonctions hydroxyles, les valeurs de pKa des différentes fonctions hydroxyles sont sensiblement identiques. Il permet ainsi d'accéder à des polycarbonates à structure ramifiée, ou dendrimères, à ramifications symétriques.

Selon un mode de réalisation particulier, l'initiateur est choisi parmi le 3-phényl-1-propanol (également noté « PPA ») et l'éthylène glycol.

Dans le cas de la mise en œuvre d'un initiateur, celui-ci va être intégré en bout de chaîne du (co)polymère synthétisé par ROP catalysée par le MSA.

La mise en œuvre d'un initiateur de la ROP, en particulier apporté en une quantité déterminée, dans le mélange réactionnel initial, permet avantageusement de contrôler la masse molaire et la polydispersité des polycarbonates synthétisés selon l'invention.

Selon un mode de réalisation particulier, le ou lesdits monomères et le ou lesdits initiateurs sont mis en œuvre dans un rapport molaire monomère(s)/initiateur(s) compris entre 40/1 et 1000/1, en particulier entre 50/1 et 500/1.

Selon un mode de réalisation particulier, le ratio molaire initiateur(s)/catalyseur MSA est compris entre 1/1 et 10/1, en particulier est d'environ 1/1.

Selon encore une autre variante de réalisation, la synthèse du (co)polymère par ROP catalysée par le MSA peut être opérée en l'absence d'initiateur, en particulier en l'absence d'eau et de composé alcool.

Dans ce cas, la polymérisation par ouverture de cycle des monomères peut être initiée par un des monomères de type carbonate cyclique, par exemple par le triméthylène carbonate, activé suivant un mécanisme dit de « active chain-end » (ACEM).

Comme évoqué précédemment, la réaction de ROP est avantageusement opérée à basse température, en particulier à une température inférieure ou égale à 40 °C, notamment comprise entre 20 et 40 °C et plus particulièrement à température ambiante. Par température ambiante, on entend une température de 25 $\pm$ 5°C.

La durée de polymérisation peut être ajustée pour obtenir une conversion élevée des monomères. En particulier, la durée de polymérisation est avantageusement courte ; elle peut être inférieure ou égale à 72 heures, en particulier inférieure ou égale à 48 heures et plus particulièrement comprise entre 24 et 48 heures.

Le taux de conversion en monomères à l'issue de la synthèse du polycarbonate est avantageusement supérieur à 90 %, en particulier supérieur à 95 %. Le taux ou rendement de conversion peut être déterminé à partir de la masse des (co)polymères obtenus et des masses en monomère(s) et, éventuellement, en initiateur de départ.

La réaction peut être conduite en masse (en l'absence de solvant) ou en milieu solvant. Avantageusement, elle est conduite en milieu solvant, en particulier sous agitation. Le milieu solvant peut être plus particulièrement formé d'un ou plusieurs solvant(s) apolaire(s) et aprotique(s), en particulier choisis parmi le toluène, le dichlorométhane, le tétrahydrofurane et leurs mélanges. En particulier, elle peut être opérée dans le dichlorométhane.

Selon un mode de réalisation particulier, la concentration en monomères dans le milieu réactionnel initial est supérieure ou égale à 3 $mol.L^{-1}$ (M) en particulier supérieure ou égale à 5 $mol.L^{-1}$. Elle peut être compris entre 3 et 15 $mol.L^{-1}$, en particulier entre 5 et 10 $mol.L^{-1}$.

La réaction de ROP peut être mise en œuvre en mode continu, semi-continu ou discontinu. Selon un mode de réalisation particulier, elle est opérée de manière discontinue (« batch » en anglais), l'ensemble des monomères étant introduits en une seule fois dans le réacteur, le (co)polymère étant récupéré en une fois à la fin de réaction.

Selon un autre mode de réaction, la réaction de ROP peut être mise en œuvre de manière semi-continue ou continue, en particulier dans le cas de la synthèse de copolymères de type aléatoire ou gradient. Elle peut plus particulièrement comprendre une phase d'introduction progressive du ou desdits monomères dans le réacteur. L'introduction progressive des monomères peut être opérée par ajout au cours de la polymérisation de fractions successives de monomère(s), ou en continu.

A l'issue de la (co)polymérisation, éventuellement après protection des fonctions hydroxyles en bout de chaines comme décrit plus précisément dans la suite du texte, les polycarbonates sont soumis à une ou plusieurs étapes de purification, par exemple par précipitation dans un ou plusieurs solvants polaires, typiquement du méthanol ou de l'éthanol, et récupérés par filtration et séchage.

De manière avantageuse, le catalyseur MSA peut être aisément éliminé, en totalité, du milieu réactionnel, ce qui permet de conduire à des polycarbonates présentant une très grande pureté.

Les polycarbonates synthétisés selon l'invention présentent avantageusement peu, voire pas de défauts dans leur structure chimique. L'absence de défauts structurels peut être confirmée par analyse RMN $^1$H des (co)polymères.

Comme illustré dans les exemples, le spectre RMN $^1$H d'un polycarbonate synthétisé selon l'invention présente ainsi un pic à 3,43 ppm, représentatif de liaisons éther, de très faible intensité, voire ne présente aucun pic indentifiable à 3,43 ppm. En revanche, contrairement à un polycarbonate synthétisé selon l'invention, le spectre des polycarbonates synthétisés selon d'autres voies de synthèse, en particulier à l'aide du catalyseur $Sn(Oct)_2$, laisse apparaître un pic d'intensité plus élevée à 3,43 ppm, ce qui témoigne de la présence de défauts structurels (liaisons éther) au niveau de la structure des polycarbonates, à cause de réactions indésirables de décarboxylation.

Comme indiqué précédemment, la synthèse conduite par ROP dans les conditions de l'invention, avantageusement en présence d'un initiateur tel que décrit précédemment, permet un bon contrôle de la masse molaire et de la polydispersité des polycarbonates obtenus.

En particulier, les polycarbonates synthétisés selon l'invention présentent avantageusement une masse molaire moyenne en nombre, notée Mn, inférieure ou égale à 200 000 $g.mol^{-1}$, en particulier comprise entre 5 000 et 100 000 $g.mol^{-1}$, et plus particulièrement entre 5 000 et 50 000 $g.mol^{-1}$. La masse molaire moyenne en nombre peut être mesurée par chromatographie par perméation de gel (ou GPC). Elle peut encore être obtenue à partir de l'analyse RMN $^1$H du (co) polymère obtenu.

Elle peut être avantageusement contrôlée selon la méthode de synthèse mise en œuvre selon l'invention par le rapport molaire du ou desdits monomère(s) à l'initiateur dans le mélange réactionnel initial.

Les (co)polymères synthétisés selon l'invention présentent avantageusement un indice de polydispersité inférieur ou égal à 1,5, en particulier inférieur ou égal à 1,3 et plus particulièrement inférieur ou égal à 1,2. L'indice de polydispersité, noté PDI, est égal au rapport de la masse molaire moyenne en poids Mw sur la masse molaire moyenne en nombre Mn. La masse molaire moyenne en poids peut être déterminée par chromatographie d'exclusion stérique, éventuellement couplée avec la diffusion de lumière statique.

Les polycarbonates synthétisés selon l'invention de type PTMC peuvent présenter une température de transition vitreuse, notée Tg, comprise entre -10 °C et -50 °C, en particulier entre -20 °C et -40 °C. Les copolymères de type PTMC-PCL peuvent présenter une Tg comprise entre -20°C et -70°C, en particulier entre -30°C et -60°C. La température de transition vitreuse peut être déterminée par analyse par calorimétrie différentielle à balayage (DSC pour « Differential Scanning Calorimetry » en terminologie anglo-saxonne).

Les polycarbonates obtenus en étape (i) à l'issue de la synthèse par ROP conduite selon l'invention, en présence d'un initiateur de type mono-alcool R-OH, peuvent être par exemple de formule (III) suivante :

[Chem 6]

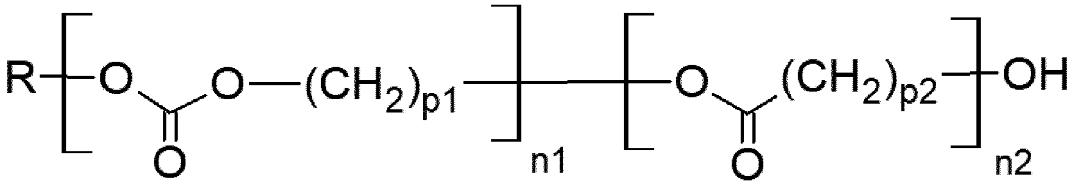

(III)

dans laquelle :

R représente le groupement issu de l'initiateur de type monoalcool ROH, tel que défini précédemment, par exemple un groupe phénylpropyle issu de l'initiateur PPA ;
p1 est un nombre entier allant de 2 à 4, en particulier p1 vaut 3 ;
p2 est un nombre entier allant de 4 à 7, en particulier p2 vaut 5 ;
n1 est un nombre entier positif, correspondant au nombre moyen d'unités monomériques dérivées des monomères carbonates cycliques, en particulier n1 est compris entre 30 et 500 ; n2 vaut 0 ou est un nombre entier positif, correspondant au nombre moyen d'unités monomériques dérivées des monomères lactones, en particulier n2 est compris entre 20 et 500 ;
l'enchaînement des unités monomériques dans la formule (III) pouvant être aléatoire ou gradient.

De préférence, comme décrit précédemment, le rapport molaire des unités monomériques dérivées des carbonates cycliques sur les unités monomériques dérivées des lactones, n1/n2, est compris entre 90/10 et 10/90, en particulier entre 80/20 et 20/80, notamment entre 70/30 et 30/70 et plus particulièrement vaut environ 60/40.

A titre d'exemple, les polycarbonates synthétisés selon l'invention peuvent présenter la structure de formule (III') suivante :

[Chem 7]

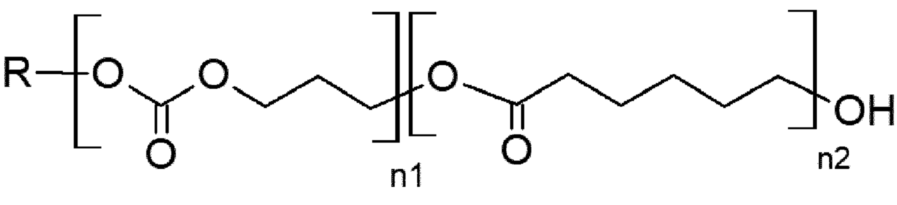

(III')

dans laquelle R, n1 et n2 sont tels que définis précédemment.

Bien entendu, des structures polymériques plus complexes, par exemple de type dendrimère, peuvent être obtenues à partir d'un initiateur mettant en œuvre plusieurs fonctions hydroxyles.

Comme évoqué précédemment, selon un mode de réalisation particulier, dans une étape (ii) du procédé de l'invention, la ou les fonctions hydroxyles en bout de chaines, dites encore « fonctions terminales », des polycarbonates synthétisés selon l'invention, sont protégées (ou coiffées) avant leur mise en œuvre pour former un électrolyte solide selon l'invention. Un polycarbonate synthétisé selon l'invention peut comprendre une unique fonction hydroxyle terminale ou deux, voire plus de deux fonctions hydroxyles terminales, en fonction notamment de la mise en œuvre, ou non, d'un initiateur de la réaction de ROP, ainsi que de la nature de l'initiateur (par exemple, mono-alcool ou diol).

La formation d'extrémités hydroxyle coiffées (plus généralement désignées sous l'appellation « end-capped » en terminologie anglo-saxonne) permet avantageusement d'accroître la stabilité électrochimique de l'électrolyte solide formé à partir du ou desdits polycarbonates, les fonctions terminales hydroxyle étant sensibles à la réduction et à

l'oxydation, et susceptibles de se dégrader au contact des sels de lithium.

Une fonction hydroxyle est plus particulièrement protégée en formant une fonction plus stable chimiquement et électrochimiquement. Par exemple, l'étape (ii) peut être opérée par réaction de la ou desdites fonctions hydroxyles en bout de chaine des polycarbonates avec au moins un composé, appelé « agent de protection », en particulier choisi parmi les chlorures d'acyle, par exemple le chlorure de benzoyle, le chlorure d'acétyle, etc. ; les anhydrides d'acide par exemple l'anhydride acétique comme décrit dans la publication [33], etc., et les isocyanates comme l'isocyanate de p-toluènesulfonyle, etc.

La protection des fonctions hydroxyles peut être réalisée en ajoutant directement le ou lesdits agents de protection dans le milieu réactionnel obtenu à l'issue de la (co)polymérisation en étape (i), avant purification du polycarbonate. Elle peut encore être réalisée après purification du polycarbonate obtenu à l'issue de la synthèse par ROP (variante dite de « post-modification » du polycarbonate).

L'homme du métier est à même d'ajuster les conditions opératoires pour accéder à la protection de la ou des fonctions hydroxyles terminales des polycarbonates selon l'invention. Des exemples de modes opératoires pour la protection des fonctions hydroxyles à l'aide du chlorure de benzoyle et de l'isocyanate de p-toluènesulfonyle, sont par exemple illustrés dans la partie exemple qui suit.

**PREPARATION DE L'ELECTROLYTE SOLIDE**

Comme évoqué précédemment, les polycarbonates synthétisés selon l'invention, après purification et éventuellement après protection des fonctions hydroxyles en bout de chaîne, sont mis en œuvre pour former, en combinaison avec au moins un sel de métal alcalin ou alcalino-terreux, un électrolyte solide, pour une mise en œuvre dans un système électrochimique, en particulier une batterie rechargeable, par exemple une batterie au lithium.

L'électrolyte solide peut être un électrolyte polymérique solide (dit encore SPE pour « Solid Polymeric Electrolyte » en terminologie anglo-saxonne) ou un électrolyte solide hybride (HSE pour « Hybrid Solid Electrolyte » en terminologie anglo-saxonne).

L'électrolyte formé selon l'invention peut se présenter sous toute forme appropriée, en particulier sous forme d'un film ou d'une membrane.

La préparation d'un électrolyte solide à partir des polycarbonates synthétisés selon l'invention met plus particulièrement en œuvre au moins les étapes suivantes :

- mélange en étape (iv), en présence ou non d'un milieu solvant, d'au moins :

  . un ou plusieurs polycarbonate(s) synthétisé(s) par ROP comme décrit précédemment ;
  . au moins un sel de métal alcalin ou alcalino-terreux, en particulier un sel de lithium ; et
  . éventuellement, notamment dans le cas de la préparation d'un HSE, au moins une charge inorganique conductrice du ou des cations alcalin ou alcalino-terreux, en particulier conductrice d'ions lithium ;

- formation en étape (v), en particulier en surface d'un substrat, d'un électrolyte solide à partir dudit mélange.

Le sel de métal alcalin ou alcalino-terreux est mis en œuvre avec le polycarbonate synthétisé selon l'invention pour assurer la conduction des ions.

Dans le cadre de l'invention, on entend par :

- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium ou un sel de sodium ; le sel d'un métal alcalinoterreux peut être par exemple un sel de magnésium. En particulier, le sel mis en œuvre est un sel de lithium.

A titre d'exemples de sel de lithium, on peut citer le $LiPF_6$, $LiClO_4$, $LiBF_4$, $LiAsF_6$, $LiCF_3SO_3$, $LiN(C_2F_5SO_2)_2$, le bis(trifluorométhylsulfonyl)imide de lithium $LiN[SO_2CF_3]_2$ (connu sous l'abréviation LiTFSI), le bis(fluorosulfonyl)amidure de lithium (connu sous l'abréviation LiFSI) $LiN[SO_2F]_2$, le lithium 4,5-dicyano-2-(trifluoromethyl)imidazole (connu sous l'abréviation LiTDI), le lithium bispentafluoroéthylsulfonylimide (connu sous l'abréviation LiBETI), le lithium bis(oxalato) borate (connu sous l'abréviation LiBOB) et le lithium difluoro(oxalato)borate (connu sous l'abréviation LiFOB) et les mélanges de ceux-ci.

De préférence, l'électrolyte comporte, comme sel de lithium, du LiTFSI, LiTDI ou LiFSI, de préférence du LiTFSI ou LiFSI et plus préférentiellement du LiTFSI.

Il appartient à l'homme du métier d'ajuster la quantité en sels de métal alcalin ou alcalino-terreux, notamment au regard de la nature du polycarbonate mis en œuvre.

Selon un mode de réalisation particulier, les quantités en polycarbonate(s) et en sel(s) de lithium sont ajustées de sorte que le ratio molaire entre les groupes carbonyle du polycarbonate par rapport au lithium, noté $[CO]/[Li^+]$, soit compris entre 0,5 et 30, en particulier entre 5 et 15 et plus particulièrement d'environ 15.

Selon une première variante de réalisation, le ou lesdits polycarbonates selon l'invention sont mis en œuvre pour former un électrolyte polymérique solide (SPE), la préparation dudit électrolyte comprenant le mélange en étape (iv) d'au moins un polycarbonate synthétisé selon l'invention et dont les fonctions hydroxyles terminales sont éventuellement protégées, et d'au moins un sel de métal alcalin ou alcalino-terreux, par exemple d'un sel de lithium. Selon une autre variante de réalisation, le ou lesdits polycarbonates selon l'invention sont mis en œuvre pour former un électrolyte solide hybride (HSE), la préparation dudit électrolyte comprenant alors le mélange en étape (iv) d'au moins un polycarbonate synthétisé selon l'invention et dont les fonctions hydroxyles terminales sont protégées, d'au moins un sel de métal alcalin ou alcalino-terreux, par exemple d'un sel de lithium et, en outre, d'au moins une charge inorganique conductrice du ou des cations alcalin ou alcalino-terreux, en particulier conductrice d'ions lithium.

Les charges conductrices d'ions lithium peuvent être par exemple choisies parmi les oxydes lithiés, tels que $Li_7La_3Zr_2O_{12}$ (LLZO) et $Li_{0.33}La_{0.56}TiO_3$ (LLTO), $Li_{1.3}Al_{0.3}Ti_{1.7}(PO_4)_3$ (LATP), etc.

Il peut encore s'agir de charges choisies parmi :

- les grenats, par exemple choisis parmi le $Li_7La_3Zr_2O_{12}$, le $Li_6La_2BaTa_2O_{12}$, etc. ;
- les phosphates lithiés, par exemple choisi parmi le $Li_3PO_4$, le $LiPO_3$, etc. ;
- les borates lithiés, par exemple choisi parmi le $Li_3BO_3$, etc. ;
- les oxynitrures, par exemple choisis parmi $Li_3PO_{4-x}N_{2x/3}$, $Li_4SiO_{4-x}N_{2x/3}$, $Li_4GeO_{4-x}N_{2x/3}$ avec $0<x<4$ ou $Li_3BO_{3-x}N_{2x/3}$ avec $0<x<3$ ;
- les composés lithiés à base d'oxynitrure de lithium et de phosphore (appelés LiPON) ;
- les silicates, par exemple $Li_2Si_2O_5$.

La ou lesdites charges inorganiques conductrices d'ions peuvent être mises en œuvre dans un rapport volumique charge(s) conductrice(s)/polycarbonate(s) compris entre 20/80 et 80/20, en particulier entre 20/80 et 60/40.

Le mélange du ou desdits polycarbonates selon l'invention, du ou desdits sels de métal alcalin ou alcalino-terreux et, éventuellement, de la ou desdits charges inorganiques conductrices, est plus particulièrement opéré dans des conditions permettant une bonne dispersion desdits sels de métal alcalin ou alcalino-terreux et, éventuellement, de la ou desdits charges inorganiques conductrices, au niveau des polycarbonates selon l'invention. Le mélange peut être opéré en présence ou non d'un solvant.

L'électrolyte solide en étape (v) du procédé de l'invention, en particulier sous la forme d'un film, peut être formé, en l'absence de solvant, à partir dudit mélange de l'étape (iv) à l'état fondu, en particulier par extrusion ; ou en présence d'un ou plusieurs solvant(s), par dépôt dudit mélange de l'étape (iv) en surface d'un substrat, par exemple par enduction, suivie de l'évaporation du ou desdits solvants.

Selon une première variante de réalisation, l'électrolyte solide est préparé par voie « solvant ». Dans le cadre de cette variante, le mélange du ou desdits polycarbonates selon l'invention, du ou desdits sels de métal alcalin ou alcalino-terreux et, éventuellement, de la ou desdits charges inorganiques conductrices, est plus particulièrement réalisé dans un milieu solvant. Le milieu solvant peut être formé d'un ou plusieurs solvants organiques polaires. A titre d'exemples, ils peuvent être choisis parmi l'acétone, l'acétonitrile (ACN), le tétrahydrofurane (THF) et leurs mélanges, en particulier l'acétone ou l'acétonitrile. L'électrolyte solide peut être formé par dépôt dudit mélange en surface d'un substrat, par exemple par enduction, suivi de l'évaporation du ou desdits solvants, en particulier pour obtenir un électrolyte ou film « sec ».

Par « sec », on entend signifier que l'électrolyte solide ou film d'électrolyte solide comprend moins de 0,1 % massique de solvant, en particulier moins de 0,05 % massique et plus particulièrement moins de 0,02 % massique de solvant.

L'évaporation du ou desdits solvants peut être par exemple opérée par chauffage à une température, dépendante du type de polymère, supérieure ou égale à 20°C sous vide, en particulier comprise entre 30 et 80 °C sous vide.

L'évaporation peut être opérée sous vide.

Selon une autre variante de réalisation, l'électrolyte solide, en particulier sous la forme d'un film, est préparé en l'absence de solvant, par voie « fondue », notamment par extrusion.

Dans le cadre de cette variante de réalisation, le mélange à l'état fondu peut être plus particulièrement opéré par chauffage à une température supérieure à Tg + 30°C, où Tg est la température de transition vitreuse du (co)polymère. En particulier, le mélange est opéré à une température supérieure ou égale à 30°C, en particulier comprise entre 40°C et

100°C, en particulier entre 40°C et 60°C.

Le mélange à l'état fondu peut ensuite être mis sous la forme d'un film, supporté par un substrat ou autosupporté, par toute technique d'extrusion par voie fondue connue de l'homme du métier.

Comme évoqué précédemment, l'électrolyte solide peut être préparé sous la forme d'un film ou d'une membrane d'électrolyte directement en surface d'un substrat adapté, en particulier inerte.

Le substrat peut être de diverses natures. Il peut être en verre, en alumine, en silicone, en polyimide, en polytétrafluoroéthylène (PTFE), en polytéréphtalate d'éthylène (PET), en silicone ou encore en polypropylène.

Le film d'électrolyte solide peut être éventuellement désolidarisé du substrat pour être mis en œuvre au niveau du système électrochimique auquel il est destiné, en particulier transféré sur au moins une électrode.

Le film d'électrolyte solide peut présenter par exemple une épaisseur comprise entre 20 et 500 $\mu$m, en particulier entre 20 et 100 $\mu$m et plus particulièrement entre 40 et 60 $\mu$m.

## SYSTEME ELECTROCHIMIQUE

L'électrolyte solide obtenu selon l'invention, notamment de type SPE ou HSE, peut être avantageusement mis en œuvre comme électrolyte solide dans un système électrochimique. L'invention concerne encore, selon un autre de ses aspects, un système électrochimique comprenant un électrolyte solide, en particulier un film d'électrolyte solide selon l'invention, en particulier faisant office à la fois de conducteur ionique et séparateur entre les électrodes positive et négative.

Le système électrochimique peut être un système générateur, convertisseur ou de stockage électrochimique. Il peut s'agir plus particulièrement d'une pile à combustible, par exemple une batterie primaire ou secondaire, par exemple une batterie au lithium, sodium, magnésium, potassium ou calcium ; d'une batterie à flux (« redox flow battery » en terminologie anglo-saxonne) ; d'un accumulateur lithium-air, lithium-soufre.

Selon un mode de réalisation particulier, l'électrolyte solide est mis en œuvre dans une batterie rechargeable, en particulier dans une batterie au lithium, notamment une batterie lithium-ion ou lithium-métal.

En particulier, l'invention concerne encore, selon un autre de ses aspects, un ensemble électrode/membrane électrolytique, comprenant une membrane d'électrolyte solide selon l'invention.

Un système électrochimique selon l'invention comporte, d'une manière générale, au moins une électrode positive et une électrode négative entre lesquelles se trouve un film d'électrolyte solide agissant à la fois comme conducteur ionique et séparateur entre les électrodes positive et négative.

L'électrode positive d'une batterie au lithium comprend généralement, en tant que matière électrochimiquement active, des composés lamellaires, tels que $LiCoO_2$, $LiNiO_2$ et mixtes $Li(Ni, Co, Mn, Al)O_2$, ou des composés de structure spinelle de compositions proches de $LiMn_2O_4$, des phosphates du lithium, en particulier $LiMnFePO_4$ ou $LiFePO_4$.

De manière avantageuse, l'électrode positive comprend, en tant que matière électrochimiquement active, du $LiNi_{1/3}Mn_{1/3}Co_{1/3}O_2$ (cathodes NCM) ou du $LiCoO_2$, de préférence du $LiNi_{1/3}Mn_{1/3}Co_{1/3}O_2$.

L'électrode négative comprend généralement, en tant que matière électrochimiquement active, du lithium métal ou alliage à base de lithium dans le cas des accumulateurs primaires, ou des matériaux d'intercalation tels que le carbone graphite, ou de l'oxyde de titane lithié ($Li_4Ti_5O_{12}$) ou de l'oxyde de titane et de niobium ($TiNb_2O_7$), dans le cas des accumulateurs basés sur la technologie lithium-ion.

De manière avantageuse, il peut s'agir d'une batterie lithium-métal, comprenant une électrode en lithium métallique $Li^0$ et une électrode comprenant du $LiNi_{1/3}Mn_{1/3}Co_{1/3}O_2$ ou du $LiCoO_2$, de préférence du $LiNi_{1/3}Mn_{1/3}Co_{1/3}O_2$.

L'invention va maintenant être décrite au moyen des exemples suivants, donnés bien entendu à titre illustratif et non limitatif de l'invention.

## Exemple

Dans les exemples qui suivent, les produits suivants sont utilisés.

Pour la synthèse des (co)polymères :

Le triméthylène carbonate (TMC, 99,5 %, Actu-All Chemicals) séché sous vide à 40°C avant son utilisation ; l'$\varepsilon$-caprolactone (CL, 97 %) ; le 3-phénylpropanol (PPA, 98 %) ; l'éthylène glycol (EG, 99.8%) ; l'octanoate stanneux ($Sn(Oct)_2$, 92,5-100%) ; l'acide méthane sulfonique (MSA, 99,5 %) ; le chlorure de benzoyle (BC, 99%) ; l'isocyanate de p-toluènesulfonyle (TSI, >98%), commercialisé par Sigma Aldrich, sont utilisés tels quels; la triéthylamine (TEA, >99%, Alfa Aesar) est utilisée telle quelle ; le dichlorométhane (DCM, HPLC grade, Sigma Aldrich) est distillé avec l'hydrure de calcium ($CaH_2$) avant usage ; le méthanol (MeOH, HPLC grade) ; le toluène anhydre, commercialisés par Sigma Aldrich, sont utilisés tels quels.

Pour la préparation des électrolytes :

Les sels de lithium, bis(trifluorométhanesulonyl)imide de lithium (LiTFSI, 99,9 %, Sigma Aldrich) ; bis(fluorosulfonyl)imide de lithium (LiFSI, 99,9 %, Arkema) ; 4,5-dicyano-2-(trifluorométhyl)imidazole (LiTDI, 95 %, Alfa Aesar), sont séchés sous vide pendant 72 heures et stockés dans une boîte à gants remplie avec de l'argon. L'acétone anhydre (≥ 99,8 %, Sigma Aldrich) est utilisée tel quel.

**Exemple 1**

**Synthèse des homopolymères PTCM**

**1.1. Synthèse du PTMC « non-protégé » et « protégé » mettant en œuvre l'acide méthane sulfonique comme catalyseur et initiée par un mono-alcool (PPA)**

Le protocole suivant est suivi pour la synthèse par ROP, mettant en œuvre le catalyseur MSA et initiée par un mono-alcool (le PPA), de PTMC, de masse moléculaire théorique de 10 000 g.mol$^{-1}$, présentant des fonctions hydroxyles en bout de chaine non protégées (PTMC dit « non protégé ») et des PTMC dont les fonctions hydroxyles sont protégées par réaction avec différents agents de protection (PTMC dit « protégé »).

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Du DCM (20 mL) est ensuite ajouté pour dissoudre le TMC. La concentration en monomère est d'environ 5 M.

Une fois le TMC complément dissous, l'initiateur PPA (136,7 μL, 1,01 mmol, 1 équiv.) et le catalyseur MSA (65,8 μL, 1,01 mmol, 1 équiv.) sont introduits directement dans le milieu réactionnel. Le ratio molaire initiateur/catalyseur est [PPA]/[MSA] de 1/1. Le mélange réactionnel est mélangé pendant 24-48 heures à température ambiante.

Pour la synthèse du PTMC « non-protégé », le mélange réactionnel est ensuite versé dans 300 mL de méthanol froid sous forte agitation pour précipiter le polymère et retirer le DMC et le catalyseur MSA.

Après deux heures sous agitation, le PTMC, obtenu sous la forme d'une gomme blanche, noté « P10PPA », est lavé plusieurs fois avec du méthanol jusqu'à pH neutre. Le polymère est ensuite séché dans un four à 60 °C pendant 24 heures, puis sous vide à 80 °C pendant 48 heures.

Pour la synthèse du P10PPA « protégé », une quantité en excès de triéthylamine (1,70 mL, 12,1 mmol, 12 équiv.) est ajoutée directement au milieu réactionnel et l'agent de protection chlorure de benzoyle (10,1 mmol, 10 équiv.) est ajouté. Le mélange réactionnel est mélangé pendant 2 jours à température ambiante.

L'isocyanate de p-toluènesulfonyle (TSI) a été aussi mis en œuvre comme agent de protection. Pour la protection avec TSI, une quantité suffisante de triéthylamine (140,9 μL, 1,01 mmol, 1 équiv.) est ajouté au milieu réactionnel pour neutraliser le MSA. Puis le TSI (1,543 mL, 10,1 mmol, 10 équiv.) est ajouté, et le mélange réactionnel mélangé pendant 2 jours à température ambiante.

Après protection des fonctions hydroxyles des polycarbonates, 20 mL de méthanol sont ajoutés dans le mélange réactionnel sous forte agitation pendant 4 heures pour consommer tous les agents de protection en excès. Environ 300 mL de méthanol sont ensuite versés dans le mélange réactionnel sous forte agitation pour précipiter le polymère et retirer le solvant et tous les produits secondaires. Après deux heures sous agitation, le PTMC obtenu sous la forme de gomme blanche, dont les fonctions hydroxyles sont protégées par le chlorure de benzoyle, ou l'isocyanate de p-toluènesulfonyle, noté respectivement « P10PPA-BC » et « P10PPA-TSI », est lavé plusieurs fois avec du méthanol pendant 24 heures. Le P10PPA-BC et le P10PPA-TSI sont ensuite séchés dans un four à 60 °C pendant 24 heures, puis sous vide à 80 °C pendant 48 heures. La pureté du produit final est vérifiée avec $^1$H RMN ; aucune trace du catalyseur et des produits secondaires n'est visible sur le spectre obtenu.

Le même protocole de synthèse ci-dessus est utilisé pour la synthèse d'un polymère PTMC « non-protégé » de masse moléculaire théorique d'environ 50 000 g.mol$^{-1}$, noté « P50PPA », en mettant en œuvre les quantités suivantes de réactifs : TMC (10,000 g, 97,95 mmol ; 488,43 équivalents), PPA (27,0 μL, 0,20 mmol, 1 équiv.) et MSA (13,0 μL, 0,2 mmol, 1 équiv.). Le temps de réaction est augmenté à 48 heures pour atteindre une conversion des monomères élevée.

Le même protocole de synthèse ci-dessus avec le même rapport molaire en agent de protection mis en œuvre est utilisé pour la synthèse de polymères PTMC, de masse moléculaire théorique d'environ 50 000 g.mol$^{-1}$, notés « P50PPA-BC » ou « P50PPA-TSI », dont les fonctions hydroxyles sont respectivement protégées avec le chlorure de benzoyle ou l'isocyanate de p-toluènesulfonyle.

Le schéma réactionnel pour la synthèse du PTMC « non-protégé » initiée par le PPA est représenté ci-dessous.

[Chem 8]

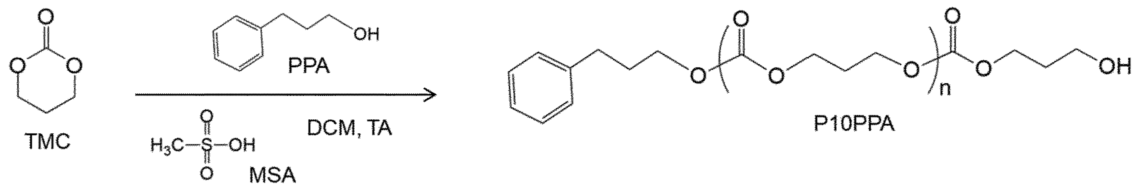


Le schéma réactionnel pour la synthèse des PTMC « protégés » initiée par PPA est représenté ci-dessous.

[Chem 9]

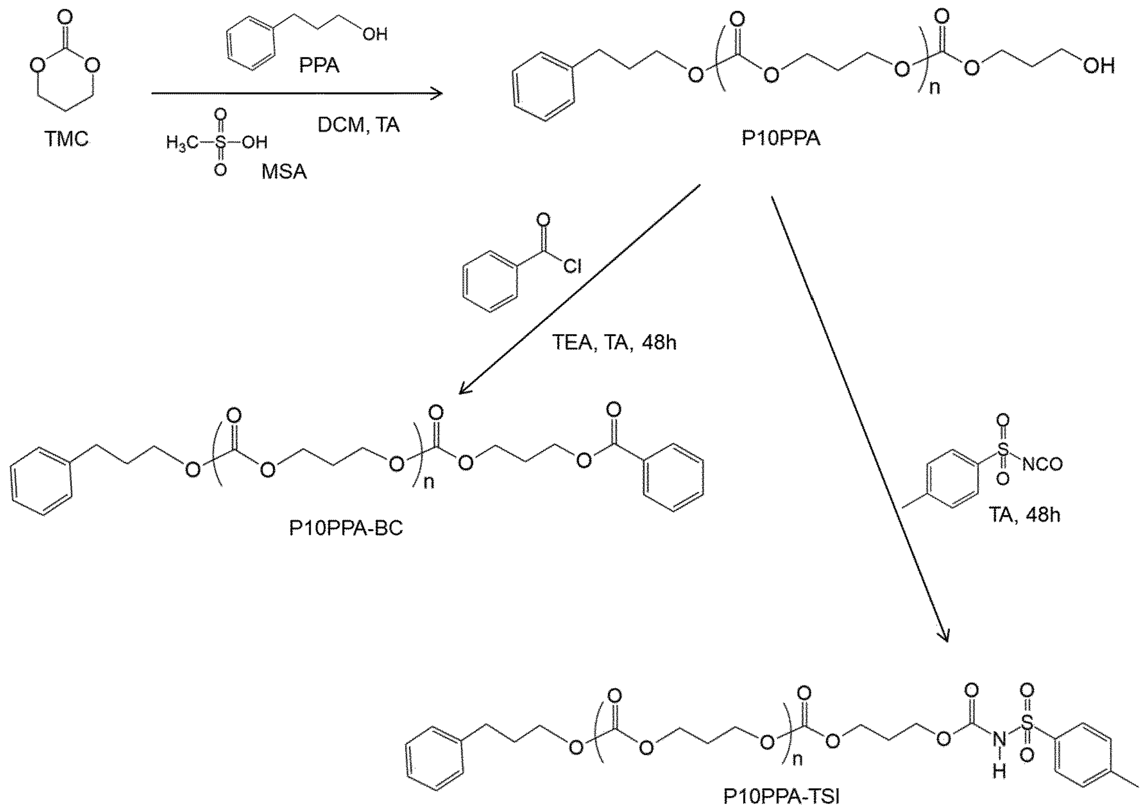


**1.2. Synthèse du PTMC « non-protégé » et « protégé » mettant en œuvre l'acide méthane sulfonique comme catalyseur et initié par un diol**

Le protocole suivant est suivi pour la synthèse par ROP, mettant en œuvre le catalyseur MSA et initiée par un diol (l'éthylène glycol), de PTMC, de masse moléculaire théorique de 10 000 g.mol$^{-1}$, présentant des fonctions hydroxyles en bout de chaine non protégées (PTMC dit « non protégé ») et des PTMC dont les fonctions hydroxyles sont protégées par réaction avec différents agents de protection (PTMC dit « protégés »).

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Du DCM (20 mL) est ensuite ajouté pour dissoudre le TMC. La concentration en monomère est d'environ 5 M.

Une fois le TMC complément dissous, l'éthylène glycol (EG, 56,1 μL, 1,01 mmol, 1 équiv.), le catalyseur MSA (65,8 μL, 1,01 mmol, 1 équiv.) sont introduits dans le milieu réactionnel. Le mélange réactionnel est mélangé pendant 48 heures à température ambiante. Ensuite, la même procédure que celle décrite précédemment en 1.1. pour la synthèse du P10PPA est appliquée pour obtenir le polymère « non-protégé » noté « P10EG ».

Pour la synthèse du P10EG « protégé », le même protocole que celui décrit précédemment au point 1.1. pour la synthèse du P10PPA « protégé » a été utilisé, mais la quantité de certains réactifs est doublée car le polycarbonate est terminé par deux fonctions hydroxyles en bout de chaîne. En particulier, pour la protection avec le chlorure de benzoyle (BC), une quantité en excès de triéthylamine (3,40 mL, 24,2 mmol, 24 équiv.) est ajoutée directement au milieu réactionnel

et BC (20,2 mmol, 20 équiv.) est ajouté. Le mélange réactionnel est mélangé pendant 2 jours à température ambiante. Pour la protection avec TSI, une quantité suffisante de triéthylamine (140,9 μL, 1,01 mmol, 1 équiv.) est ajouté au milieu réactionnel seulement pour neutraliser MSA. Après, TSI (3,086 mL, 20,2 mmol, 20 équiv.) est ajouté et le mélange réactionnel est mélangé pendant 2 jours température ambiante.

Après protection des fonctions hydroxyles des polycarbonates, 20 mL de méthanol sont ajoutés dans le mélange réactionnel sous forte agitation pendant 4 heures pour consommer tous les agents de protection en excès. Environ 300 mL de méthanol sont ensuite versés dans le mélange réactionnel sous forte agitation pour précipiter le polymère et retirer le solvant et tous les produits secondaires. Après deux heures sous agitation, le PTMC obtenu sous la forme de gomme blanche, dont les fonctions hydroxyles sont protégées par le chlorure de benzoyle ou l'isocyanate de p-toluènesulfonyle, noté respectivement « P10EG-BC » ou « P10EG-TSI », est lavé plusieurs fois avec du méthanol pendant 24 heures. P10EG-BC et P10EG-TSI sont ensuite séchés dans un four à 60 °C pendant 24 heures, puis sous vide à 80 °C pendant 48 heures. La pureté du produit final est vérifiée avec $^1H$ RMN; aucune trace du catalyseur et des produits secondaires n'est visible sur le spectre obtenu.

Le même protocole de synthèse est utilisé pour la synthèse de PTMC de masse moléculaire théorique d'environ 50 000 g.mol$^{-1}$, initiée par l'éthylène glycol, et dont les fonctions hydroxyles ne sont pas protégées (noté « P50EG »), ou sont protégées avec le chlorure de benzoyle ou l'isocyanate de p-toluènesulfonyle, respectivement (notés « P50EG-BC » et « P50EG-TSI »).

Le schéma réactionnel pour la synthèse du PTMC « non-protégé » initiée par l'éthylène glycol est représenté ci-dessous.

[Chem 10]

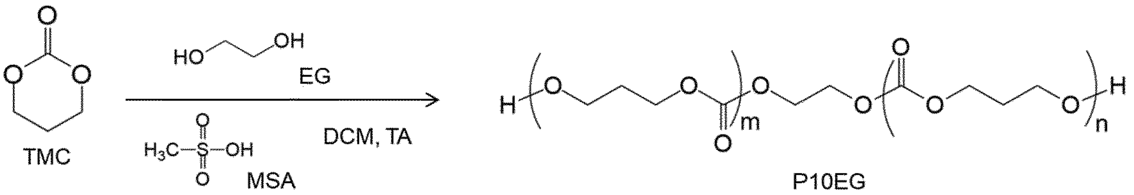


Le schéma réactionnel pour la synthèse des P10EG « protégés » est représenté ci-dessous.

[Chem 11]

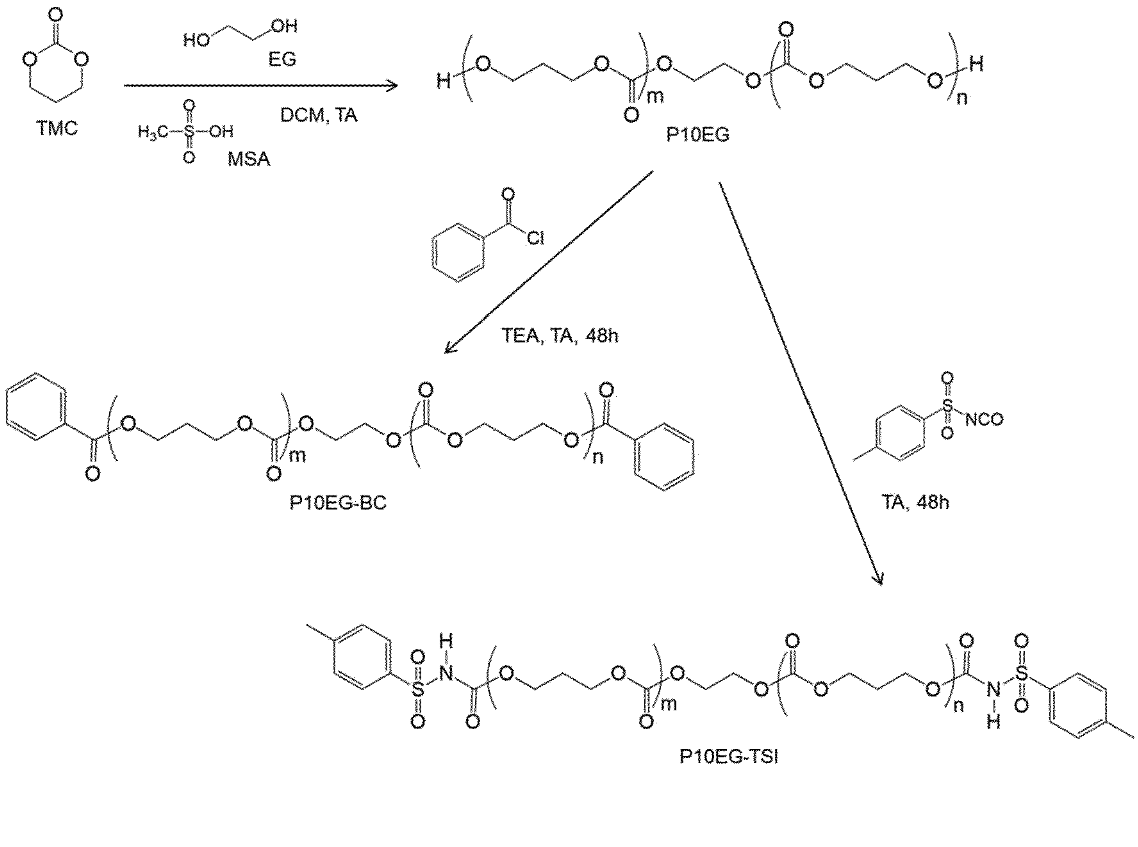

**1.3. Synthèse du PTMC « non-protégé » et « protégé » mettant en œuvre l'acide méthane sulfonique comme catalyseur, et en l'absence d'initiateur**

Le protocole suivant est suivi pour la synthèse par ROP, mettant en œuvre le catalyseur MSA et sans initiateur, de PTMC, de masse moléculaire théorique de 10 000 g.mol$^{-1}$, présentant des fonctions hydroxyles en bout de chaine non protégées (PTMC dit « non protégé ») et des PTMC dont les fonctions hydroxyles sont protégées par réaction avec différents agents de protection (PTMC dit « protégé »).

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Du DCM (20 mL) est ensuite ajouté pour dissoudre le TMC.

La concentration en monomère est d'environ 5 M.

Une fois le TMC complément dissous, le catalyseur MSA (65,8 µL, 1,01 mmol, 1 équiv.) est introduit directement dans le milieu réactionnel. Le mélange réactionnel est mélangé pendant 48 heures à température ambiante. Ensuite, le même protocole que celui décrit précédemment au point 1.2. pour la synthèse du P10EG « non-protégé » est appliquée pour obtenir le polymère « non-protégé », noté « PxMSA ». Dans cette voie de synthèse, la masse molaire du polymère est incontrôlable.

Pour la synthèse du PxMSA « protégé », le même protocole que celui décrit précédemment au point 1.2. pour la synthèse du P10EG « protégé » a été utilisé, puisque le polymère est terminé par deux fonctions hydroxyles en bout de chaîne, pour obtenir les polymères dont les fonctions hydroxyles sont protégées par le chlorure de benzoyle ou l'isocyanate de p-toluènesulfonyle, nommés « PxMSA-BC » ou « PxMSA-TSI » respectivement.

Le schéma réactionnel pour la synthèse du PTMC, sans amorceur, « non-protégé » est représenté ci-dessous.

[Chem 12]

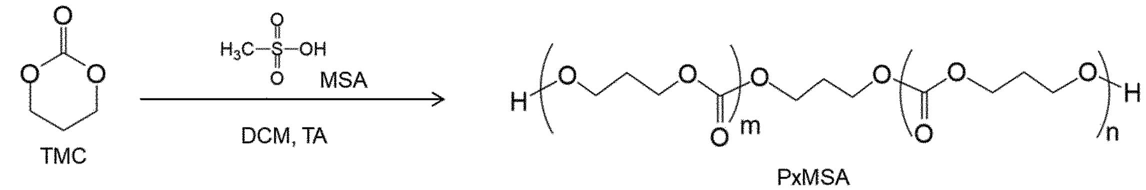


Le schéma réactionnel pour la synthèse des PTMC sans amorceur, « protégés », est représenté ci-dessous.

[Chem 13]

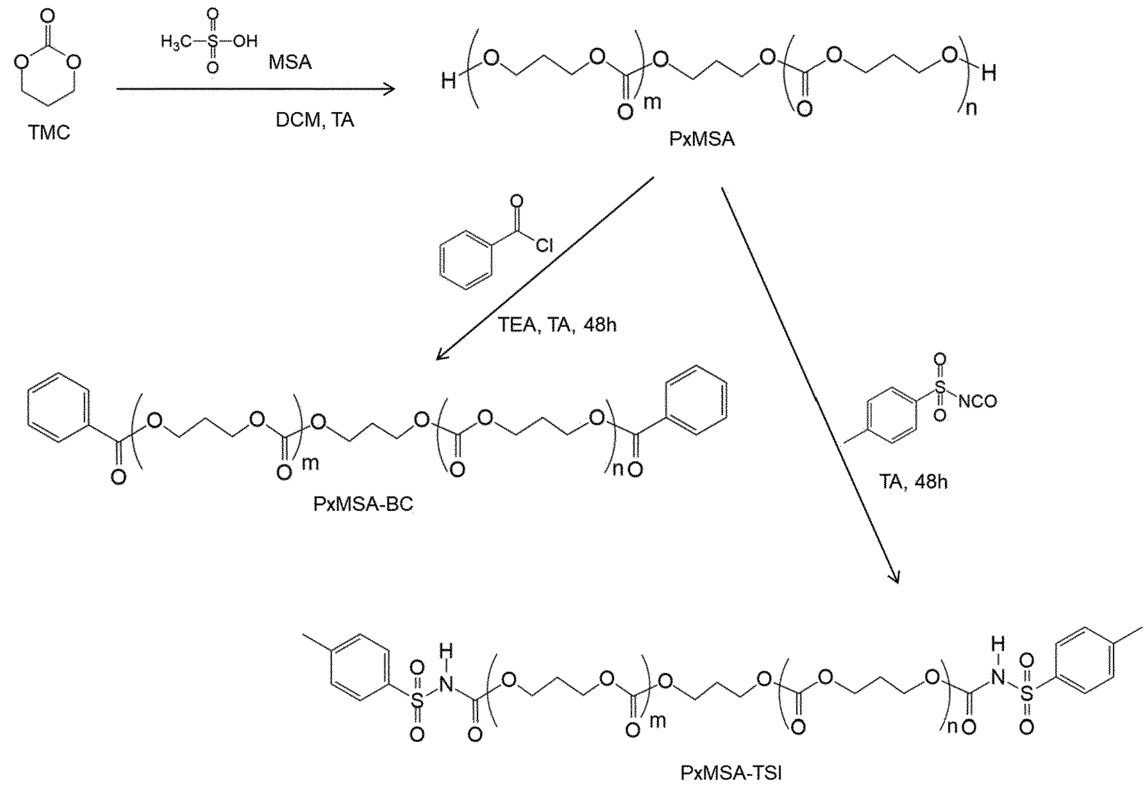


### 1.4. Synthèse du PTMC mettant en œuvre $Sn(Oct)_2$ comme catalyseur *(comparatif)*

Le protocole suivant est suivi pour la synthèse par ROP, mettant en œuvre le catalyseur $Sn(Oct)_2$ et initiée par un mono-alcool (le PPA), de PTMC, de masse moléculaire théorique de 10 000 $g.mol^{-1}$.

Le monomère TMC (10,000 g, 97,95 mmol, 96,62 équivalents), l'initiateur PPA (136,7 µL, 1,01 mmol, 1 équiv.) et 1 M de solution de catalyseur $Sn(Oct)_2$ dissous dans du toluène anhydre (20,0 µL, $2,0.10^{-2}$ mmol ; 0,02 équiv.) sont introduits dans un ballon à fond rond à col unique de 100 mL, en opérant dans une boîte à gants remplie avec de l'argon. Le ratio molaire monomère/catalyseur est $[TMC]/[Sn(Oct)_2]$ est d'environ 5000/1. Le ballon est fermé, sorti à l'extérieur et chauffé à 130°C à l'aide d'un bain d'huile sous forte agitation. La température du bain est maintenue à 130°C pendant 24 heures.

Puis le mélange réactionnel est refroidi à température ambiante et une quantité minimale de DCM est ajoutée pour dissoudre le polymère PTMC. La solution de polymère est ensuite versée dans 300 mL de méthanol froid sous forte agitation pour précipiter le polymère.

La masse de polymère, se présentant sous la forme d'une gomme blanche, est lavée plusieurs fois avec du méthanol, puis séchée dans un four à 60°C suivi d'un séchage sous vide à 80°C pendant 48 heures pour obtenir le produit final, noté « S10PPA ».

Le même protocole de synthèse est suivi pour la synthèse d'un polymère PTMC de masse moléculaire théorique d'environ 50 000 $g.mol^{-1}$, noté « S50PPA », en mettant en œuvre les quantités suivantes de réactifs : TMC (10,000 g, 97,95 mmol ; 488,43 équivalents), PPA (27,0 µL, 0,20 mmol, 1 équiv.) et une solution 1 M de catalyseur $Sn(Oct)_2$ dissous dans du toluène anhydre (20,0 µL, $2,0.10^{-2}$ mmol, 0,1 équiv.). Le ratio molaire monomère/catalyseur est d'environ 5000/1. Le temps de réaction est augmenté à 48 heures pour atteindre une conversion de monomères élevée.

Le schéma réactionnel pour la synthèse du PTMC est représenté ci-dessous.

[Chem 14]

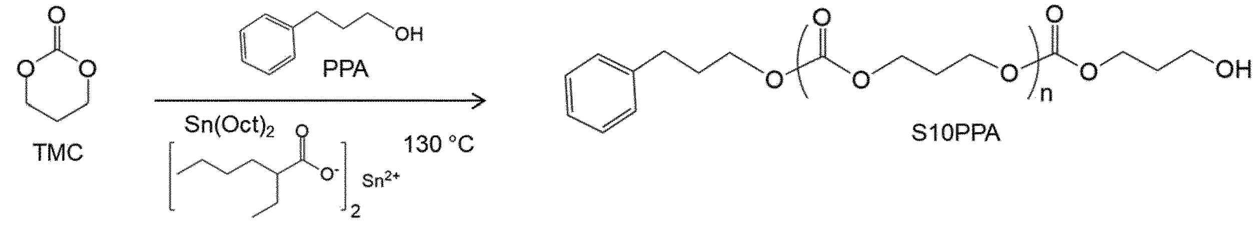


Résultats

*Méthodes de caractérisations des polymères*

Spectroscopie RMN : La structure chimique des monomères et polymères est confirmée par spectroscopie RMN sur un spectromètre RMN Bruker Ascend™ 400.

Mesure du poids moléculaire (Mw) : Les analyses par SEC-MALS (combinaison des techniques de chromatographie d'exclusion stérique et de diffusion de lumière statique) sont conduites sur un appareillage Viscotek GPCmax (VE 2001 Module) et les données sont traitées par le logiciel OmniSEC, commercialisé par Malvern Panalytical. Les mesures sont opérées à température ambiante et le tétrahydrofurane (THF) est utilisé comme solvant avec une vitesse de flux de 1 $mL.min^{-1}$. Les solutions de polymères (à environ 1 $mg.mL^{-1}$) sont filtrées à travers un filtre à base de PTFE Millipore de 0,20 μm. La calibration est effectuée en utilisant des étalons de polystyrène.

Propriétés thermiques : Les mesures DSC (« Differential Scanning Calorimetry ») sont réalisées sur des films secs de ionomères en utilisant un système Chip-DSC 100 (Linseis) sous flux d'argon de 50 mL/min avec une vitesse de chauffe de $10°C.min^{-1}$ de -100 à 100°C. La température de transition vitreuse (Tg) est déterminée comme la valeur du point médian au deuxième balayage.

Résultats

Les résultats des analyses des polymères PTMC obtenus sont présentés dans le tableau 1 suivant.

[Tableau 1]

| Echantillon | Rendement (%)[a] | $M_{n\text{-}RMN}$ (Da)[b] | $M_{n\text{-}SEC}$ (Da)[c] | $M_{w\text{-}SEC}$ (Da)[C] | PDI[d] |
|---|---|---|---|---|---|
| S10PPA *(hors invention)* | 95±3 | 9700±1000 | 8700±500 | 21500±3000 | 2,45±0,05 |
| S50PPA *(hors invention)* | 95±3 | 24600±2000 | 24000±1500 | 55000±2000 | 2,31±0,05 |
| P10PPA | 97±2 | 8400±500 | 8900±1000 | 10700±1400 | 1,19±0,02 |
| P50PPA | 97±2 | 24900±2000 | 19900±1700 | 24600±1600 | 1,24±0,02 |
| P10EG | 99±2 | 8000±500 | 11101±1000 | 12626±1500 | 1,14±0,02 |
| PxMSA | 93±2 | // | 19400±2000 | 20800±2000 | 1,07±0,02 |

[a]Le rendement de conversion est calculé à partir de la masse de polymère PTMC obtenu ($m_{PTMC}$) et des masses en monomère TMC et, éventuellement en initiateur PPA ou EG de départ, selon la formule

[Math 1]

$$\text{rendement } (\%) = m_{PTMC} \text{ x } 100/(m_{TMC} + m_{PPA \text{ ou } EG})$$

[b]La masse moléculaire moyenne en nombre est calculée à partir de l'analyse RMN $^1H$ ;

[c]La masse moléculaire moyenne est mesurée par SEC ;

[d]Indice de polydispersité PDI=$M_w/M_n$

La voie de synthèse mettant en œuvre le catalyseur MSA a permis d'obtenir des PTMC linéaires de deux poids moléculaires distincts avec une conversion des monomères élevée et un grand contrôle de la polymérisation (indice de polydispersité plus proche de 1).

Les analyses RMN $^1$H des polymères PTMC synthétisés par ROP, avec le catalyseur MSA, initiée par PPA (P10PPA) et avec le catalyseur $Sn(Oct)_2$ et initiée par PPA (S10PPA) sont représentés en figure 1.

L'ensemble des spectres RMN $^1$H des polymères synthétisés présentent deux pics principaux à 4,20 et 2,03 ppm correspondant au proton des groupes $-CH_2-O-$ et $-CH_2-$, respectivement, de l'unité TMC.

Le spectre RMN $^1$H du PTMC synthétisé à l'aide du catalyseur $Sn(Oct)_2$ laisse apparaître un pic à 3,43 ppm. Ce pic témoigne de la présence de liaisons éther ($-CH_2-O-CH_2-$) à cause de réactions indésirables de décarboxylation à haute température en présence du $Sn(Oct)_2$ [11]. En revanche, ce pic n'est pas détecté dans le spectre RMN $^1$H du PTMC synthétisé par ROP avec le catalyseur MSA selon l'invention. A titre de comparaison, le rapport d'intégration du pic à 3,43 ppm par rapport à celui du pic à 4,20 ppm pour le S10PPA est de 16,85/1000, tandis qu'aucune trace du pic à 3,43 ppm n'a été détectée dans le spectre du P10PPA (0/1000). Si l'on considère qu'une liaison éther dérive de la décarboxylation d'une unité TMC, la concentration molaire de liaison éther dans S10PPA est d'environ 1,67 % tandis que celle de P10PPA est de 0,00 %.

La polymérisation à l'aide d'un catalyseur MSA montre une contrôlabilité plus élevée (PDI plus faible, moins de défaut dans la structure chimique), une purification plus facile, une consommation d'énergie inférieure et est plus aisément transposable pour une production à grande échelle par rapport à la synthèse conventionnelle utilisant le catalyseur $Sn(Oct)_2$. Les analyses RMN $^1$H des polymères PTMC « non-protégés », synthétisés par ROP à l'aide du catalyseur MSA de masse moléculaire moyenne théorique Mn d'environ 10 000 $g.mol^{-1}$ initiée par éthylène glycol (P10EG) ou sans l'initiateur alcool (PxMSA), sont représentés en figure 2.

Les analyses RMN $^1$H des polymères PTMC de masse moléculaire moyenne Mn théorique d'environ 10 000 $g.mol^{-1}$, « protégés » à l'aide de l'agent de protection chlorure de benzoyle (BC) (P10PPA-BC) et isocyanate de p-toluènesulfonyle (TSI) (P10PPA-TSI) sont représentés en figure 3.

Les analyses RMN $^1$H des polymères PTMC synthétisés par ROP, à l'aide du catalyseur MSA et « protégé » par l'isocyanate de p-toluènesulfonyle (TSI), de masse moléculaire moyenne Mn théorique d'environ 10 000 $g.mol^{-1}$, initiée par l'éthylène glycol (P10EG-TSI) ou sans l'initiateur alcool (PxMSA-TSI), sont représentés en figure 4.

L'apparition de nouveaux pics correspondant aux agents protecteurs dans les spectres RMN $^1$H des PTMC protégées révèle que les protections ont été réalisées avec succès en utilisant du chlorure de benzoyle et de l'isocyanate de p-toluènesulfonyle. En particulier, trois nouveaux pics, qui apparaissent à 8,03, 7,56 et 7,43 ppm (pics 11, 12 et 13) sur la figure 3(a), sont attribués aux trois protons sur le cycle aromatique du chlorure de benzoyle. De plus, en raison de l'effet de retrait d'électrons du groupe benzoate attaché à la chaîne polymère, trois protons à la fin de la chaîne polymère se déplacent vers des ppm plus élevés (pics 8, 9 et 10 sur la figure 3(a)).

De même, deux nouveaux pics apparaissant à 7,89 et 7,34 ppm (pics 12 et 13 sur la figure 3(b) correspondent aux deux protons sur le cycle aromatique du p-toluènesulfonylisocyanate. De plus, un très petit pic apparaissant à 8,16 ppm (pic 11 sur la figure 3(b)) dérive du proton du groupe uréthane du produit de couplage. Enfin, un singulet apparaissant à 2,44 ppm dérive du groupe méthyle fixé sur le cycle aromatique de l'agent TSI. Les spectres RMN $^1$H révèlent que les réactions de couplage ont été réalisées avec succès.

**Exemple 2**

**Synthèse des copolymères PTCM-PCL**

**2.1. Synthèse du copolymère PTMC-PCL « non-protégé » et « protégé » mettant en œuvre l'acide méthane sulfonique comme catalyseur et initié par un mono-alcool (PPA)**

Le protocole suivant est suivi pour la synthèse par ROP, mettant en œuvre le catalyseur MSA et initiée par un mono-alcool (le PPA), de PTMC-PLC, de masse moléculaire théorique de 10 000 $g.mol^{-1}$, présentant des fonctions hydroxyles en bout de chaine non protégées (PTMC-PCL dit « non protégé ») et des PTMC-PCL dont les fonctions hydroxyles sont protégées par réaction avec différents agents de protection (PTMC-PCL dit « protégés »). Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon.

Ensuite, du DCM (20 mL) est ajouté pour dissoudre le TMC. La concentration en monomères est d'environ 5 M.

Une fois le TMC complément dissous, l'initiateur PPA (136,0 $\mu$L, 1,01 mmol, 1 équiv.) et le catalyseur MSA (65,5 $\mu$L, 1,01 mmol, 1 équiv.) sont introduits directement dans le milieu réactionnel. Le ratio molaire initiateur/catalyseur est [PPA]/[MSA] de 1/1. Le mélange réactionnel est mélangé pendant 24-48 heures à température ambiante.

Pour la synthèse du copolymère « non-protégé », le même protocole que celui décrit en exemple 1 pour la

synthèse du P10PPA « non-protégé » a été utilisé. En particulier, le mélange réactionnel est ensuite versé dans 300 mL de méthanol froid sous forte agitation pour précipiter le copolymère et retirer le DCM et le catalyseur MSA.

Après deux heures sous agitation, le copolymère obtenu, sous la forme d'une gomme blanche, noté « G10PPA », est lavé plusieurs fois avec du méthanol jusqu'à pH neutre. Le copolymère est ensuite séché dans un four à 60 °C pendant 24 heures, puis sous vide à 80 °C pendant 48 heures.

Pour la synthèse du G10PPA « protégé », le même protocole que celui décrit en exemple 1 pour la synthèse du P10PPA « protégé » a été utilisé. En particulier, une quantité en excès de triéthylamine (1,70 mL, 12,1 mmol, 12 équiv.) est ajoutée directement au milieu réactionnel et l'agent de protection chlorure de benzoyle (10,1 mmol, 10 équiv.) est ajouté. Le mélange réactionnel est mélangé pendant 2 jours à température ambiante. Pour la protection avec TSI, une quantité suffisante de triéthylamine (140,9 µL, 1,01 mmol, 1 équiv.) est ajouté au milieu réactionnel seulement pour neutraliser MSA. Après, TSI (1,543 mL, 10,1 mmol, 10 équiv.) est ajouté et le mélange réactionnel est mélangé pendant 2 jours à température ambiante.

Après protection des fonctions hydroxyles des copolymères, 20 mL de méthanol sont ajoutés dans le mélange réactionnel sous forte agitation pendant 4 heures pour consommer tous les agents de protection en excès. Environ 300 mL de méthanol sont ensuite versés dans le mélange réactionnel sous forte agitation pour précipiter le polymère et retirer le solvant et tous les produits secondaires. Après deux heures sous agitation, le PTMC, obtenu sous la forme d'une gomme blanche, dont les fonctions hydroxyles sont protégées par le chlorure de benzoyle ou l'isocyanate de p-toluènesulfonyle, noté respectivement « G10PPA-BC » ou « G10PPA-TSI », est lavé plusieurs fois avec du méthanol pendant 24 heures. Les G10PPA-BC et G10PPA-TSI sont ensuite séchés dans un four à 60 °C pendant 24 heures, puis sous vide à 80 °C pendant 48 heures. La pureté du produit final est vérifiée avec $^1H$ RMN; aucune trace du catalyseur et des produits secondaires n'est visible sur le spectre obtenu.

Le même protocole de synthèse ci-dessus est utilisé pour la synthèse d'un copolymère PTMC-PCL « non-protégé » de masse moléculaire théorique d'environ 50 000 $g.mol^{-1}$, noté « G50PPA », en mettant en œuvre les quantités suivantes de réactifs : TMC (5,702 g ; 55,85 mmol, 279,85 équivalents), CL (4,250 g, 37,23 mmol, 186,56 équiv.), PPA (26,9 µL, 0,20 mmol, 1 équiv.) et MSA (13,0 µL, 0,20 mmol, 1 équiv.). Le temps de réaction est augmenté à 48 heures pour atteindre une conversion de monomères élevée.

Le même protocole de synthèse ci-dessus est utilisé pour la synthèse de copolymères PTMC-PCL « protégé » de masse moléculaire théorique d'environ 50 000 $g.mol^{-1}$, notés « G50PPA-BC » ou « G50PPA-TSI », dont les fonctions hydroxyles sont respectivement protégées avec le chlorure de benzoyle ou l'isocyanate de p-toluènesulfonyle.

Le schéma réactionnel pour la synthèse des copolymères PTMC-PCL « non-protégés », initiée par le PPA est représenté ci-dessous.

[Chem 15]

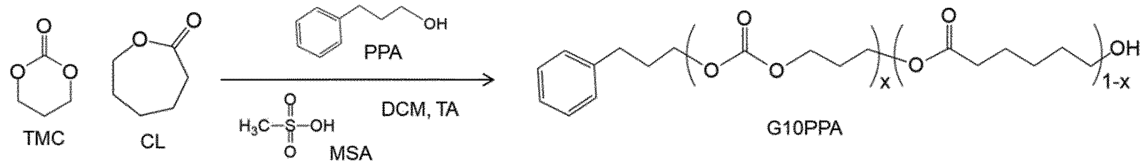


Le schéma réactionnel pour la synthèse des copolymères PTMC-PCL « protégés », initiée par PPA est représenté ci-dessous.

[Chem 16]

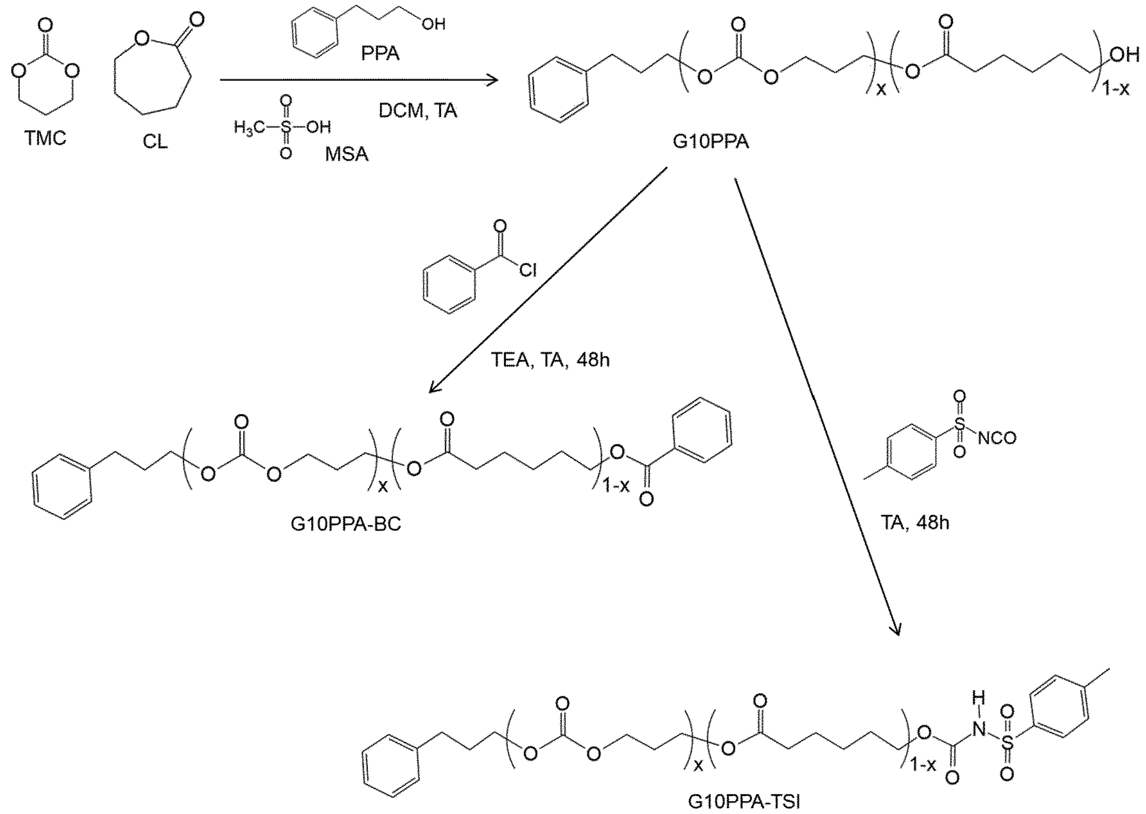


## 2.2. Synthèse du copolymère PTMC-PCL « non-protégé » et « protégé » mettant en œuvre l'acide méthane sulfonique comme catalyseur et initié par un diol

Le protocole suivant est suivi pour la synthèse par ROP, mettant en œuvre le catalyseur MSA et initiée par un diol (EG), de PTMC-PLC, de masse moléculaire théorique de 10 000 g.mol$^{-1}$, présentant des fonctions hydroxyles en bout de chaine non protégées (PTMC-PCL dit « non protégé ») et des PTMC-PCL dont les fonctions hydroxyles sont protégées par réaction avec différents agents de protection (PTMC-PCL dit « protégés »).

Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon.

Ensuite, du DCM (20 mL) est ajouté pour dissoudre le TMC. La concentration en monomères est d'environ 5 M.

Une fois le TMC complément dissous, l'initiateur EG (56,1 µL, 1,01 mmol, 1 équiv.) et le catalyseur MSA (65,5 µL, 1,01 mmol, 1 équiv.) sont introduits directement dans le milieu réactionnel. Le ratio molaire initiateur/catalyseur est [PPA]/[MSA] de 1/1. Le mélange réactionnel est mélangé pendant 24-48 heures à température ambiante.

Ensuite, la même procédure que celle décrite précédemment pour la synthèse du G10PPA « non-protégé » est appliquée pour obtenir un copolymère « non-protégé », noté « G10EG ».

Pour la synthèse du G10EG « protégé », le même protocole que celui décrit précédemment pour la synthèse du G10PPA « protégé » a été utilisé, mais la quantité de certains réactifs est doublée car le polymère est terminé par deux fonctions hydroxyles en bout de chaîne. En particulier, pour la protection avec le chlorure de benzoyle (BC), une quantité en excès de triéthylamine (3,40 mL, 24,2 mmol, 24 équiv.) est ajoutée directement au milieu réactionnel et BC (20,2 mmol, 20 équiv.) est ajouté. Le mélange réactionnel est mélangé pendant 2 jours à température ambiante. Pour la protection avec TSI, une quantité suffisante de triéthylamine (140,9 µL, 1,01 mmol, 1 équiv.) est ajoutée au milieu réactionnel seulement pour neutraliser MSA. Après, TSI (3.086 mL, 20,2 mmol, 20 équiv.) est ajouté et le mélange réactionnel est mélangé pendant 2 jours à température ambiante.

Après protection des fonctions hydroxyles des copolymères, 20 mL de méthanol sont ajoutés dans le mélange réactionnel sous forte agitation pendant 4 heures pour consommer tous les agents de protection en excès. Environ 300 mL de méthanol sont ensuite versés dans le mélange réactionnel sous forte agitation pour précipiter le polymère et retirer le solvant et tous les produits secondaires. Après deux heures sous agitation, le PTMC, obtenu sous la forme d'une gomme blanche, dont les fonctions hydroxyles sont protégées par le chlorure de benzoyle ou l'isocyanate de p-toluènesulfonyle,

noté respectivement « G10EG-BC » ou « G10EG-TSI », est lavé plusieurs fois avec du méthanol pendant 24 heures. G10EG-BC et G10EG-TSI sont ensuite séchés dans un four à 60 °C pendant 24 heures, puis sous vide à 80 °C pendant 48 heures. La pureté du produit final est vérifiée avec $^1H$ RMN, aucune trace du catalyseur et des produits secondaires n'est visible sur le spectre obtenu.

Le même protocole de synthèse est utilisé pour la synthèse de copolymères, de masse moléculaire théorique d'environ 50 000 g.mol$^{-1}$, initiée par l'éthylène glycol et dont les fonctions hydroxyles ne sont pas protégées (noté « G50EG »), ou sont protégées avec le chlorure de benzoyle ou l'isocyanate de p-toluènesulfonyle, respectivement (notés « G50EG-BC » et « G50EG-TSI »).

Le schéma réactionnel pour la synthèse du PTMC « non-protégé », initiée par l'éthylène glycol est représenté ci-dessous.

[Chem 17]

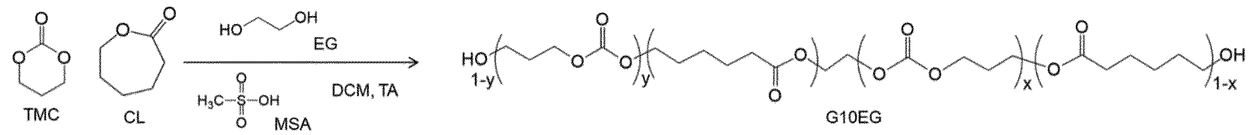


Le schéma réactionnel pour la synthèse du PTMC10MSA-EG « protégé » est représenté ci- dessous.

[Chem 18]

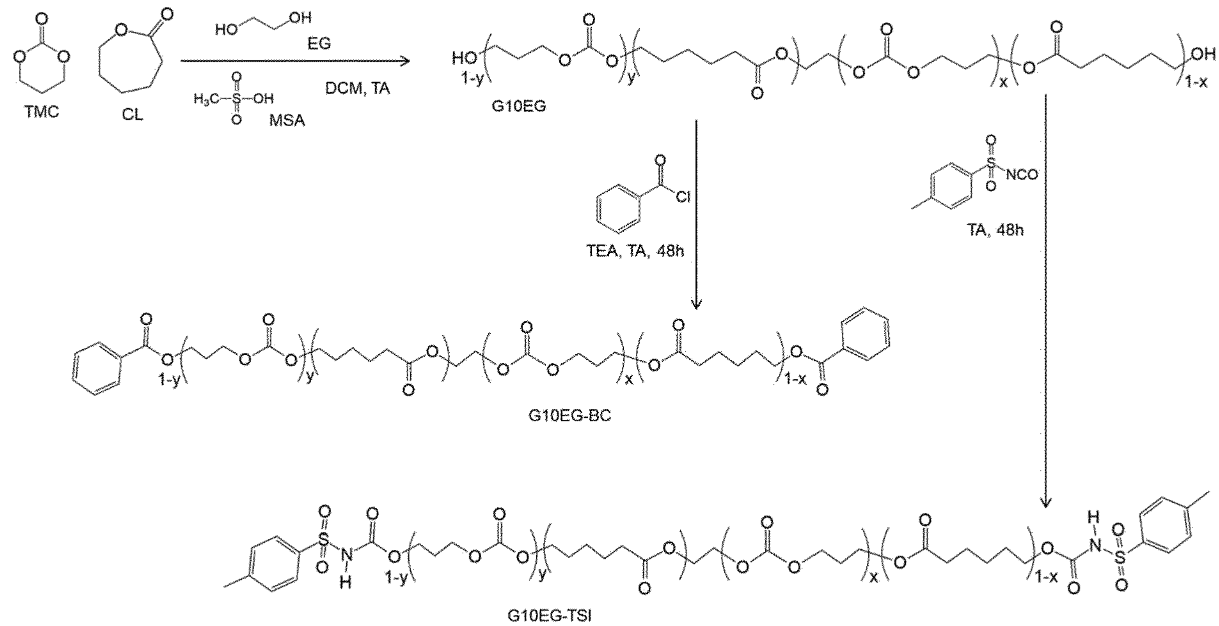


## 2.3. Synthèse du copolymère PTMC-PCL « non-protégé » et « protégé » mettant en œuvre l'acide méthane sulfonique comme catalyseur et en l'absence d'initiateur

Le protocole suivant est suivi pour la synthèse par ROP, mettant en œuvre le catalyseur MSA et sans initiateur, de PTMC-PLC, de masse moléculaire théorique de 10 000 g.mol$^{-1}$, présentant des fonctions hydroxyles en bout de chaine non protégées (PTMC-PCL dit « non protégé ») et des PTMC-PCL dont les fonctions hydroxyles sont protégées par réaction avec différents agents de protection (PTMC-PCL dit « protégés »).

Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon.

Ensuite, du DCM (20 mL) est ajouté pour dissoudre le TMC. La concentration en monomères est d'environ 5 M.

Une fois le TMC complément dissous, le catalyseur MSA (65,5 µL, 1,01 mmol, 1 équiv.) est introduit directement dans le milieu réactionnel. Le ratio molaire initiateur/catalyseur est [PPA]/[MSA] de 1/1. Le mélange réactionnel est mélangé pendant 24-48 heures à température ambiante.

Ensuite, le même protocole que celui décrit précédemment pour la synthèse du G10EG « non-protégé » est appliquée pour obtenir le copolymère « non-protégé », noté « GxMSA ».

Pour la synthèse du GxMSA « protégé », le même protocole que celui décrit précédemment pour la synthèse du G10EG « protégé » a été utilisé, puisque le polymère est terminé par deux fonctions hydroxyles au bout de chaîne, pour obtenir les copolymères dont les fonctions hydroxyles sont protégées par le chlorure de benzoyle ou l'isocyanate de p-toluènesulfonyle, nommés « GxMSA-BC » ou « GxMSA-TSI » respectivement.

Le schéma réactionnel pour la synthèse du PTMC-PCL sans amorceur, « non-protégé » est représenté ci-dessous.

[Chem 19]

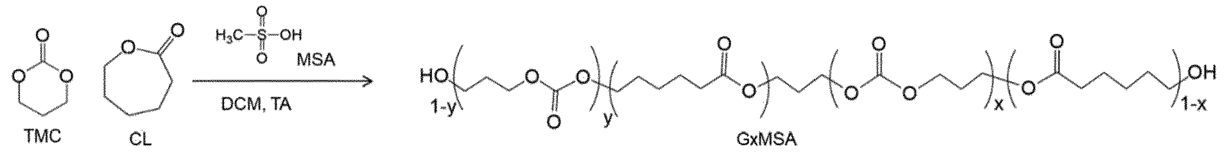

TMC CL GxMSA

Le schéma réactionnel pour la synthèse des PTMC-PCL sans amorceur, « protégés » est représenté ci-dessous.

[Chem 20]

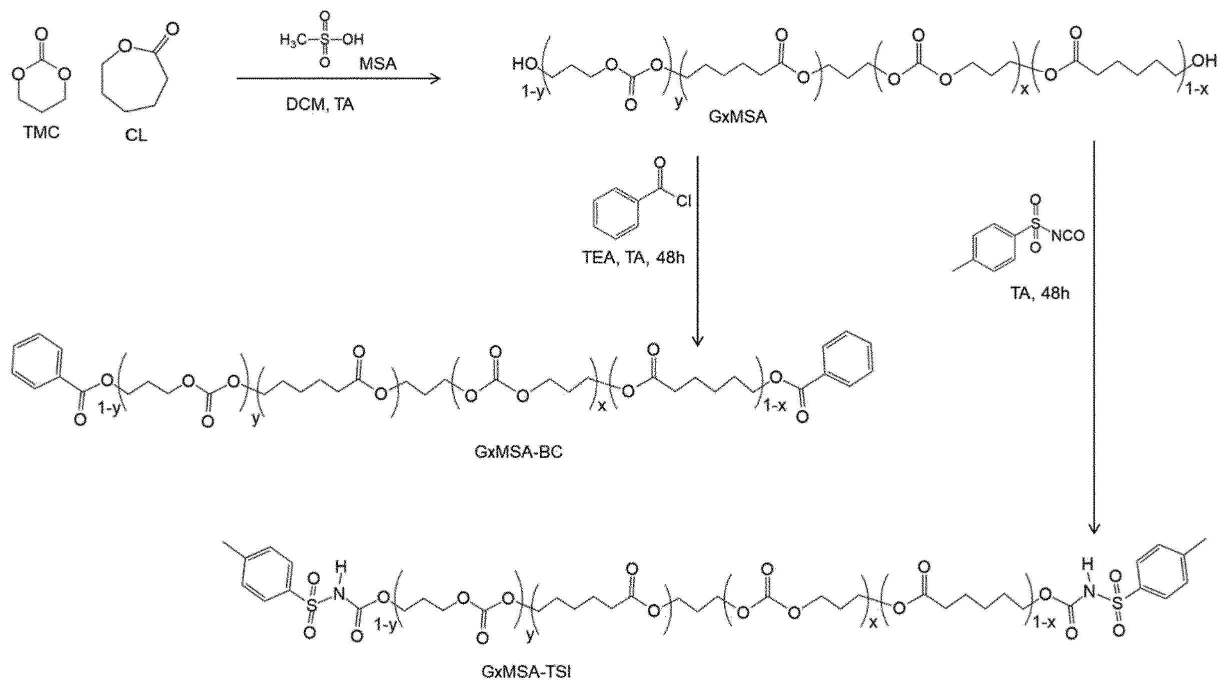

TMC CL GxMSA GxMSA-BC GxMSA-TSI

## 2.4. Synthèse du copolymère PTMC-PCL mettant en œuvre $Sn(Oct)_2$ comme catalyseur *(comparatif)*

Le protocole suivant est suivi pour la synthèse par ROP, mettant en œuvre le catalyseur $Sn(Oct)_2$ et initiée par un mono-alcool (le PPA), du copolymère PTMC-PCL, de masse moléculaire théorique de 10 000 g.mol$^{-1}$.

Les monomères TMC (6,037 g, 59,14 mmol, 55,36 équivalent) et CL (CL, 4,500 g, 39, 43 mmol, 36,91 équiv.), l'initiateur PPA (144,0 µL, 1,07 mmol, 1 équiv.) et 1 M de solution de catalyseur $Sn(Oct)_2$ dissous dans du toluène anhydre (19,7 µL, 2,0.10$^{-2}$ mmol, 0,02 équiv.) sont introduits dans un ballon à fond rond à col unique de 100 mL dans une boîte à gants remplie avec de l'argon. Le ratio molaire monomères/catalyseur est [TMC + CL]/[$Sn(Oct)_2$] est d'environ 5000/1. Le ballon est fermé, sorti à l'extérieur et chauffé à 130 °C à l'aide d'un bain d'huile sous forte agitation pendant 24 heures.

Puis le mélange réactionnel est refroidi à température ambiante et une quantité minimale de DCM est ajoutée pour dissoudre le polymère PTMC. Ensuite, la solution de copolymère est versée dans 300 mL de méthanol froid sous forte agitation pour précipiter le polymère.

La masse de polymère, se présentant sous la forme d'une gomme blanche, est lavé plusieurs fois avec du méthanol, puis séchée dans un four à 60°C suivi d'un séchage sous vide à 80°C pendant 48 heures pour obtenir le produit

final, noté « R10-PPA ».

Le même protocole de synthèse est suivi pour la synthèse du copolymère PTMC60-PCL40 de masse moléculaire théorique de 50 000 $g.mol^{-1}$, noté « R50-PPA », en mettant en œuvre les quantités suivantes de réactifs : TMC (6,037 g, 59,14 mmol ; 279,85 équivalents), CL (4,500 g, 39,43 mmol, 186,56 équiv.), PPA (28,5 µL, 0,21 mmol, 1 équiv.) et une solution 1 M de catalyseur $Sn(Oct)_2$ (19,7 µL, $2,0.10^{-2}$ mmol, 0,093 équiv.). Le ratio molaire monomères/catalyseur [TMC + CL]/[$Sn(Oct)_2$] est d'environ 5000/1. Le temps de réaction est augmenté à 48 heures pour atteindre une conversion de monomères élevée.

Le schéma réactionnel pour la synthèse du copolymère PTMC-PCL en utilisant le catalyseur $Sn(Oct)_2$ initié par PPA est représenté ci-dessous.

[Chem 21]

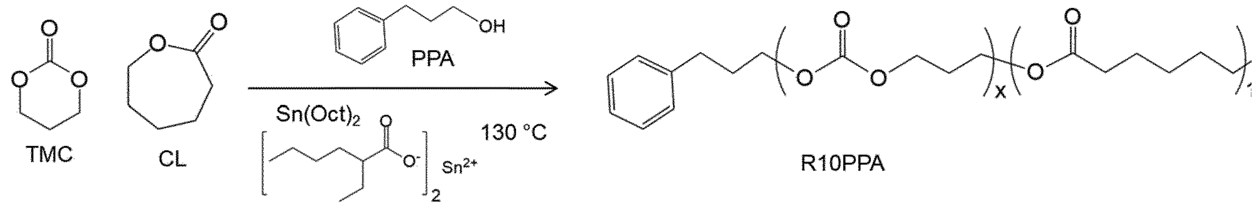


Résultats

Les résultats des analyses des copolymères PTMC-PCL obtenus sont présentés dans le tableau 2 suivant.

[Tableau 2]

| Echantillon | Rendement (%)[a] | [TMC]/[CL][b] | $M_{n\text{-}SEC}$(Da)[c] | $M_{w\text{-}SEC}$(Da)[c] | PDI[d] |
|---|---|---|---|---|---|
| R10-PPA (*hors invention*) | 92±2 | 1,4 | 15600±1500 | 23800±2000 | 1,53±0,03 |
| R50-PPA (*hors invention*) | 92±2 | 1,4 | 31300±2500 | 49200±2500 | 1,57±0,03 |
| G10-PPA | 92±2 | 1,5 | 15500±1000 | 20400±1500 | 1,30±0,02 |
| G50-PPA | 92±2 | 1,4 | 24200±1500 | 30600±2500 | 1,27±0,02 |

[a]Le rendement de conversion est calculé à partir de la masse du copolymère PTMC-PCL obtenu ($m_{PTMC\text{-}PCL}$) et des masses en monomères et en initiateur PPA de départ, selon la formule

[Math 2]

$$\text{rendement }(\%) = m_{PTMC\text{-}PCL} \times 100/(m_{TMC} + m_{CL} + m_{PPA})$$

[b]Le ratio molaire expérimental entre les monomères TMC et CL, [TMC]/[CL], est évalué par intégration des pics numérotés 7 et 11 sur les spectres d'analyse RMN $^1H$ représentés en figure 3, comme exposé dans la publication [10] ;

[c]La masse moléculaire moyenne est mesurée par SEC ;

[d]Indice de polydispersité $PDI=M_w/M_n$.

La voie de synthèse mettant en œuvre le catalyseur MSA a permis d'obtenir des coplymères PTMC-PCL linéaires de deux poids moléculaires distincts avec une conversion des monomères élevée et un grand contrôle de la polymérisation (indice de polydispersité plus proche de 1).

Les analyses RMN $^1H$ des copolymères PTMC60-PCL40 (d'environ 10 000 g.mol$^{-1}$) synthétisés par ROP avec le catalyseur MSA, initiée par PPA (G10PPA) (graphe a) et avec le catalyseur $Sn(Oct)_2$ initié par PPA (R10PPA) (graphe b) sont représentés en figure 5. Un petit pic à 3,43 ppm (figure 5(b)) peut également être observé sur le spectre RMN $^1H$ de l'échantillon R10PPA, pouvant être attribué à la formation de liaison éther $-CH_2-O-CH_2-$ du fait de la dégradation thermique du polymère à haute température en présence du $Sn(Oct)_2$ [11]. Aucune trace de liaison éther n'est en revanche observée sur le spectre RMN $^1H$ du copolymère G10PPA selon l'invention (figure 5(a)), en accord avec les résultats déjà observés pour les homopolymères de PTMC. Les résultats RMN montrent ainsi que la polymérisation mettant en œuvre le catalyseur MSA conduit à des copolymères présentant moins de défaut dans leur structure chimique que ceux résultant d'une synthèse avec le catalyseur $Sn(Oct)_2$.

Les analyses des spectres RMN $^1H$ des copolymères PTMC60-PCL40 (10 000 g.mol$^{-1}$) synthétisés à l'aide du catalyseur MSA et de l'initiateur PPA, « protégés » par le chlorure de benzoyle (BC) (G10PPA-BC) ou l'isocyanate de p-toluènesulfonyle (TSI) (G10PPA-TSI) sont représentés en figure 6.

L'apparition de nouveaux pics correspondant aux agents protecteurs dans les spectres RMN $^1H$ des PTMC protégées révèle que les protections ont été réalisées avec succès en utilisant du chlorure de benzoyle et de l'isocyanate de p-toluènesulfonyle. En particulier, trois nouveaux pics, qui apparaissent à 8,03, 7,56 et 7,43 ppm (pics 13, 14 et 15) sur la figure 6(a), sont attribués aux trois protons sur le cycle aromatique du chlorure de benzoyle.

De même, deux nouveaux pics apparaissant à 7,89 et 7,34 ppm (pics 14 et 15 sur la figure 6(b)) correspondent aux deux protons sur le cycle aromatique du p-toluènesulfonylisocyanate. Un très petit pic apparaissant à 8,16 ppm (pic 13 sur la figure 6(b)) dérive du proton du groupe uréthane du produit de couplage. Enfin, un singulet apparaissant à 2,44 ppm dérive du groupe méthyle fixé sur le cycle aromatique de l'agent TSI. Les spectres RMN $^1H$ révèlent que les réactions de couplage ont été réalisées avec succès.

## Exemple 3

### 3.1. Préparation des électrolytes polymériques solides à base des polymères PTMC et copolymères PTMC-PCL

Protocole de préparation des électrolytes à base de P10PPA avec [CO]/[$Li^+$] de 15

Dans une boîte à gants remplie d'argon, 2000 g de PTMC, le P10PPA synthétisé comme décrit en exemple 1, sont introduits dans un récipient en verre équipé avec un barreau magnétique et 0,370 g de LiTFSI est ajouté. Ensuite, 10 mL d'acétone anhydre sont ajoutés, et le mélange est agité pendant au moins 4 heures pour obtenir une solution homogène. La solution est séchée à 80 °C pendant 72 heures sous vide pour obtenir l'électrolyte polymérique, noté P10PPA-TFSI15. Le ratio molaire entre les groupes carbonyle du polymère par rapport au sel de lithium, noté [CO]/[$Li^+$] est de 15.

D'autres électrolytes à base de P10PPA sont préparés avec des ratios [CO]/[$Li^+$] de 0,5 ; 1 ; 5 ; 10 et 30.

Le même protocole est suivi pour la préparation de tous les électrolytes à base de PTMC « non-protégé » et « protégé ».

Pour étudier l'effet du contre anion sur les propriétés des électrolytes, d'autres électrolytes polymériques solides sont également préparés avec des ratios [CO]/[$Li^+$] de 10 et 15, *via* le même protocole, en mettant en œuvre comme sels de lithium, LiFSI et LiTDI.

Protocole de préparation des électrolytes à base du copolymère G10PPA avec [CO]/[$Li^+$] de

Dans une boîte à gants remplie d'argon, 2000 g de copolymère G10PPA, synthétisé en exemple 2, sont introduits dans un récipient en verre équipé d'un barreau magnétique et 0,353 g de LiTFSI est ajouté. Ensuite, 10 mL d'acétone anhydre sont ajoutés, et le mélange est agité pendant au moins 4 heures pour obtenir une solution homogène. La solution est séchée à 80 °C pendant 72 heures sous vide pour obtenir l'électrolyte polymérique, noté G10PPA-TFSI15.

D'autres électrolytes à base du copolymère G10PPA sont préparés avec des ratios [CO]/[$Li^+$] de 0,5 ; 1 ; 5 ; 10 et 30.

Le même protocole est suivi pour la préparation d'électrolytes à base des autres copolymères « non-protégé » et « protégé ».

### 3.2. Evaluation des électrolytes polymériques solides

*Méthodes de caractérisation des électrolytes*

Conductivité ionique : La conductivité ionique est déterminée par spectroscopie d'impédance électrochimique (EIS pour « Electrochemical Impedance Spectroscopy » en terminologie anglo-saxonne), en mettant en œuvre un analyseur d'impédance VMP3 (BioLogic) pour une plage de températures allant de -10°C à 80°C par paliers de 10°C. Les électrolytes sont montés dans des piles bouton sous une boite à gants remplie d'argon, entre deux électrodes de blocage en acier inoxydable. Un séparateur en PTFE (16 mm de diamètre et 60 μm d'épaisseur) comprenant un trou de 6 mm de diamètre est utilisé pour fixer la taille et la forme de l'électrolyte. Les cellules, préconditionnées à 55 °C dans un four pendant 16 heures, sont stabilisées à une température donnée pendant 2 heures avant chaque mesure, et la température est contrôlée à l'aide d'une chambre climatique (Vötsch VC4018). Les mesures en chauffage et en refroidissement sont effectuées. Les spectres d'impédance sont enregistrés dans une plage de fréquences allant de 1 Hz à 1 MHz. Les deux modes PEIS (« Potentio Electrochemical Impedance Spectroscopy », à tension appliquée contrôlée) et GEIS (« Galvano Electrochemical Impedance Spectroscopy », à courant appliqué contrôlé) sont utilisés avec une amplitude en tension ou en courant appliqué de 0,02 V ou 30 nA respectivement.

La résistance de la membrane d'électrolyte ($R_{bulk}$) est déterminée *via* l'analyse et l'interprétation du tracé de Nyquist à partir des données obtenues avec le logiciel EC-Lab. La conductivité est calculée en utilisant l'équation suivante :

[Math 3]

$$\sigma = \frac{L}{R \times S}$$

avec L représentant l'épaisseur de la membrane d'électrolyte (cm), S est la superficie de l'électrode ($cm^2$) et R est la résistance de volume (« bulk resistance ») de la membrane (ohm).

Energie d'activation : L'énergie d'activation ($E_a$) est déterminée par analyse des courbes de conductivité avec l'équation VTF (Volger-Tammann-Fulcher) [24] en utilisation un outil Solver.

[Math 4]

$$\sigma = Ae^{\frac{-E_a}{R(T-T_0)}}$$

avec $\sigma$ représentant la conductivité ionique ($S.cm^{-1}$), A= $\sigma_0 T^{-0,5}$ est le facteur pré-exponentiel dépendant de la température ($S.cm^{-1}$), $E_a$ est l'énergie d'activation ($J.mol^{-1}$), R=8,314 $J.\ mol^{-1}.K^{-1}$ est la constante universelle des gaz parfaits ; $T_0$=$T_g$-50 et T est la température en Kelvin (K).

L'extrapolation des courbes suivant l'équation VTF a été réalisé seulement sur les courbes de refroidissement, et les températures de transition vitreuse (Tg) du PTMC et du copolymère fixées à -27°C ([25], [26]) et à -35°C ([5]) respectivement.

Nombre de transport des ions $Li^+$: Le nombre de transport des ions $Li^+$ ($t_+$) est mesuré à 60°C par EIS *via* un analyseur d'impédance VMP3 (BioLogic) sur des cellules boutons Li/électrolyte/Li symétriques en utilisant la méthode connue de Bruce et Vincent [9]. En particulier, $t_+$ est calculé en utilisation l'équation suivante.

[Math 5]

$$t_+ = \frac{I_{ss}(\Delta V - I_0 R_0)}{I_0(\Delta V - I_{ss} R_{ss})}$$

avec $\Delta$V représentant le potentiel appliqué à travers la cellule, $I_0$ et $I_{SS}$ sont les courants initial et de repos tandis que $R_0$ et $R_{SS}$ sont les résistances initiale et de repos des couches de stabilisation.

Stabilité électrochimique : La stabilité électrochimique des membranes d'électrolyte est évaluée par voltampérométrie cyclique (CV) dans une pile bouton comprenant l'électrolyte intercalé entre une feuille de lithium métallique comme contre-électrode et une feuille de cuivre (Cu) ou d'aluminium revêtue de carbone (Al@C) comme électrode de travail. Un séparateur PTFE comme décrit précédemment est utilisé pour fixer la taille et la forme de l'électrolyte. Pour déterminer la stabilité anodique, des cellules Li/SPE/Al@C ont été utilisées. Les cellules ont été montées dans une boite à

gants remplie d'argon, et soumises à des mesures en voltampérométrie cyclique en utilisant un VMP3 (BioLogic) avec une vitesse de balayage de 0,1 $mV.s^{-1}$ de 2,8 à 4,5 V et répéter jusqu'à 10 cycles. Pour déterminer la stabilité cathodique, des cellules Li/SPE/Cu ont été soumises à des mesures CV en appliquant une vitesse de balayage de 0,1 $mV.s^{-1}$ de 2,0 jusqu'à -0,5 V et répéter jusqu'à 10 cycles.

La technique de titration intermittente potentiostatique (dits encore PITT pour l'acronyme anglo-saxon « Potentiostatic Intermittent Titration Technique ») a également été utilisée pour évaluer la stabilité électrochimique des électrolytes. Pour déterminer la stabilité à l'oxydation, les cellules Li/SPE/Al@C ont été polarisées (chronoampérométrie) de 3,0 à 5,0 V par rapport à $Li/Li^+$ avec des pas de potentiel appliqués de 0,05 V pendant 30 minutes par intervalle. Pour déterminer la stabilité réductrice, les cellules Li/SPE/Cu ont été polarisées (chronoampérométrie) de 1,5 à -0,5 V par rapport au $Li/Li^+$ avec des pas de potentiel appliqués de -0,05 V pendant 30 minutes par intervalle.

Résultats

Les performances, en termes de conductivité ionique ($\sigma$), de nombre de transport des ions $Li^+$ ($t_+$), de conductivité de l'ion $Li^+$ et d'énergie d'activation ($E_a$), des différents électrolytes polymériques à base de PTMC et PTMC-PCL synthétisés en utilisant différents catalyseurs et différents sels de lithium, sont rassemblées dans le tableau 3 suivant.

[Tableau 3]

| Echantillon | $\sigma^{a,b}$ (S $cm^{-1}$) | $t_+^b$ | $Li^+$ $\sigma^c$ (S $cm^{-1}$) | $E_a$ (kJ $mol^{-1}$) |
|---|---|---|---|---|
| S10PPA-TFSI15 *(hors invention)* | $1,81 \times 10^{-5}$ | $0,70 \pm 0,02$ | $1,27 \times 10^{-5}$ | 11,25 |
| P10PPA-TFSI15 | $6,23 \times 10^{-6}$ | $0,74 \pm 0,02$ | $4,61 \times 10^{-6}$ | 12,83 |
| P10PPA-FSI15 | $4,93 \times 10^{-6}$ | $0.70 \pm 0,03$ | $3,45 \times 10^{-6}$ | 12,96 |
| P10PPA-TDI15 | $3,54 \times 10^{-6}$ | $0,59 \pm 0,06$ | $2,09 \times 10^{-6}$ | 12,31 |
| P10PPA-TFSI0.5 | $1,71 \times 10^{-5}$ | $0,71 \pm 0,03$ | $1,21 \times 10^{-5}$ | 10,44 |
| P10FPA-TFSI1 | $1,39 \times 10^{-5}$ | $0,66 \pm 0,03$ | $9,19 \times 10^{-6}$ | 11,92 |
| P10PPA-TFSI5 | $6,67 \times 10^{-6}$ | $0,65 \pm 0,03$ | $4,34 \times 10^{-6}$ | 12,93 |
| P10PPA-TFSI10 | $8,04 \times 10^{-6}$ | $0,70 \pm 0,03$ | $5,63 \times 10^{-6}$ | 12,31 |
| P10PPA-TFSI30 | $3,83 \times 10^{-6}$ | $0,73 \pm 0,03$ | $2,79 \times 10^{-6}$ | 11,19 |
| P50PPA-TFSI15 | $4,50 \times 10^{-6}$ | $0,74 \pm 0,03$ | $3,33 \times 10^{-6}$ | 12,94 |
| | | | | |
| R10PPA-TFSI15 *(hors invention)* | $2,55 \times 10^{-5}$ | $0,67 \pm 0,03$ | $1,71 \times 10^{-5}$ | 9,12 |
| G10PPA-TFSI15 | $3,73 \times 10^{-5}$ | $0,66 \pm 0,02$ | $2,46 \times 10^{-5}$ | 9,40 |
| G50PPA-TFSI15 | $2,90 \times 10^{-5}$ | $0,67 \pm 0,03$ | $1,95 \times 10^{-5}$ | 8,42 |
| [a]valeurs ajustées. [b]mesuré à 60 °C. [c]conductivité des ions $Li^+$ obtenue en normalisant la conductivité ionique totale avec le nombre de transport, $t_+$, des ions $Li^+$ | | | | |

La figure 7 représente l'évolution de la conductivité ionique en fonction de la température, obtenues pour les électrolytes polymériques solides à base de PTMC, synthétisés en exemple 1, à l'aide du catalyseur MSA (P10PPA-TFSI15) et à l'aide du catalyseur $Sn(Oct)_2$ (S10PPA-TFSI15). Aucune chute de température n'est observée pour les électrolytes polymériques solides à base de PTMC à température réduite à la différence des électrolytes à base de PEO, ce qui est probablement lié à la morphologie hautement amorphe des premiers [22]. Ainsi, toutes les courbes de conductivité suivent le comportement de Vogel-Tamman-Fulcher (VTF) [23], même jusqu'à -10°C.

Concernant l'effet de la méthode de synthèse sur les propriétés de transport du polymère obtenu, les SPE basés sur le PTMC synthétisé avec le catalyseur $Sn(Oct)_2$ (S10PPA-TFSI15) montrent une conductivité plus élevée que celle du SPE basé sur le PTMC synthétisé utilisant le catalyseur MSA (P10PPA-TFSI15) bien que deux d'entre eux aient un nombre $t_+$ similaire. Ce comportement dériverait du PDI beaucoup plus faible du polymère P10PPA. La valeur PDI plus élevée signifie la plus faible homogénéité du Mn, ce qui signifie qu'il y a plus de molécules de polymère avec un Mn beaucoup plus petit (également appelé oligomère) dans le polymère S10PPA. Ces molécules de polymère de faible poids moléculaire jouent le rôle de plastifiant, ce qui augmente la mobilité segmentaire des chaînes PTMC. Ainsi, la conductivité des électrolytes S10PPA-TFSI15 est moins dépendante de la température, qui a également été révélée par une énergie

d'activation plus faible.

La figure 8 représente l'évolution de la conductivité ionique en fonction de la température pour les électrolytes polymériques solides P10PPA-TFSI15, P10PPA-FSI15 et P10PPA-TDI15. Parmi les homopolymères P10PPA, à 60°C, la meilleure performance en termes de conductivité ionique est obtenue avec l'électrolyte mettant en œuvre le sel ionique LiTFSI (P10PPA-TFSI15). Également, à ratio similaire [CO]/[$Li^+$], l'électrolyte mettant en œuvre LiTDI montre une conductivité ionique la plus faible qui pourrait être lié à la dissociation de $Li^+$ de ce sel plus faible due à la formation de paires d'ions et des possibles agrégats plus larges ([12], [13]).

La contribution des porteurs de charge négative sur la conductivité ionique totale est un autre paramètre important qui est fréquemment évaluée *via* le nombre de transport des ions $Li^+$ (noté $t_+$) [14]. Etant donné que seul le transport des ions $Li^+$ contribue au processus de charge/décharge, une mobilité élevée de l'anion conduirait à un gradient de concentration en charge et à une polarisation de la cellule inversée qui impacterait la stabilité de cyclage à long terme [15].

Comme attendu, tous les électrolytes à base de PTMC montrent un nombre de transport d'ions $Li^+$, $t_+$, supérieur à 0,5 et donc bien plus élevé que celui obtenu avec la plupart des électrolytes à base de PEO (A titre d'exemple, $t_+$ pour un électrolyte polymérique PEO-TFSI est d'environ 0,1-0,3. ([17], [18]). La valeur élevée de $t_+$ des électrolytes polymériques solides à base de polycarbonates aliphatiques est liés au nombre de donneurs plus faibles des groupes de coordination carbonyle, ce qui améliore la capacité de dissociation et la dislocation dynamique des ions lithium [19].

L'électrolyte avec l'anion $TFSI^-$ montre un nombre de transport des ions $Li^+$, $t_+$, légèrement supérieur à celui obtenu avec l'anion $FSI^-$ (0,74 *versus* 0,72), ce qui est probablement lié à la taille supérieure des anions $TFSI^-$ qui diminue leur mobilité.

Les résultats en termes d'énergie d'activation $E_a$ obtenue comme décrit précédemment, montrent que tous les trois électrolytes ont des valeurs $E_a$ similaires.

La figure 9 représente l'évolution de la conductivité ionique en fonction de la température pour les électrolytes basés sur le PTMC synthétisé à l'aide du catalyseur MSA contenant différentes teneurs en LiTFSI, exprimées en rapport molaire [CO]/[$Li^+$]. A haute température supérieure à 30 °C, il semble que la conductivité ionique augmente avec la teneur en sel. La conductivité ionique augmente de manière significative lorsque le rapport [CO]/[$Li^+$] diminue à 1 et 0,5, ce qui correspond à la concentration en sel de 73,50 et 84,53% en poids.

La figure 10 représente la conductivité ionique mesurée à 60 °C des électrolytes à base de PTMC synthétisée à l'aide d'un catalyseur MSA en fonction de la concentration en LiTFSI. En exprimant la conductivité ionique mesurée à 60 °C en fonction de la concentration massique du LiTFSI, la figure 10 peut être divisé en deux régions. La première région dans laquelle la concentration en sel est inférieure à 50% en poids peut être considérée comme « sel-dans-polymère » tandis que la deuxième région dans laquelle la concentration en sel est supérieure à 50% en poids peut être considérée comme « polymère-dans-sel ». Dans la région « sel-dans-polymère », la conductivité la plus élevée a été obtenue à 21,72% en poids de LiTFSI ou le rapport [CO]/[$Li^+$] égal à 10. Elle serait due à la formation de paires d'ions qui augmente la mobilité des anions. Pour le système « sel-dans-polymère », il semble que la concentration en sel optimisée soit comprise entre 15 et 20% en poids. Dans la région «polymère-dans-sel», la conductivité ionique et le $t_+$ augmentent avec la concentration en sel.

La figure 11 représente l'évolution de la conductivité ionique en fonction de la température, obtenues pour les électrolytes polymériques solides à base de copolymère PTMC60-PCL40, synthétisés en exemple 2, à l'aide du catalyseur MSA (G10PPA-TFSI15) et à l'aide du catalyseur $Sn(Oct)_2$ (R10PPA-TFSI15). En comparaison avec les électrolytes PTMC-TFSI avec une masse moléculaire et une concentration en sel similaires, la conductivité ionique des électrolytes polymériques à base du copolymère PTMC-PCL (G10PPA) et du sel LiTFSI est significativement supérieure dans toute la gamme de températures (tableau 3, figure 11). L'écart des conductivités augmente lorsque la température diminue.

Ce comportement peut s'expliquer par la flexibilité des segments de chaînes polymériques plus élevée à basse température liée à la température de transition vitreuse Tg inférieure et à l'effet plastifiant plus élevé pour le copolymère PTMC-PCL en comparaison à l'homopolymère PTMC. Les courbes de conductivité de G10PPA-TFSI15 montrent un comportement VTF jusqu'à -10°C sans chute comme cela peut être visualisé sur les courbes de conductivité des électrolytes à base d'homopolymère PCL [27].

De plus, la conductivité de G10PPA-TFSI15 est moins dépendante de la température que celle de l'électrolyte P10PPA-TFSI15, comme cela ressort d'ailleurs de l'énergie d'activation beaucoup plus faible du premier (9,40 *versus* 12,83 $kJ.mol^{-1}$). Toutefois, le nombre de transport des ions $Li^+$, $t_+$, de l'électrolyte P10PPA-TFSI15 est légèrement inférieur à celui du G10PPA-TFSI15, i.e. 0,66 *versus* 0,74 respectivement.

Les fenêtres de stabilité électrochimique des membranes d'électrolyte sont déterminées à partir du premier balayage anodique et cathodique des mesures de voltampérométrie cyclique.

La figure 12 présente les courbes de voltampérométrie cyclique obtenues pour les électrolytes P10PPA-TFSI15 et S10PPA-TFSI15. Les résultats obtenus révèlent que la stabilité anodique du PTMC dépend fortement de la méthode de synthèse. En particulier, le PTMC synthétisé à l'aide du catalyseur MSA (P10PPA) est plus stable que le PTMC synthétisé

à l'aide d'un catalyseur $Sn(Oct)_2$ (S10PPA). La faible stabilité à l'oxydation du S10PPA est due au fait que le catalyseur $Sn(Oct)_2$ reste dans l'échantillon.

La figure 13 présente les courbes de voltampérométrie cyclique et PITT des électrolytes P10PPA-TFSI15, P10PPA-BC-TFSI15, et P10PPA-TSI-TFSI15. La figure 13 montre une grande amélioration de la stabilité électrochimique a été obtenue dans les électrolytes utilisant des PTMC dont les fonctions hydroxyles sont protégées par rapport à celle obtenue avec l'électrolyte à pas de PTMC non protégé. Les premiers balayages des mesures CV révèlent la plus grande stabilité des polymères protégés vis-à-vis de la réduction et de l'oxydation. Concernant l'effet de l'agent protecteur, les premiers scans anodiques réalisés sur les cellules Li/SPE/Al@C (figure 13(a)) montrent que le polymère protégé par le chlorure de benzoyle (P10PPA-BC) est moins stable à l'oxydation que celui protégé par le p-toluènesulfonyl isocyanate (P10PPA-TSI). Cependant, les résultats du PITT montrent que les deux électrolytes ont la même stabilité anodique (figure 13(b)). En revanche, les premiers balayages cathodiques réalisés sur des cellules Li/SPE/Cu montrent une stabilité bien plus élevée au contact de l'anode lithium métal de P10PPA-BC et P10PPA-TSI comme le révèle l'apparition du pic de stripping du lithium à environ 0,25 V contre $Li/Li^+$. Ainsi, l'efficacité coulombique enregistrée à partir du premier balayage cathodique de P10PPA-BC (27,33%) et P10PPA-TSI (20,38%) est significativement plus élevée que celle de P10PPA vierge (8,83%).

**Liste des documents cités**

[1] Tominaga et al., Polymer, 2010, 51 (19), 4295-4298 ;
[2] Wang et al., Coor. Chem. Rev. 2018, 372, 85-100;
[3] Kimura et al., Ionics, 2015, 21(3), 895-900 ;
[4] Brandell et al., Solid State Ionics 2014, 262, 738-742;
[5] Mindermark et al., Polymer 63 (2015) 91-98
[6] Mecerreyes et al., Electrochimica Acta 237 (2017) 259-266 ;
[7] Delcroix et al., Macromolecules 2010, 43 (21), 8828-8835 ;
[8] Gazeau-Bureau et al., Macromolecules 2008, 41(11), 3782-3784 ;
[9] Evans, Polymer, 1987, 28 (13), 2324-2328 ;
[10] Ling et al., Macromolecules 2004, 37 (3), 758-763
[11] Zhu et al., Polym. Degrad. Stabl. 2012, 97(9), 1589-1595
[12] Berhaut et al., RSC Adv. 2019, 9(8), 4589-4608 ;
[13] Berhaut et al., Electrochim. Acta 2019, 305, 534-546 ;
[14] Hallinan et al., Annu. Rev. Mater. Res. 2013, 43(1), 503-525 ;
[15] Sun et al., Macromolecules 2006, 39(1), 362-372 ;
[17] Borodin et al., J. Phys. Chem. B 2006, 110, 4971-4977 ;
[18] Gorecki et al., J. Phys. Condens. Matter 1995, 7 (34), 6823-6832 ;
[19] Xu et al., Solid Polymer Electrolytes, MRS Energy Sustain. 2020, 7, E2;
[22] Mindemark et al., Prog. Polym. Sci. 2018, 81, 114-143 ;
[23] Armand et al., Solid State Ionics 1994, 69 (3-4), 309-319;
[24] Diederichsen et al., Macromolecules 2017, 50 (10), 3831-3840;
[25] Liao et al., Eur. Polym. J. 2007, 43(10), 4289-4296 ;
[26] Schüller-Ravoo et al. Acta. Biomater. 2012, 8(10), 3576-3585 ;
[27] Lin et al., Polymer, 2011, 52(18), 4106-4113 ;
[29] Zhang et al., J. Electrochem. Soc. 2001, 148(12), A1341-A1345 ;
[30] Sun et al., J. Mater. Chem. A 2015, 3 (26), 13994-14000 ;
[31] Wang et al., J. Power Sources 2018, 397 (189), 157-161 ;
[32] Commarieu et al., J. Power Sources 2019, 436, 226852 ;
[33] Tominaga et al., Electrochim. Acta 2019, 302, 286-290.


**Revendications**

1. Procédé de préparation d'un électrolyte solide, en particulier de type électrolyte polymérique solide (SPE) ou électrolyte solide hybride (HSE), destiné à un système électrochimique, en particulier à une batterie rechargeable, comprenant au moins les étapes suivantes :

   (i) synthèse d'au moins un (co)polymère par (co)polymérisation par ouverture de cycle (ROP) d'au moins un

carbonate cyclique de cinq à huit chaînons et, éventuellement, d'au moins une lactone de cinq à huit chaînons, ladite réaction de (co)polymérisation étant catalysée par l'acide méthane sulfonique (MSA) et initiée, ou non, par au moins un composé comportant une ou plusieurs fonction(s) hydroxyle(s) ;
(ii) protection des fonctions hydroxyles en bout de chaîne du ou desdits (co)polymères ;
(iii) purification, préalablement ou ultérieurement à l'étape (ii) de protection des fonctions hydroxyles, du ou desdits (co)polymères, en particulier par précipitation dans un ou plusieurs solvants polaires ;
(iv) mélange, en présence ou non d'un milieu solvant, du ou desdits (co)polymères purifiés, obtenus à l'issue de l'étape (ii) ou (iii), avec au moins un sel de métal alcalin ou alcalino-terreux, en particulier un sel de lithium et, éventuellement, au moins une charge inorganique conductrice du ou des cations alcalin ou alcalino-terreux, en particulier une charge inorganique conductrice des ions lithium ; et
(v) formation, en particulier en surface d'un substrat, d'un électrolyte solide à partir dudit mélange.

**2.** Procédé selon la revendication précédente, dans lequel la réaction de ROP est opérée à une température inférieure ou égale à 40 °C, en particulier comprise entre 20 et 40 °C et plus particulièrement à température ambiante ; et/ou la durée de la réaction de ROP est inférieure ou égale à 72 heures, en particulier inférieure ou égale à 48 heures et plus particulièrement comprise entre 24 et 48 heures.

**3.** Procédé selon l'une quelconque des revendications précédentes, dans lequel la réaction de ROP est opérée en milieu solvant, en particulier dans un ou plusieurs solvant(s) apolaire(s) et aprotique(s), en particulier choisis parmi le toluène, le dichlorométhane, le tétrahydrofurane et leurs mélanges et plus particulièrement dans le dichlorométhane ; ou opérée en l'absence de solvant.

**4.** Procédé selon l'une quelconque des revendications précédentes, dans lequel le ou lesdits monomères et ledit catalyseur MSA sont mis en œuvre dans un rapport molaire monomère(s)/MSA compris entre 40/1 et 1000/1, en particulier entre 50/1 et 500/1.

**5.** Procédé selon l'une quelconque des revendications précédentes, dans lequel la (co)polymérisation en étape (i) est initiée par au moins un composé, dit initiateur, comportant une ou plusieurs fonction(s) hydroxyle(s), ledit initiateur étant plus particulièrement choisi parmi l'eau et/ou les alcools, en particulier les alcools présentant une à quatre fonction(s) hydroxyle(s) et plus particulièrement une ou deux fonctions hydroxyles, par exemple le 3-phényl-1-propanol ou l'éthylène glycol.

**6.** Procédé selon la revendication précédente, dans lequel le ou lesdits initiateurs sont mis en œuvre en une quantité déterminée, en particulier telle que le rapport molaire monomère(s)/initiateur(s) est compris entre 40/1 et 1000/1, en particulier entre 50/1 et 500/1 ; et/ou le rapport molaire initiateur(s)/ catalyseur MSA est compris entre 1/1 et 10/1, en particulier est d'environ 1/1.

**7.** Procédé selon l'une quelconque des revendications 1 à 4, dans lequel la (co)polymérisation en étape (i) est opérée en l'absence de composé initiateur de la ROP, en particulier en l'absence d'eau et de composé alcool.

**8.** Procédé selon l'une quelconque des revendications précédentes, dans lequel ledit (co)polymère synthétisé en étape (i) présente une masse molaire moyenne en nombre, Mn, mesurée par chromatographie par perméation de gel, inférieure ou égale à 200 000 $g.mol^{-1}$, en particulier comprise entre 5 000 et 100 000 $g.mol^{-1}$, et plus particulièrement entre 5 000 et 50 000 $g.mol^{-1}$ ; et/ou un indice de polydispersité, égal au rapport de la masse molaire moyenne en poids Mw, sur la masse molaire moyenne en nombre Mn, inférieur ou égal à 1,5, en particulier inférieur ou égal à 1,3 et plus particulièrement inférieur ou égal à 1,2, la masse molaire moyenne en poids étant déterminée par chromatographie d'exclusion stérique éventuellement couplée avec la diffusion de lumière statique.

**9.** Procédé selon l'une quelconque des revendications précédentes, dans lequel ledit (co)polymère en étape (i) est choisi parmi les polytriméthylène carbonate (PTMC) et les copolymères polytriméthylène carbonate-poly(ε-caprolactone) (PTMC-PCL), en particulier présentant un rapport molaire entre les unités monomériques dérivées du triméthylène carbonate et les unités monomériques dérivés de la caprolactone compris entre 90/10 et 10/90, notamment entre 80/20 et 20/80, en particulier entre 70/30 et 30/70 et plus particulièrement d'environ 60/40.

**10.** Procédé selon l'une quelconque des revendications précédentes, dans lequel l'étape (ii) est opérée par réaction de la ou desdites fonctions hydroxyles en bout de chaîne du ou desdits (co)polymère avec au moins un composé, dit agent de protection, en particulier choisi parmi les chlorures d'acyle, par exemple le chlorure de benzoyle, le chlorure d'acétyle ; les anhydrides d'acide par exemple l'anhydride acétique et les isocyanates comme l'isocyanate de p-toluènesulfonyle.

**11.** Procédé selon l'une quelconque des revendications précédentes, dans lequel ledit sel conducteur ionique mis en œuvre en étape (iv) est un sel de lithium, en particulier choisi parmi du bis(trifluorométhylsulfonyl)imide de lithium (LiTFSI), du lithium 4,5-dicyano-2-(trifluoromethyl)imidazole (LiTDI) ou du bis(fluorosulfonyl)amidure de lithium (LiFSI), de préférence du LiTFSI ou LiFSI.

**12.** Procédé selon l'une quelconque des revendications précédentes, dans lequel les quantités en (co)polymère(s) et en sel(s) de lithium sont ajustées de manière à ce que le ratio molaire entre les groupes carbonyle du (co)polymère par rapport au lithium, noté [CO]/[$Li^+$], soit compris entre 0,5 et 30, en particulier entre 5 et 15 et plus particulièrement d'environ 15.

**13.** Procédé selon l'une quelconque des revendications précédentes, dans lequel l'électrolyte solide en étape (v) du procédé de l'invention, en particulier sous la forme d'un film, est formé, en l'absence de solvant, à partir dudit mélange de l'étape (iv) à l'état fondu, en particulier par extrusion ; ou en présence d'un ou plusieurs solvant(s), par dépôt dudit mélange de l'étape (iv) en surface d'un substrat, par exemple par enduction, suivie de l'évaporation du ou desdits solvants.

**14.** Utilisation d'au moins un (co)polymère, obtenu par (co)polymérisation par ouverture de cycle (ROP) d'au moins un carbonate cyclique de cinq à huit chaînons et, éventuellement, d'au moins une lactone de cinq à huit chaînons, catalysée par l'acide méthane sulfonique, et initiée, ou non, par au moins un composé comportant une ou plusieurs fonction(s) hydroxyle(s),

protection des fonctions hydroxyles en bout de chaîne et purification, préalablement ou ultérieurement à la protection des fonctions hydroxyles, en particulier par précipitation dans un ou plusieurs solvants polaires ;
pour former, en combinaison avec au moins un sel de métal alcalin ou alcalino-terreux, un électrolyte solide, en particulier de type électrolyte polymérique solide (SPE) ou électrolyte solide hybride (HSE), destiné à un système électrochimique, en particulier à une batterie rechargeable, notamment une batterie au lithium.

**15.** Utilisation selon la revendication précédente, ledit (co)polymère étant obtenu dans les conditions décrites dans l'une quelconque des revendications 2 à 7.

**16.** Utilisation selon la revendication 14 ou 15, ledit (co)polymère présentant une masse moléculaire moyenne en nombre, mesurée par chromatographie par perméation de gel, allant de 5 000 à 50 000 $g.mol^{-1}$ et, en particulier, un indice de polydispersité (PDI) inférieur ou égal à 1,30, notamment inférieur ou égal à 1,20.

**17.** Electrolyte solide, en particulier de type électrolyte polymérique solide (SPE) ou électrolyte solide hybride (HSE), comprenant :

- au moins un (co)polymère, obtenu par (co)polymérisation par ouverture de cycle (ROP) d'au moins un carbonate cyclique de cinq à huit chaînons et, éventuellement, d'au moins une lactone de cinq à huit chaînons, catalysée par l'acide méthane sulfonique, et initiée, ou non, par au moins un composé comportant une ou plusieurs fonction(s) hydroxyle(s) ; protection des fonctions hydroxyles en bout de chaîne s ; et purification, préalablement ou ultérieurement à la protection des fonctions hydroxyles, en particulier par précipitation dans un ou plusieurs solvants polaires ;
- au moins un sel de métal alcalin ou alcalino-terreux, en particulier un sel de lithium ; et
- éventuellement au moins une charge inorganique conductrice du ou des cations alcalins ou alcalino-terreux, en particulier une charge inorganique conductrice des ions lithium.

**18.** Electrolyte solide selon la revendication précédente, ledit électrolyte solide étant obtenu par le procédé tel que défini selon l'une quelconque des revendications 1 à 13.

**19.** Système électrochimique comprenant un électrolyte solide tel que défini selon la revendication 17 ou 18, ledit système électrochimique étant plus particulièrement une batterie rechargeable, en particulier une batterie au lithium, notamment d'une batterie lithium-métal ou lithium-ion.

## Patentansprüche

1. Verfahren zur Herstellung eines Festelektrolyten, insbesondere vom Typ polymerer Festelektrolyt (SPE) oder hybrider Festelektrolyt (HSE), der für ein elektrochemisches System, insbesondere eine wiederaufladbare Batterie, bestimmt ist, umfassend mindestens die folgenden Schritte:

   (i) Synthese mindestens eines (Co)polymers durch ringöffnende (Co)polymerisation (ROP) mindestens eines fünf- bis achtgliedrigen zyklischen Carbonats und gegebenenfalls mindestens eines fünf- bis achtgliedrigen Lactons, wobei die (Co)polymerisationsreaktion durch Methansulfonsäure (MSA) katalysiert wird und durch mindestens eine Verbindung mit einer oder mehreren Hydroxylfunktion(en) eingeleitet wird;
   (ii) Schützen der Hydroxylfunktionen am Kettenende des oder der (Co)polymere;
   (iii) Reinigen, vor oder nach dem Schritt (ii) zum Schützen der Hydroxylfunktionen, des oder der (Co)polymere, insbesondere durch Ausfällen in einem oder mehreren polaren Lösungsmitteln;
   (iv) Mischen, in Gegenwart eines Lösungsmittelmediums oder nicht, des oder der am Ende des Schritts (ii) oder (iii) erhaltenen gereinigten (Co)polymere mit mindestens einem Alkali- oder Erdalkalimetallsalz, insbesondere einem Lithiumsalz, und gegebenenfalls mindestens einem das oder die Alkali- oder Erdalkali-Ionen leitenden anorganischen Einsatzmaterial, insbesondere einem Lithium-Ionen leitenden anorganischen Einsatzmaterial; und
   (v) Bilden, insbesondere an der Oberfläche eines Substrats, eines Festelektrolyten ausgehend von dem Gemisch.

2. Verfahren nach dem vorhergehenden Anspruch, wobei die ROP-Reaktion bei einer Temperatur kleiner oder gleich 40 °C, insbesondere zwischen 20 und 40 °C und ganz besonders bei Umgebungstemperatur durchgeführt wird; und/oder die Dauer der ROP-Reaktion kleiner oder gleich 72 Stunden, insbesondere kleiner oder gleich 48 Stunden und ganz besonders zwischen 24 und 48 Stunden beträgt.

3. Verfahren nach einem der vorhergehenden Ansprüche, wobei die ROP-Reaktion in einem Lösungsmittelmedium, insbesondere in einem oder mehreren apolaren und aprotischen Lösungsmittel (n), die insbesondere aus Toluol, Dichlormethan, Tetrahydrofuran und ihren Mischungen gewählt sind, und ganz besonders in Dichlormethan durchgeführt wird; oder ohne Lösungsmittel durchgeführt wird.

4. Verfahren nach einem der vorhergehenden Ansprüche, wobei das oder die Monomere und der Katalysator MSA in einem molaren Verhältnis Monomer(e)/MSA zwischen 40/1 und 1000/1, insbesondere zwischen 50/1 und 500/1, eingesetzt werden.

5. Verfahren nach einem der vorhergehenden Ansprüche, wobei die (Co)polymerisation im Schritt (i) durch mindestens eine Verbindung, Initiator genannt, mit einer oder mehreren Hydroxylfunktion(en) eingeleitet wird, wobei der Initiator ganz besonders aus Wasser und/oder den Alkoholen, insbesondere den Alkoholen, die eine bis vier Hydroxylfunktion(en) und ganz besonders eine oder zwei Hydroxylfunktionen aufweisen, zum Beispiel 3-Phenyl-1-propanol oder Ethylenglycol, gewählt ist.

6. Verfahren nach dem vorhergehenden Anspruch, wobei der oder die Initiatoren in einer bestimmten Menge eingesetzt werden, die insbesondere dergestalt ist, dass das molare Verhältnis Monomer(e)/Initiator(en) zwischen 40/1 und 1000/1, insbesondere zwischen 50/1 und 500/1, beträgt; und/oder das molare Verhältnis Initiator(en)/Katalysator MSA zwischen 1/1 und 10/1 beträgt, insbesondere etwa 1/1.

7. Verfahren nach einem der Ansprüche 1 bis 4, wobei die (Co)polymerisation im Schritt (i) ohne eine die ROP einleitende Verbindung, insbesondere ohne Wasser und Alkoholverbindung, durchgeführt wird.

8. Verfahren nach einem der vorhergehenden Ansprüche, wobei das im Schritt (i) synthetisierte (Co)polymer eine durch Gelpermeationschromatographie gemessene zahlenmittlere Molmasse, Mn, kleiner oder gleich 200 000 $g.mol^{-1}$, insbesondere zwischen 5 000 und 100 000 $g.mol^{-1}$ und ganz besonders zwischen 5 000 und 50 000 $g.mol^{-1}$ aufweist; und/oder einen Polydispersitätsindex, gleich dem Verhältnis der gewichtsmittleren Molmasse Mw zur zahlenmittleren Molmasse Mn, kleiner oder gleich 1,5, insbesondere kleiner oder gleich 1,3 und ganz besonders kleiner oder gleich 1,2, wobei die gewichtsmittlere Molmasse durch Größenausschlusschromatographie, gegebenenfalls kombiniert mit der statischen Lichtstreuung, bestimmt wird.

9. Verfahren nach einem der vorhergehenden Ansprüche, wobei das (Co)polymer im Schritt (i) aus dem Polytrimethylencarbonat (PTMC) und den Polytrimethylencarbonat-Poly(ε-caprolacton)-Copolymeren (PTMC-PCL) gewählt ist, wobei es insbesondere ein molares Verhältnis zwischen den vom Trimethylencarbonat abgeleiteten Monomereinheiten und den vom Caprolacton abgeleiteten Monomereinheiten zwischen 90/10 und 10/90, vor allem zwischen 80/20 und 20/80, insbesondere zwischen 70/30 und 30/70 und ganz besonders von etwa 60/40 aufweist.

**10.** Verfahren nach einem der vorhergehenden Ansprüche, wobei der Schritt (ii) durch Reaktion der Hydroxylfunktion oder -funktionen am Kettenende des oder der (Co)polymere mit mindestens einer Verbindung, Schutzmittel genannt, die insbesondere aus den Acylchloriden, zum Beispiel dem Benzoylchlorid, dem Acetylchlorid; den Säureanhydriden, beispielsweise dem Essigsäureanhydrid, und den Isiocyanaten wie dem P-Toluolsulfonylisocyanat, gewählt ist, durchgeführt wird.

**11.** Verfahren nach einem der vorhergehenden Ansprüche, wobei das im Schritt (iv) eingesetzte Ionen leitende Salz ein Lithiumsalz ist, das insbesondere aus Lithiumbis(trifluoromethylsulfonyl)imid (LiTFSI), Lithium-2-trifluormethyl-4,5-dicyanoimidazol (LiTDI) oder Lithiumbis(fluorosulfonyl)imid (LiFSI), bevorzugt LiTFSI oder LiFSI, gewählt ist.

**12.** Verfahren nach einem der vorhergehenden Ansprüche, wobei die Mengen an (Co)polymer(en) und an Lithiumsalz(en) so eingestellt werden, dass das molare Verhältnis zwischen den Carbonylgruppen des (Co)polymers in Bezug auf das Lithium, bezeichnet als [CO]/[$Li^+$], zwischen 0,5 und 30, insbesondere zwischen 5 und 15 und ganz besonders etwa 15 beträgt.

**13.** Verfahren nach einem der vorhergehenden Ansprüche, wobei der Festelektrolyt im Schritt (v) des Verfahrens der Erfindung, insbesondere in Form eines Films, ohne Lösungsmittel ausgehend von dem Gemisch des Schritts (iv) im geschmolzenen Zustand gebildet wird, insbesondere durch Extrusion; oder in Gegenwart eines oder mehrerer Lösungsmittel, durch Aufbringen des Gemisches des Schritts (iv) an der Oberfläche eines Substrats, zum Beispiel durch Bestreichen, gefolgt von dem Verdampfen des oder der Lösungsmittel.

**14.** Verwendung mindestens eines (Co)polymers, das durch ringöffnende (Co)polymerisation (ROP) mindestens eines fünf- bis achtgliedrigen zyklischen Carbonats und gegebenenfalls mindestens eines fünf- bis achtgliedrigen Lactons, die durch Methansulfonsäure katalysiert wird und durch mindestens eine Verbindung mit einer oder mehreren Hydroxylfunktion(e) eingeleitet wird oder nicht, erhalten wird,

Schützen der Hydroxylfunktionen am Kettenende und Reinigen, vor oder nach dem Schützen der Hydroxylfunktionen, insbesondere durch Ausfällen in einem oder mehreren polaren Lösungsmitteln;
um, in Kombination mit mindestens einem Alkali- oder Erdalkalimetallsalz, einen Festelektrolyten, insbesondere vom Typ polymerer Festelektrolyt (SPE) oder hybrider Festelektrolyt (HSE), zu bilden, der für ein elektrochemisches System, insbesondere für eine wiederaufladbare Batterie, insbesondere eine Lithium-Batterie, bestimmt ist.

**15.** Verwendung nach dem vorhergehenden Anspruch, wobei das (Co)polymer unter den in einem der Ansprüche 2 bis 7 beschriebenen Bedingungen erhalten wird.

**16.** Verwendung nach Anspruch 14 oder 15, wobei das (Co)polymer eine durch Gelpermeationschromatographie gemessene zahlenmittlere Molmasse von 5 000 bis 50 000 $g.mol^{-1}$ und insbesondere einen Polydispersitätsindex (PDI) kleiner oder gleich 1,30, insbesondere kleiner oder gleich 1,20, aufweist.

**17.** Festelektrolyt, insbesondere vom Typ polymerer Festelektrolyt (SPE) oder hybrider Festelektrolyt (HSE), umfassend:

- mindestens ein (Co)polymer, das durch ringöffnende (Co)polymerisation (ROP) mindestens eines fünf- bis achtgliedrigen zyklischen Carbonats und gegebenenfalls mindestens eines fünf- bis achtgliedrigen Lactons, die durch Methansulfonsäure katalysiert wird und durch mindestens eine Verbindung mit einer oder mehreren Hydroxylfunktion(e) eingeleitet wird oder nicht, erhalten wird; Schützen der Hydroxylfunktionen am Kettenende; und Reinigen, vor oder nach dem Schützen der Hydroxylfunktionen, insbesondere durch Ausfällen in einem oder mehreren polaren Lösungsmitteln;
- mindestens ein Alkali- oder Erdalkalimetallsalz, insbesondere ein Lithiumsalz; und
- gegebenenfalls mindestens ein das oder die Alkali- oder Erdalkali-Ionen leitendes anorganisches Einsatzmaterial, insbesondere ein Lithium-Ionen leitendes anorganisches Einsatzmaterial.

**18.** Festelektrolyt nach dem vorhergehenden Anspruch, wobei der Festelektrolyt durch das Verfahren nach einem der

Ansprüche 1 bis 13 erhalten wird.

**19.** Elektrochemisches System, umfassend einen Festelektrolyten nach Anspruch 17 oder 18, wobei das elektrochemische System ganz besonders eine wiederaufladbare Batterie, insbesondere eine Lithium-Batterie, vor allem eine Lithium-Metall- oder Lithium-Ionen-Batterie ist.

## Claims

**1.** Process for the preparation of a solid electrolyte, in particular of solid polymer electrolyte (SPE) or hybrid solid electrolyte (HSE) type, intended for an electrochemical system, especially for a rechargeable battery, comprising at least the following stages:

(i) synthesis of at least one (co)polymer by ring opening (co)polymerization (ROP) of at least one 5- to 8-membered cyclic carbonate and, optionally, of at least one 5- to 8-membered lactone, said (co)polymerization reaction being catalysed by methanesulfonic acid (MSA) and initiated, or not, by at least one compound comprising one or more hydroxyl function(s);
(ii) protection of the hydroxyl functions at the chain end of said (co)polymer(s);
(iii) purification, prior or subsequent to stage (ii) of protection of the hydroxyl functions, of said (co)polymer(s), in particular by precipitation from one or more polar solvents;
(iv) mixing, in the presence or not of a solvent medium, of said purified (co)polymer(s), obtained on conclusion of stage (ii) or (iii), with at least one alkali metal or alkaline earth metal salt, in particular a lithium salt, and, optionally, at least one inorganic filler which conducts the alkali metal or alkaline earth metal cation(s), in particular an inorganic filler which conducts lithium ions; and
(v) formation, in particular at the surface of a substrate, of a solid electrolyte from said mixture.

**2.** Process according to the preceding claim, in which the ROP reaction is carried out at a temperature of less than or equal to 40°C, in particular of between 20°C and 40°C and more particularly at ambient temperature; and/or the duration of the ROP reaction is less than or equal to 72 hours, in particular less than or equal to 48 hours and more particularly between 24 and 48 hours.

**3.** Process according to either one of the preceding claims, in which the ROP reaction is carried out in a solvent medium, in particular in one or more non-polar aprotic solvent(s), in particular chosen from toluene, dichloromethane, tetrahydrofuran and their mixtures, and more particularly in dichloromethane; or carried out in the absence of solvent.

**4.** Process according to any one of the preceding claims, in which said monomer(s) and said catalyst MSA are employed in a monomer(s)/MSA molar ratio of between 40/1 and 1000/1, in particular of between 50/1 and 500/1.

**5.** Process according to any one of the preceding claims, in which the (co)polymerization in stage (i) is initiated by at least one compound, referred to as initiator, comprising one or more hydroxyl function(s), said initiator being more particularly chosen from water and/or alcohols, in particular alcohols exhibiting from one to four hydroxyl function(s) and more particularly one or two hydroxyl function(s), for example 3-phenyl-1-propanol or ethylene glycol.

**6.** Process according to the preceding claim, in which said initiator(s) are employed in a predetermined amount, in particular such that the monomer(s)/initiator(s) molar ratio is of between 40/1 and 1000/1, in particular of between 50/1 and 500/1; and/or the initiator(s)/catalyst MSA molar ratio is of between 1/1 and 10/1, in particular is approximately 1/1.

**7.** Process according to any one of Claims 1 to 4, in which the (co)polymerization in stage (i) is carried out in the absence of initiator compound for the ROP, in particular in the absence of water and of alcohol compound.

**8.** Process according to any one of the preceding claims, in which said (co)polymer synthesized in stage (i) exhibits a number-average molar mass, Mn, measured by gel permeation chromatography, of less than or equal to 200 000 $g.mol^{-1}$, in particular of between 5000 and 100 000 $g.mol^{-1}$ and more particularly of between 5000 and 50 000 $g.mol^{-1}$; and/or a polydispersity index, equal to the ratio of the weight-average molar mass, Mw, to the number-average molar mass, Mn, of less than or equal to 1.5, in particular of less than or equal to 1.3 and more particularly of less than or equal to 1.2, the weight-average molar mass being determined by size exclusion chromatography optionally coupled with static light scattering.

**9.** Process according to any one of the preceding claims, in which said (co)polymer in stage (i) is chosen from polytrimethylene carbonates (PTMCs) and polytrimethylene carbonate-poly(e-caprolactone) (PTMC-PCL) copolymers, in particular exhibiting a molar ratio of the monomer units derived from trimethylene carbonate to the monomer units derived from caprolactone of between 90/10 and 10/90, in particular of between 80/20 and 20/80, especially of between 70/30 and 30/70 and more particularly of approximately 60/40.

**10.** Process according to any one of the preceding claims, in which stage (ii) is carried out by reaction of said hydroxyl function(s) at the chain end of said (co)polymer(s) with at least one compound, referred to as protecting agent, in particular chosen from acyl chlorides, for example benzoyl chloride or acetyl chloride; acid anhydrides, for example acetic anhydride; and isocyanates, such as p-toluenesulfonyl isocyanate.

**11.** Process according to any one of the preceding claims, in which said ion conductive salt employed in stage (iv) is a lithium salt, in particular chosen from lithium bis(trifluoromethylsulfonyl)imide (LiTFSI), lithium 4,5-dicyano-2- (trifluoromethyl)imidazole (LiTDI) or lithium bis(fluorosulfonyl)imide (LiFSI), preferably LiTFSI or LiFSI.

**12.** Process according to any one of the preceding claims, in which the amounts of (co)polymer(s) and of lithium salt(s) are adjusted so that the molar ratio of the carbonyl groups of the (co)polymer with respect to the lithium, denoted [CO]/[$Li^+$], is of between 0.5 and 30, in particular of between 5 and 15 and more particularly of approximately 15.

**13.** Process according to any one of the preceding claims, in which the solid electrolyte in stage (v) of the process of the invention, in particular in the form of a film, is formed, in the absence of solvent, from said mixture of stage (iv) in the molten state, in particular by extrusion; or, in the presence of one or more solvent(s), by deposition of said mixture of stage (iv) at the surface of a substrate, for example by coating, followed by the evaporation of said solvent(s).

**14.** Use of at least one (co)polymer, obtained by ring opening (co)polymerization (ROP) of at least one 5- to 8-membered cyclic carbonate and, optionally, of at least one 5- to 8-membered lactone, catalysed by methanesulfonic acid and initiated, or not, by at least one compound comprising one or more hydroxyl function(s), protection of the hydroxyl functions at the chain end and purification, prior or subsequent to the protection of the hydroxyl functions, in particular by precipitation from one or more polar solvents,
in order to form, in combination with at least one alkali metal or alkaline earth metal salt, a solid electrolyte, in particular of solid polymer electrolyte (SPE) or hybrid solid electrolyte (HSE) type, intended for an electrochemical system, especially for a rechargeable battery, in particular a lithium battery.

**15.** Use according to the preceding claim, said (co)polymer being obtained under the conditions described in any one of Claims 2 to 7.

**16.** Use according to Claim 14 or 15, said (co)polymer exhibiting a number-average molecular weight, measured by gel permeation chromatography, ranging from 5000 to 50 000 $g.mol^{-1}$ and, in particular, a polydispersity index (PDI) of less than or equal to 1.30, in particular of less than or equal to 1.20.

**17.** Solid electrolyte, in particular of solid polymer electrolyte (SPE) or hybrid solid electrolyte (HSE) type, comprising:

- at least one (co)polymer, obtained by ring opening (co)polymerization (ROP) of at least one 5- to 8-membered cyclic carbonate and, optionally, of at least one 5- to 8-membered lactone, catalysed by methanesulfonic acid and initiated, or not, by at least one compound comprising one or more hydroxyl function(s); protection of the hydroxyl functions at the chain end; and purification, prior or subsequent to the protection of the hydroxyl functions, in particular by precipitation from one or more polar solvents;
- at least one alkali metal or alkaline earth metal salt, in particular a lithium salt; and
- optionally, at least one inorganic filler which conducts the alkali metal or alkaline earth metal cation(s), in particular an inorganic filler which conducts lithium ions.

**18.** Solid electrolyte according to the preceding claim, said solid electrolyte being obtained by the process as defined according to any one of Claims 1 to 13.

**19.** Electrochemical system comprising a solid electrolyte as defined according to Claim 17 or 18, said electrochemical system being more particularly a rechargeable battery, especially a lithium battery, in particular a lithium-metal or lithium-ion battery.

[Fig 1]

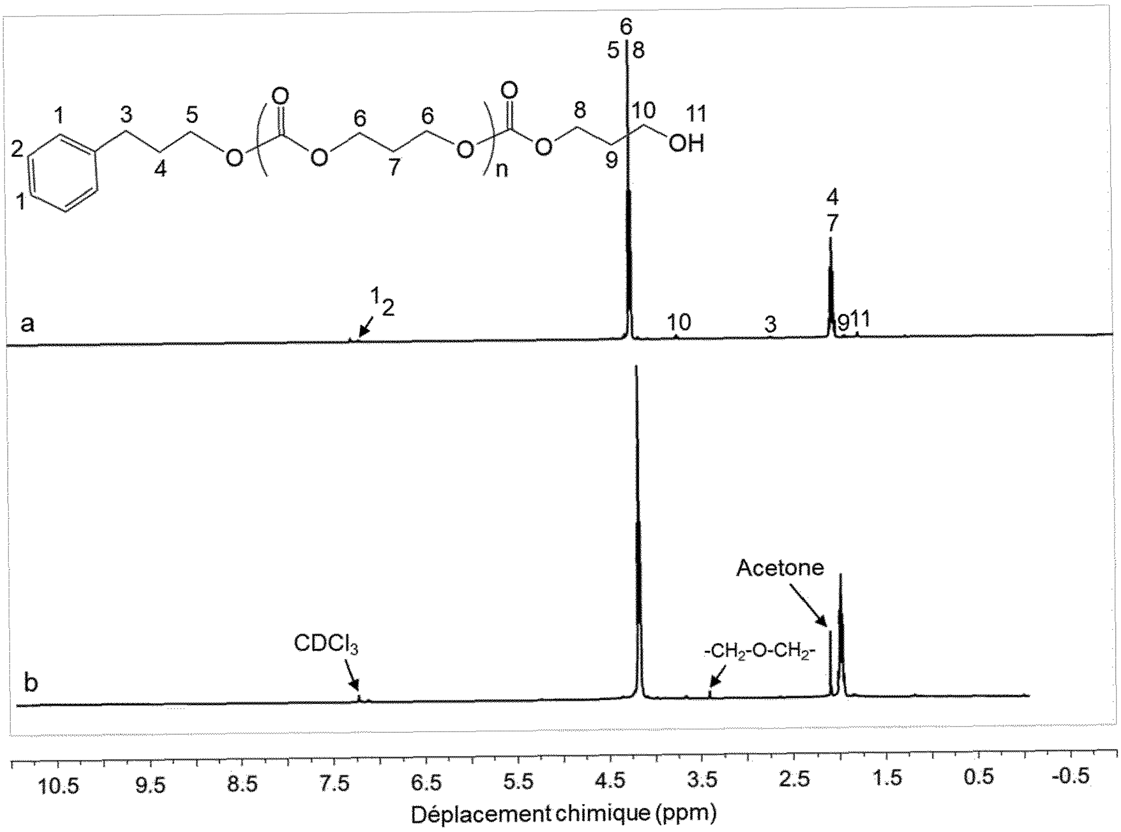
a
b
CDCl3
-CH2-O-CH2-
Acetone
10.5 9.5 8.5 7.5 6.5 5.5 4.5 3.5 2.5 1.5 0.5 -0.5
Déplacement chimique (ppm)

[Fig 2]

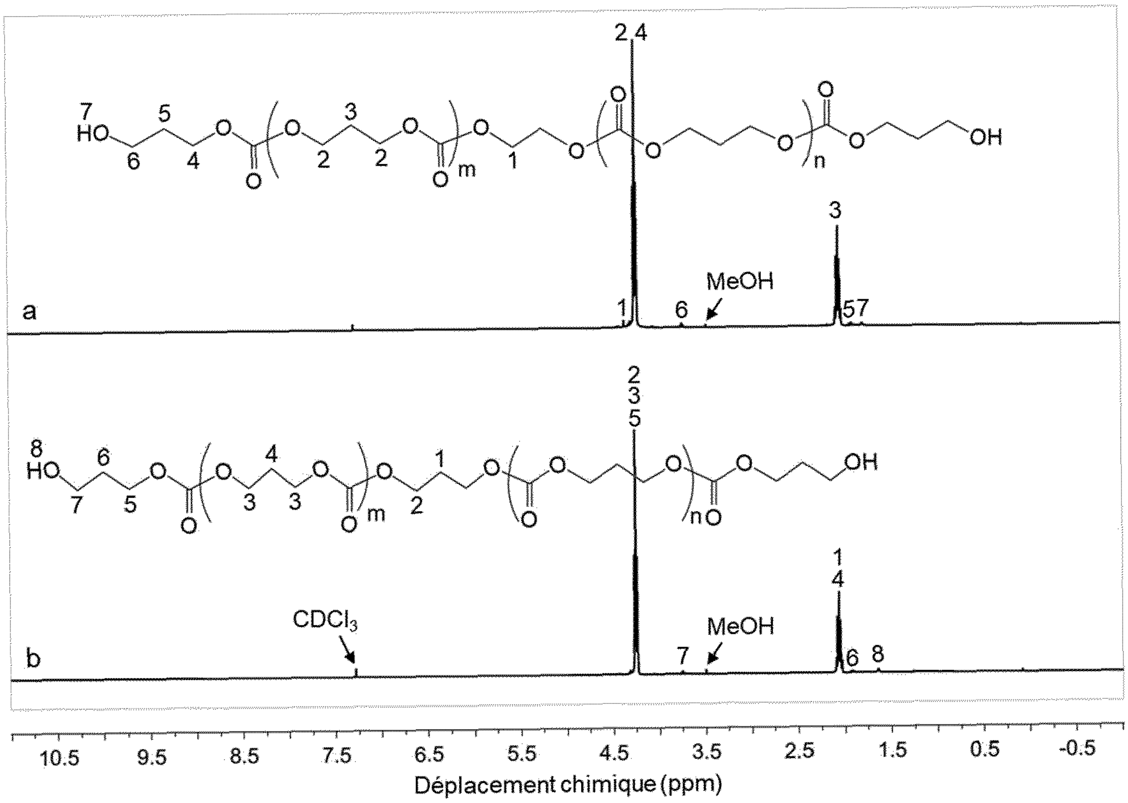
a
MeOH
b
CDCl3
MeOH
10.5 9.5 8.5 7.5 6.5 5.5 4.5 3.5 2.5 1.5 0.5 -0.5
Déplacement chimique (ppm)

[Fig 3]

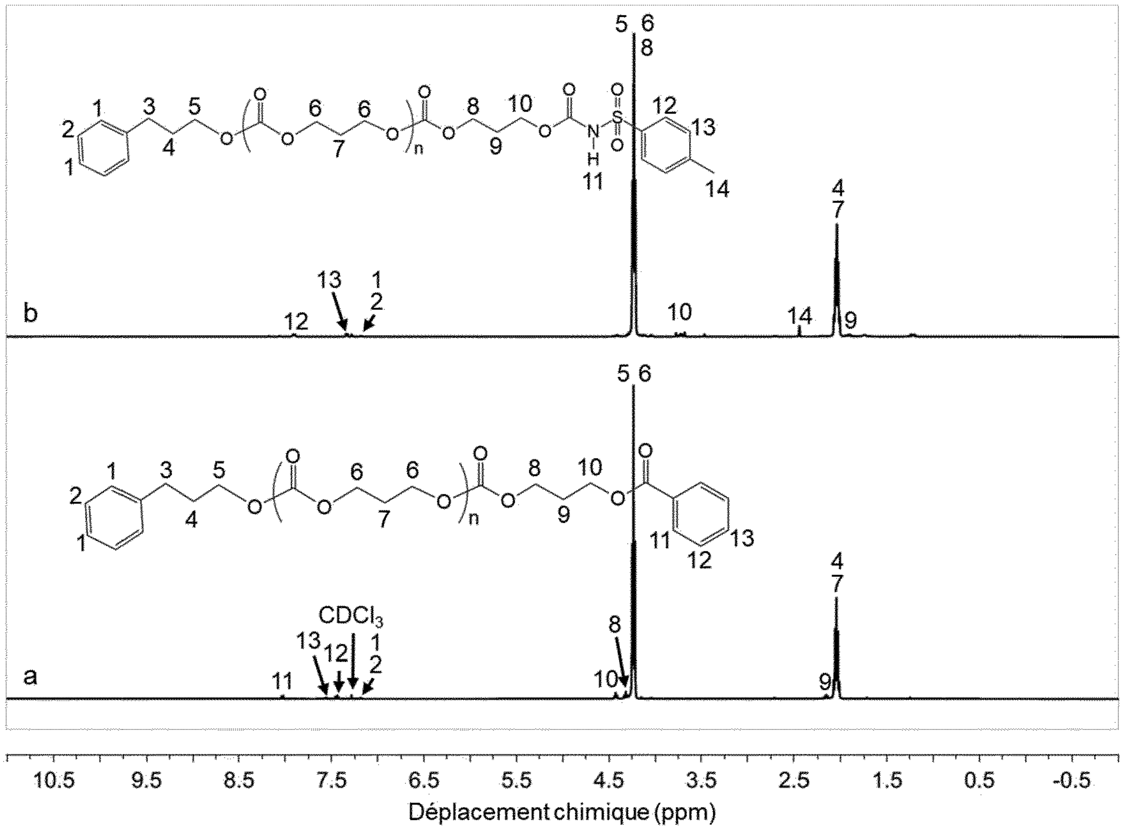
b
a
$CDCl_3$
10.5 9.5 8.5 7.5 6.5 5.5 4.5 3.5 2.5 1.5 0.5 -0.5
Déplacement chimique (ppm)

[Fig 4]

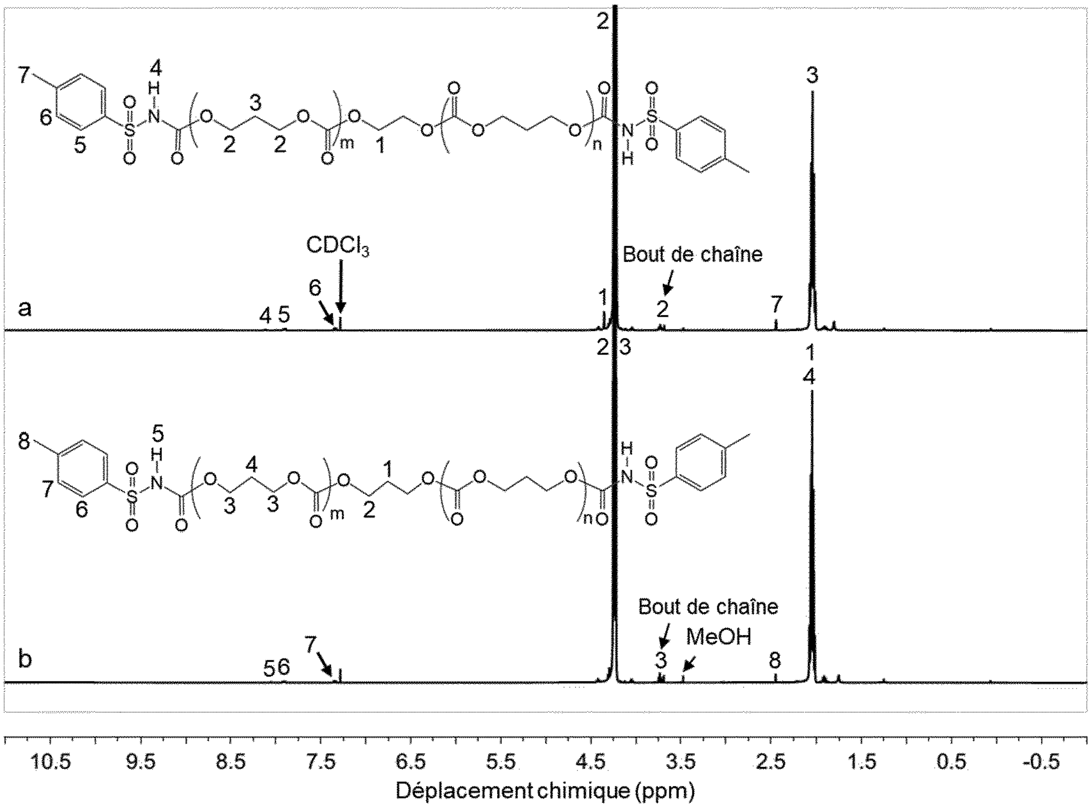
a
b
$CDCl_3$
Bout de chaîne
Bout de chaîne
MeOH
10.5 9.5 8.5 7.5 6.5 5.5 4.5 3.5 2.5 1.5 0.5 -0.5
Déplacement chimique (ppm)

[Fig 5]

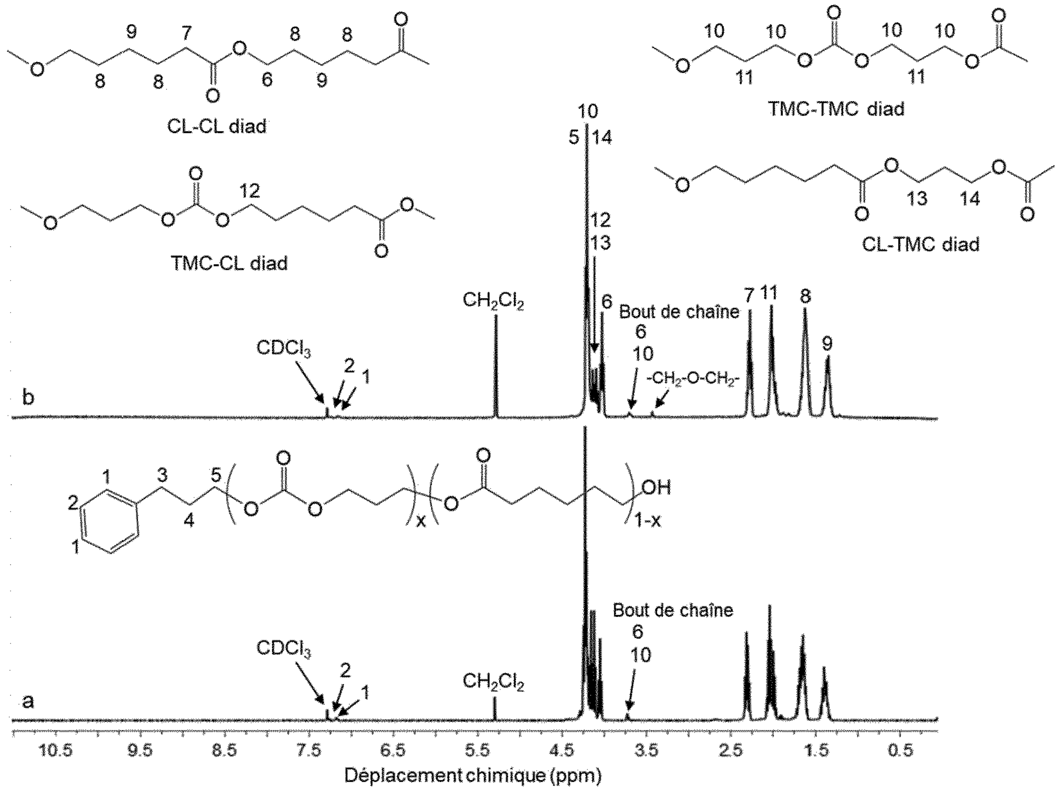
CL-CL diad
TMC-TMC diad
TMC-CL diad
CL-TMC diad
$CH_2Cl_2$
$CDCl_3$
Bout de chaîne
$-CH_2-O-CH_2-$
b
a
10.5 9.5 8.5 7.5 6.5 5.5 4.5 3.5 2.5 1.5 0.5
Déplacement chimique (ppm)

[Fig 6]

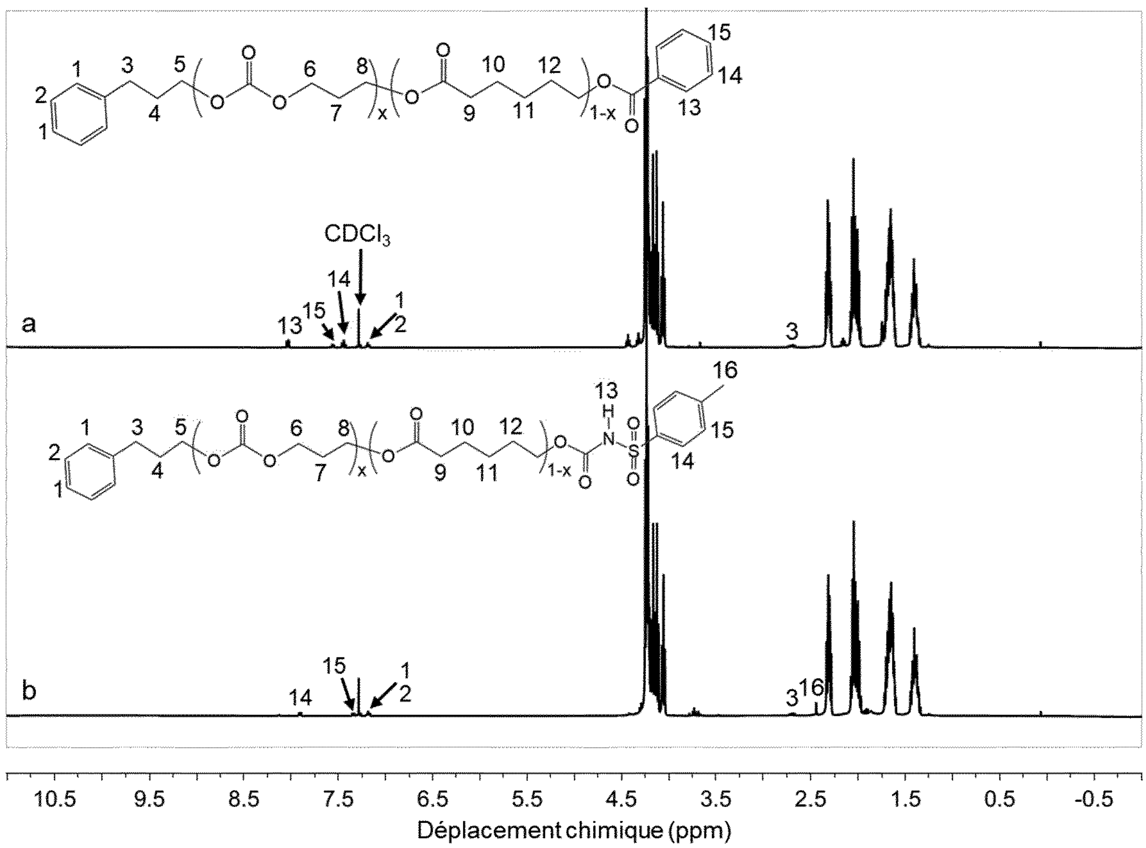
$CDCl_3$
a
b
10.5 9.5 8.5 7.5 6.5 5.5 4.5 3.5 2.5 1.5 0.5 -0.5
Déplacement chimique (ppm)

[Fig 7]

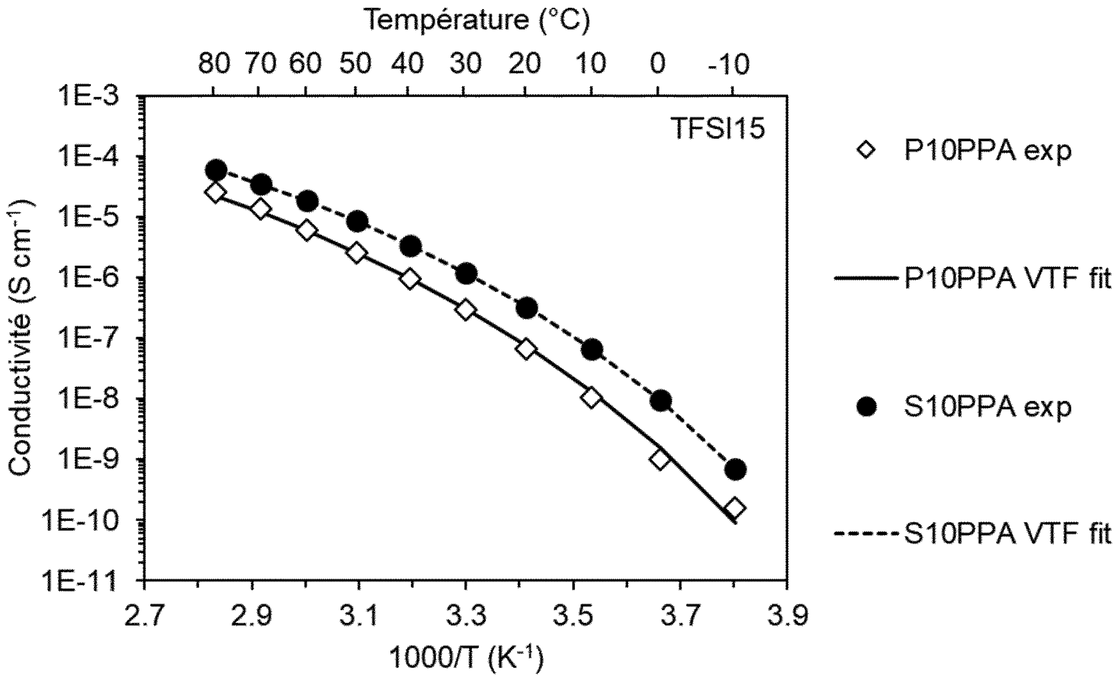
Température (°C)
80 70 60 50 40 30 20 10 0 -10
1E-3
1E-4
1E-5
1E-6
1E-7
1E-8
1E-9
1E-10
1E-11
Conductivité (S cm-1)
TFSI15
2.7 2.9 3.1 3.3 3.5 3.7 3.9
1000/T (K-1)
P10PPA exp
P10PPA VTF fit
S10PPA exp
S10PPA VTF fit

[Fig 8]

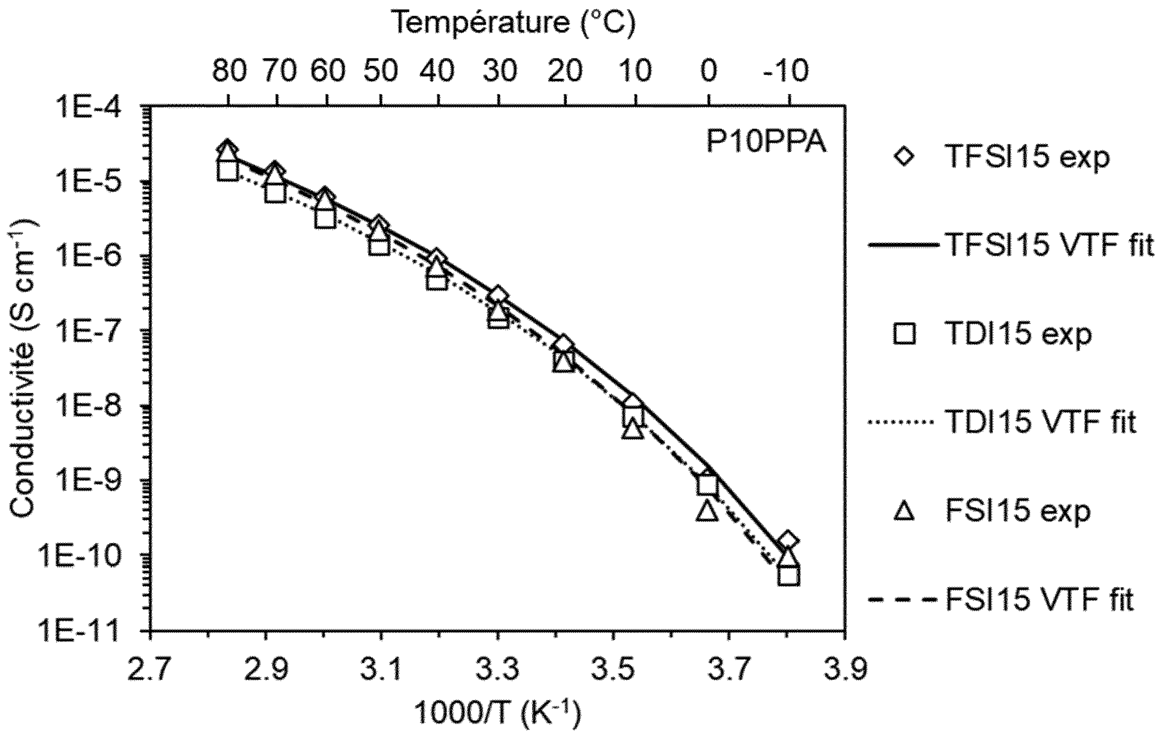
Température (°C)
80 70 60 50 40 30 20 10 0 -10
1E-4
1E-5
1E-6
1E-7
1E-8
1E-9
1E-10
1E-11
Conductivité (S cm-1)
P10PPA
2.7 2.9 3.1 3.3 3.5 3.7 3.9
1000/T (K-1)
TFSI15 exp
TFSI15 VTF fit
TDI15 exp
TDI15 VTF fit
FSI15 exp
FSI15 VTF fit

[Fig 9]

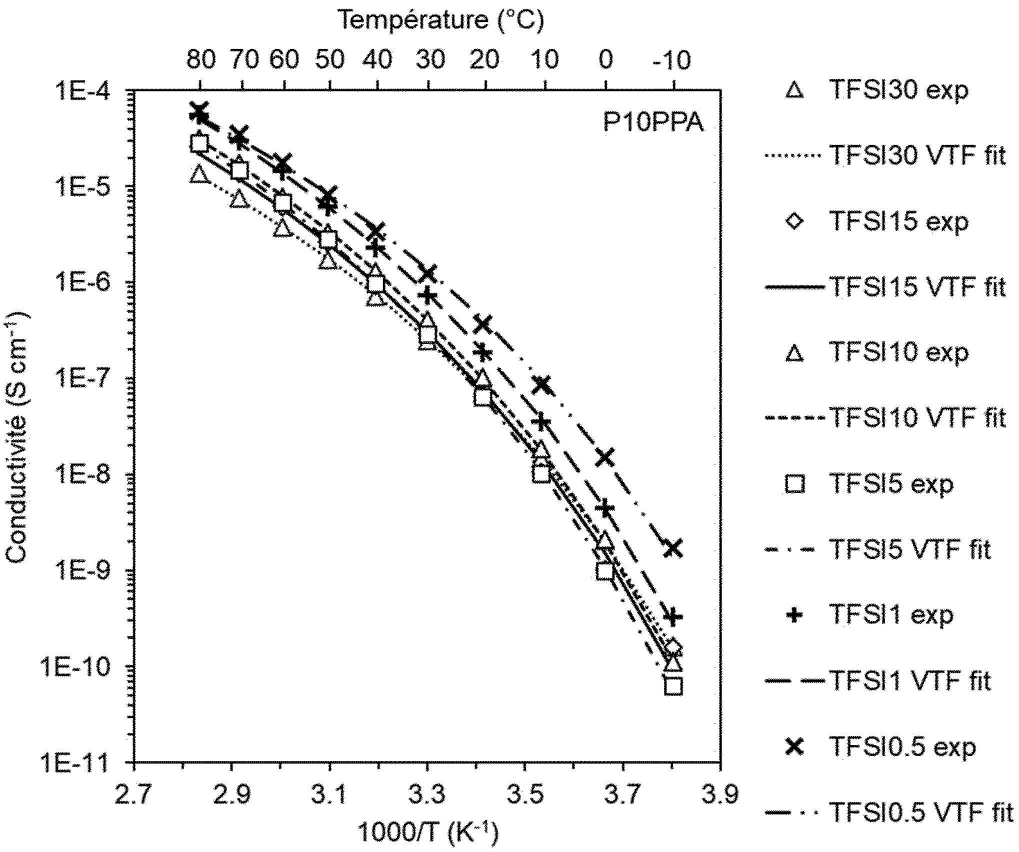
Température (°C)
80 70 60 50 40 30 20 10 0 -10
P10PPA
Conductivité (S cm-1)
1E-4
1E-5
1E-6
1E-7
1E-8
1E-9
1E-10
1E-11
2.7 2.9 3.1 3.3 3.5 3.7 3.9
1000/T (K-1)
TFSI30 exp
TFSI30 VTF fit
TFSI15 exp
TFSI15 VTF fit
TFSI10 exp
TFSI10 VTF fit
TFSI5 exp
TFSI5 VTF fit
TFSI1 exp
TFSI1 VTF fit
TFSI0.5 exp
TFSI0.5 VTF fit

[Fig 10]

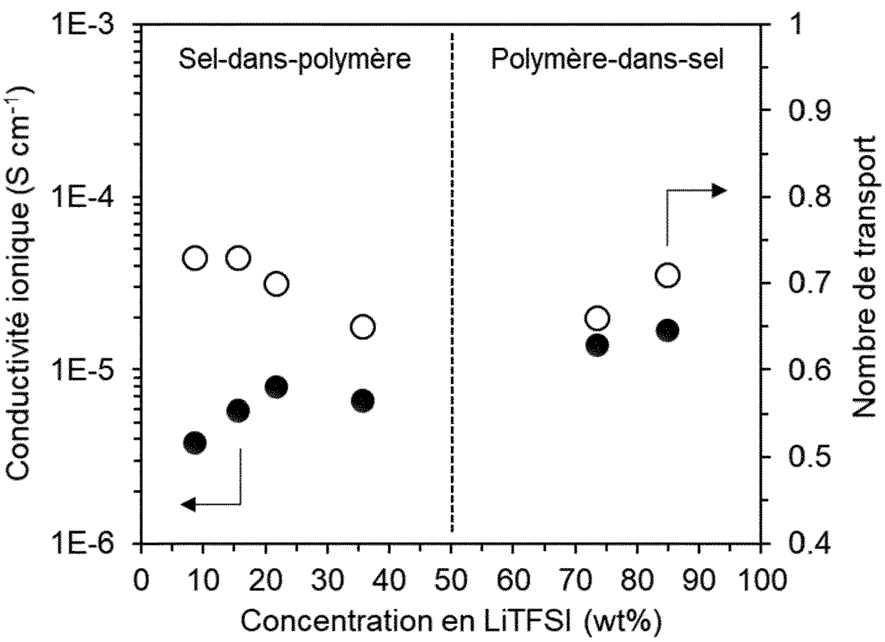
Sel-dans-polymère
Polymère-dans-sel
Conductivité ionique (S cm-1)
1E-3
1E-4
1E-5
1E-6
Nombre de transport
1
0.9
0.8
0.7
0.6
0.5
0.4
0 10 20 30 40 50 60 70 80 90 100
Concentration en LiTFSI (wt%)

[Fig 11]

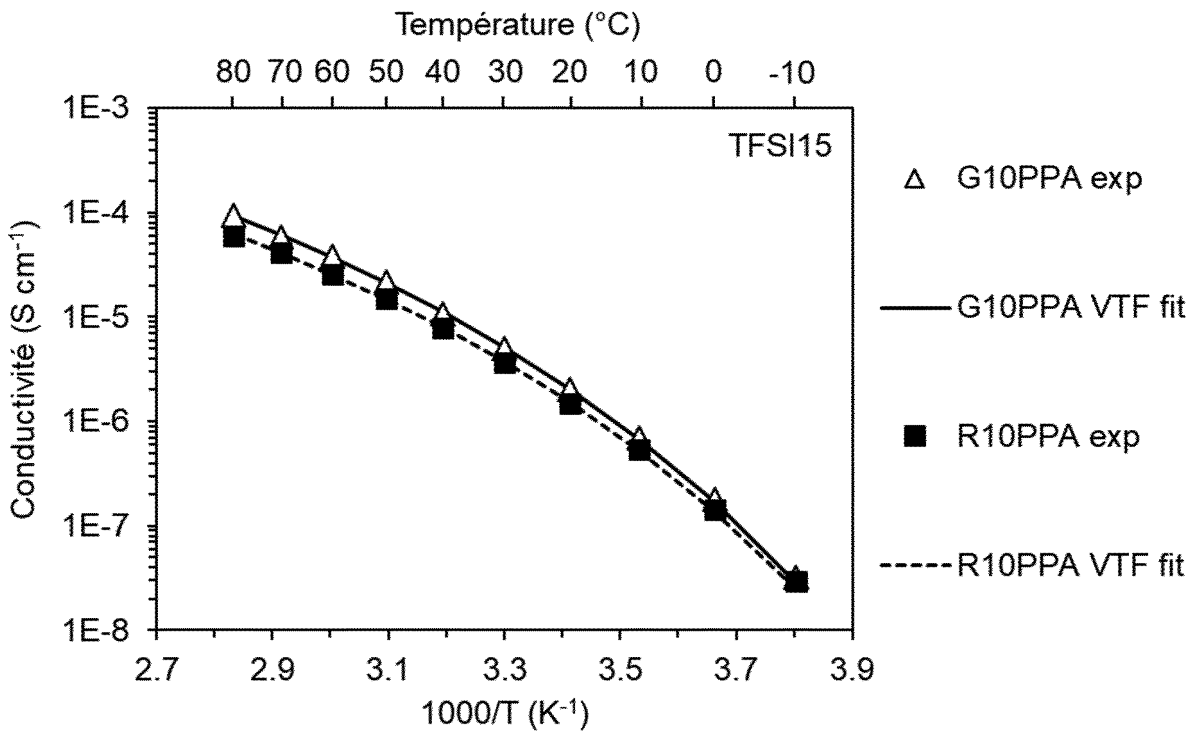
Température (°C)
80 70 60 50 40 30 20 10 0 -10
1E-3
1E-4
1E-5
1E-6
1E-7
1E-8
Conductivité (S cm-1)
TFSI15
G10PPA exp
G10PPA VTF fit
R10PPA exp
R10PPA VTF fit
2.7 2.9 3.1 3.3 3.5 3.7 3.9
1000/T (K-1)

[Fig 12]

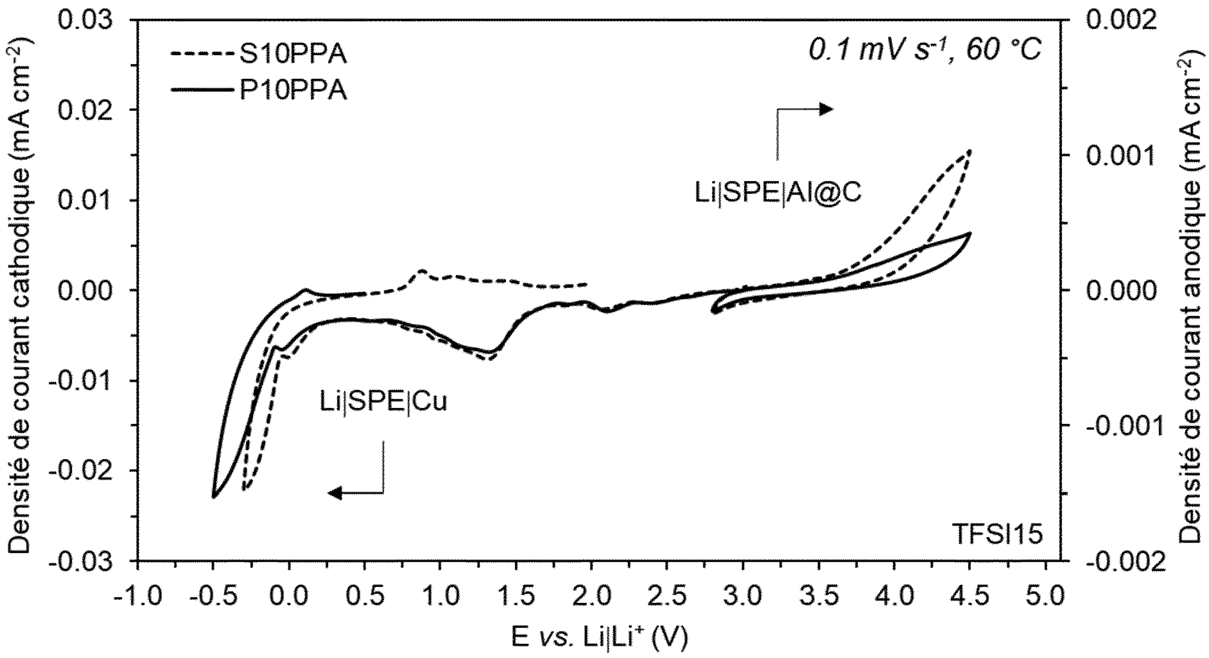
S10PPA
P10PPA
0.1 mV s-1, 60 °C
Li|SPE|Al@C
Li|SPE|Cu
TFSI15
0.03
0.02
0.01
0.00
-0.01
-0.02
-0.03
Densité de courant cathodique (mA cm-2)
0.002
0.001
0.000
-0.001
-0.002
Densité de courant anodique (mA cm-2)
-1.0 -0.5 0.0 0.5 1.0 1.5 2.0 2.5 3.0 3.5 4.0 4.5 5.0
E vs. Li|Li+ (V)

[Fig 13]

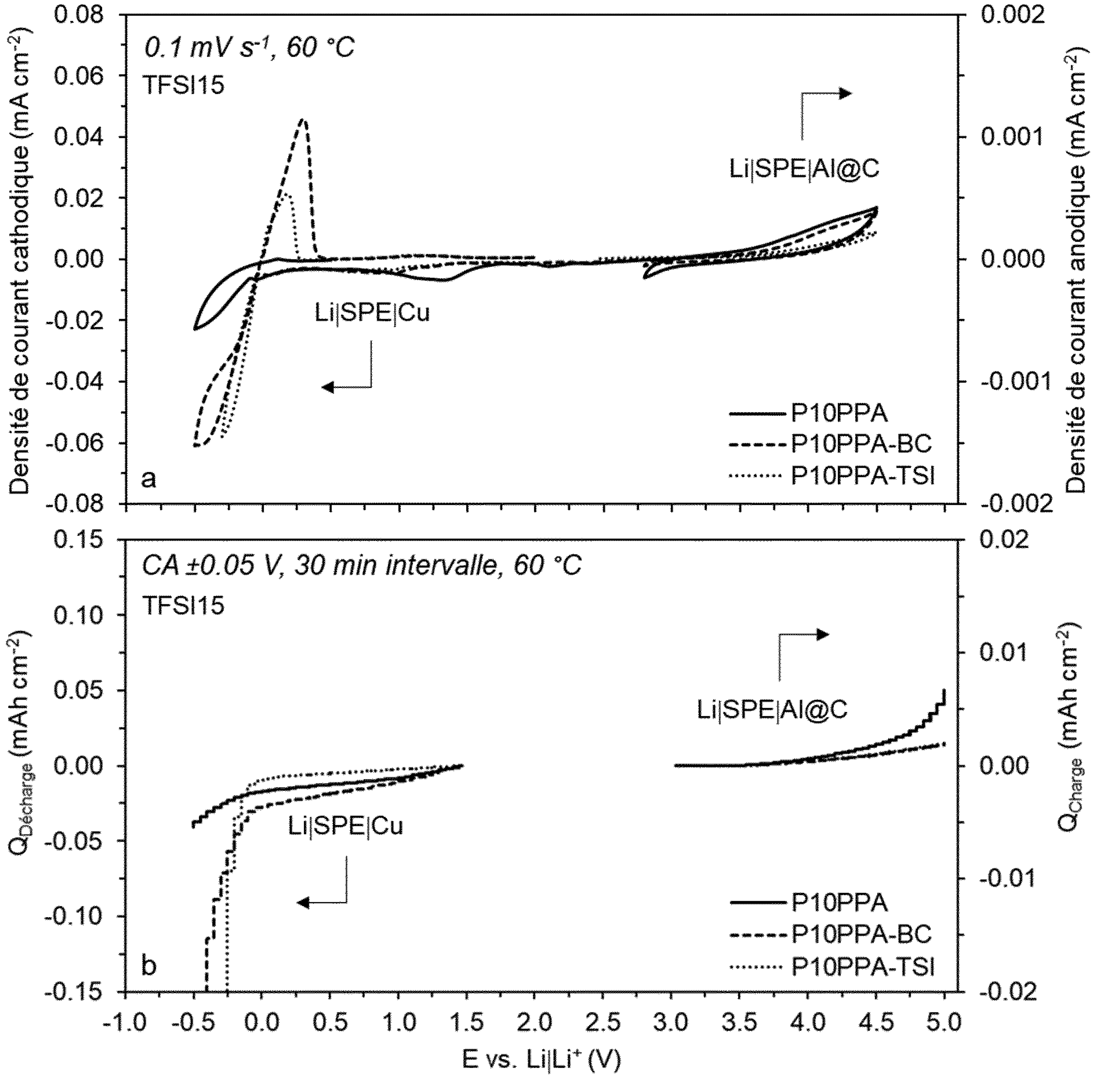
0.1 mV s-1, 60 °C
TFSI15
Li|SPE|Al@C
Li|SPE|Cu
P10PPA
P10PPA-BC
P10PPA-TSI
a
Densité de courant cathodique (mA cm-2)
Densité de courant anodique (mA cm-2)
CA ±0.05 V, 30 min intervalle, 60 °C
TFSI15
Li|SPE|Al@C
Li|SPE|Cu
P10PPA
P10PPA-BC
P10PPA-TSI
b
QDécharge (mAh cm-2)
QCharge (mAh cm-2)
E vs. Li|Li+ (V)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2018158545 A1

### Littérature non-brevet citée dans la description


- **BING SUN et al.** Polycarbonate-based solid polymer electrolytes for Li-ion batteries. *Solid State Ionics*, 01 September 2014, vol. 262, 738-742
- **TOMINAGA et al.** *Polymer*, 2010, vol. 51 (19), 4295-4298
- **WANG et al.** *Coor. Chem. Rev.*, 2018, vol. 372, 85-100
- **KIMURA et al.** *Ionics*, 2015, vol. 21 (3), 895-900
- **BRANDELL et al.** *Solid State Ionics*, 2014, vol. 262, 738-742
- **MINDERMARK et al.** *Polymer*, 2015, vol. 63, 91-98
- **MECERREYES et al.** *Electrochimica Acta*, 2017, vol. 237, 259-266
- **DELCROIX et al.** *Macromolecules*, 2010, vol. 43 (21), 8828-8835
- **GAZEAU-BUREAU et al.** *Macromolecules*, 2008, vol. 41 (11), 3782-3784
- **EVANS**. *Polymer*, 1987, vol. 28 (13), 2324-2328
- **LING et al.** *Macromolecules*, 2004, vol. 37 (3), 758-763
- **ZHU et al.** *Polym. Degrad. Stabl.*, 2012, vol. 97 (9), 1589-1595
- **BERHAUT et al.** *RSC Adv.*, 2019, vol. 9 (8), 4589-4608
- **BERHAUT et al.** *Electrochim. Acta*, 2019, vol. 305, 534-546
- **HALLINAN et al.** *Annu. Rev. Mater. Res.*, 2013, vol. 43 (1), 503-525
- **SUN et al.** *Macromolecules*, 2006, vol. 39 (1), 362-372
- **BORODIN et al.** *J. Phys. Chem. B*, 2006, vol. 110, 4971-4977
- **GORECKI et al.** *J. Phys. Condens. Matter*, 1995, vol. 7 (34), 6823-6832
- **XU et al.** *Solid Polymer Electrolytes, MRS Energy Sustain*, 2020, vol. 7, E2
- **MINDEMARK et al.** *Prog. Polym. Sci.*, 2018, vol. 81, 114-143
- **ARMAND et al.** *Solid State Ionics*, 1994, vol. 69 (3-4), 309-319
- **DIEDERICHSEN et al.** *Macromolecules*, 2017, vol. 50 (10), 3831-3840
- **LIAO et al.** *Eur. Polym. J.*, 2007, vol. 43 (10), 4289-4296
- **SCHÜLLER-RAVOO et al.** *Acta. Biomater.*, 2012, vol. 8 (10), 3576-3585
- **LIN et al.** *Polymer*, 2011, vol. 52 (18), 4106-4113
- **ZHANG et al.** *J. Electrochem. Soc.*, 2001, vol. 148 (12), A1341-A1345
- **SUN et al.** *J. Mater. Chem. A*, 2015, vol. 3 (26), 13994-14000
- **WANG et al.** *J. Power Sources*, 2018, vol. 397 (189), 157-161
- **COMMARIEU et al.** *J. Power Sources*, 2019, vol. 436, 226852
- **TOMINAGA et al.** *Electrochim. Acta*, 2019, vol. 302, 286-290